(19) Europäisches Patentamt
European Patent Office
Office européen des brevets

(11) EP 3 092 900 B1

(12) # EUROPÄISCHE PATENTSCHRIFT

(45) Veröffentlichungstag und Bekanntmachung des Hinweises auf die Patenterteilung:
**07.02.2018 Patentblatt 2018/06**

(51) Int Cl.:
***A01N 43/40*** *(2006.01)* ***A01N 63/00*** *(2006.01)*
***A01P 5/00*** *(2006.01)* ***A01P 7/00*** *(2006.01)*

(21) Anmeldenummer: **16173012.2**

(22) Anmeldetag: **30.11.2011**

(54) **WIRKSTOFFKOMBINATIONEN UMFASSEND FLUOPYRAM UND BACILLUS THURINGIENSIS SUBSP. TENEBRIONIS**

ACTIVE INGREDIENT COMBINATIONS COMPRISING FLUOPYRAM AND BACILLUS THURINGIENSIS SUBSP. TENEBRIONIS

COMBINAISONS DE SUBSTANCE ACTIVES COMPRENANT LE FLUOPYRAM ET LE BACILLUS THURINGIENSIS SUBSP. TENEBRIONIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2010 EP 10193335**
**03.12.2010 US 419438 P**

(43) Veröffentlichungstag der Anmeldung:
**16.11.2016 Patentblatt 2016/46**

(62) Dokumentnummer(n) der früheren Anmeldung(en) nach Art. 76 EPÜ:
**11788536.8 / 2 645 857**

(73) Patentinhaber: **Bayer Intellectual Property GmbH**
**40789 Monheim am Rhein (DE)**

(72) Erfinder:
- **HUNGENBERG, Heike**
  **40764 Langenfeld (DE)**
- **RIECK, Heiko**
  **51399 Burscheid (DE)**
- **MASTERS, Robert**
  **52391 Vettweiss-Sievernich (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**EP-A1- 2 132 987**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft neue Wirkstoffkombinationen, die aus Fluopyram und weiteren bekannten Wirkstoffen bestehen und sehr gut zur Bekämpfung von tierischen Schädlingen, wie Insekten und/oder unerwünschten Akariden und/oder Nematoden, in der Blatt- und Bodenanwendung und/oder in der Saatgutbehandlung sowie zur Ertragssteigerung geeignet sind.

Es ist bereits bekannt, dass bestimmte Pyridylethylbenzamide fungizide, insektizide und akarizide und nematizide Eigenschaften besitzen.

WO 2004/016088 beschreibt Pyridylethylbenzamide und deren Verwendung als Fungizide. Die Möglichkeit einer Kombination eines oder mehrerer der offenbarten Pyridylethylbenzamid Derivate mit weiteren bekannten Fungiziden, Insektiziden, Nematiziden oder Akariziden zur Verbreiterung des Aktivitätsspektrums wird ebenfalls beschrieben. Die Anmeldung lehrt jedoch weder welche insektiziden Mischungspartner geeignet sind, noch das Mischungsverhältnis, in welchem Insektizide und Pyridylethylbenzamid Derivate miteinander kombiniert werden. WO 2005/077901 lehrt fungizide Zusammensetzungen umfassend wenigstens ein Pyridylethylbenzamid, ein Fungizid und einen Inhibitor des Elektronentransports in der Atmungskette von Pilzen. Die Patentanmeldung erwähnt jedoch keine Mischungen von Pyridylethylbenzamiden mit Insektiziden.WO 2008/003738 lehrt fungizide Zusammensetzungen umfassend wenigstens ein Pyridylethylbenzamid und ein Insektizid. Eine mögliche nematizide Wirkung der Zusammensetzungen wird in der Anmeldung beschrieben, jedoch nicht explizit für Mischungen umfassend N-{2-[3-Chlor-5-(trifluormethyl)-2-pyridinyl]ethyl}-2-trifluormethyl-benzamid. EP 2 132 987 beschreibt die Verwendung einer Zusammensetzung, die ein Pyridylethylbenzamide umfasst, als Nematozid. Diese Zusammensetzung kann auch Bacillus thuringiensis enthalten. Die Wirksamkeit der im Stand der Technik beschriebenen Wirkstoffe und Wirkstoffzusammensetzungen ist gut, lässt aber bei niedrigen Aufwandmengen in manchen Fällen, insbesondere bei der Bekämpfung von Nematoden, zu wünschen übrig.

Die der vorliegenden Erfindung zugrundeliegende Aufgabe ist daher, die Bereitstellung von nematiziden, insektiziden und akariziden Wirkstoffkombinationen mit verbesserter Wirksamkeit, insbesondere gegenüber Nematoden.

Es wurde nun gefunden, dass sich Wirkstoffkombinationen umfassend

(I-1) N-{2-[3-Chlor-5-(trifluormethyl)-2-pyridinyl]ethyl}-2-trifluormethylbenzamid gemäß Formel (I)

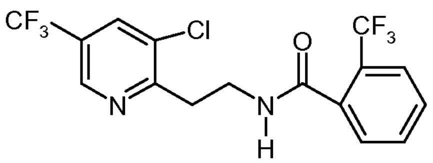

(I)

(Fluopyram)
sowie dessen N-Oxide;
und

(II) wenigstens einen weiteren Wirkstoff, ausgewählt aus der Gruppe bestehend aus Fluensulfone (II-1), Imicyafos (II-2),, Bacillus subtilis (II-3), Bacillus subtilis Stamm QST 713 (Serenade™) (II-4), Paecilomyces lilacinus (II-5), Paecilomyces lilacinus Strain 251 (Bioact™) (II-6), Azadirachtin (II-7), Thymol (II-8), Metarhizium anisopliae (II-9), Rhizobium spp. (II-10), Beauveria spp. (II-11), Verticillium spp. (II-12), Metschnikowia fructicola (II-13), Metschnikowia fructicola Stamm NRRL Y-30752. (II-14), Bacillus subtilis Stamm GB03 (II-15), Bacillus pumilus Stamm GB34 (II-16), Bacillus pumilus Stamm QST2808 (II-17), Bacillus amyloliquefaciens Stamm IN937a (II-18), Bacillus amyloliquefaciens Stamm FZB 42 (II-19), Myrothecium verrucaria Stamm AARC -0255 (II-20), Pyrethrum (II-21), Cydia pomonella granulosis virus (CpGV) (II-22), Metarhizium anisopliae Stamm F52 (II-23), Arbuskulärer Mycorrhizapilz (II-24), Beauveria bassiana Stamm ATCC 74040 (II-25), Beauveria brongniartii (II-26), Lecanicillium lecanii (auch bekannt als Verticillium lecanii) (II-27), Bacillus thuringiensis subsp. tenebrionis (II-28)

sich sehr gut zur Bekämpfung von phytopathogenen Pilzen und tierischen Schädlingen, insbesondere von Nematoden, in der Blatt- und Bodenanwendung, insbesondere bei der Saatgutbehandlung sowie zur Ertragssteigerung eignen.

Die Insektiziden oder nematiziden Wirkstoffe der Gruppe (II) sind ausgewählt aus der Gruppe bestehend aus:

Fluensulfone (II-1) bekannt aus WO-A 2001/002378
und/oder
Imicyafos (II-2) bekannt aus EP-A 0464830
und/oder

Bacillus subtilis (II-3)
und/oder
Bacillus subtilis Stamm QST 713 (II-4)
und/oder
Paecilomyces lilacinus (II-5)
und/oder
Paecilomyces lilacinus Strain 251 (II-6)
und/oder
Azadirachtin (Cas-No 11141-17-6) (II-7)
und/oder
Thymol (II-8)
und/oder
Metarhizium anisopliae (II-9),
und/oder
Rhizobium spp. (II-10),
und/oder
Beauveria spp. (II-11),
und/oder
Verticillium spp (II-12)
und/oder
Metschnikowia fructicola (II-13) bekannt aus Kurztman und Droby, System. Appl. Microbiol. (2001), 24, pp 395-399
und/oder
Metschnikowia fructicola Stamm NRRL Y-30752, (II-14) bekannt aus US-B2 6,994,849
und/oder
Bacillus subtilis Stamm GB03 (II-15) bekannt unter dem Namen Kodiak™ vermarktet durch Gustafson LLC
und/oder
Bacillus pumilus Stamm GB34 bekannt unter dem Namen YieldShield™ vermarktet durch Gustafson LLC
und/oder
Bacillus pumilus Stamm QST2808 bekannt unter dem Namen Sonata™ vermarktet durch Agraquest
und/oder
Bacillus amyloliquefaciens Stamm IN937a
und/oder
Myrothecium verrucaria Stamm AARC-0255 bekannt unter dem Namen DiTera™ vermarktet durch Valent BioSciences
und/oder
Pyrethrum (II-21)
und/oder
Cydia pomonella granulosis virus (CpGV) (II-22)
und/oder
Metarhizium anisopliae Stamm F52 (II-23)
und/oder
Arbuskulärer Mycorrhizapilz (II-24)
und/oder
Beauveria bassiana Stamm ATCC 74040 (bekannt unter dem Namen Naturalis®) (II-25)
und/oder
Beauveria brongniartii (II-26)
und/oder
Lecanicillium lecanii (formerly known as Verticillium lecanii) (II-27)
und/oder
Bacillus thuringiensis subsp. tenebrionis (II-28).

In einer bevorzugten Ausführungsform der Offenbarung sind die Wirkstoffe der Gruppe (II) ausgewählt aus der Gruppe bestehend aus Fluensulfone (II-1), Imicyafos (II-2), , Bacillus subtilis (II-3), Bacillus subtilis Stamm QST 713 (Serenade™) (II-4), Paecilomyces lilacinus (II-5), Paecilomyces lilacinus Strain 251 (Bioact™) (II-6), Azadirachtin (II-7), Thymol (II-8), Metarhizium anisopliae (II-9), Rhizobium spp. (II-10), Beauveria spp. (II-11), Verticillium spp. (II-12), Metschnikowia fructicola (II-13), Metschnikowia fructicola Stamm NRRL Y-30752. (II-14).
In einer bevorzugten Ausführungsform der Offenbarung sind die Wirkstoffe der Gruppe (II) ausgewählt aus der Gruppe der Bakterien bestehend aus Bacillus subtilis (II-3), Bacillus subtilis Stamm QST 713 (Serenade™) (II-4), Bacillus

subtilis Stamm GB03) (II-15), Bacillus pumilus Stamm GB34 (II-16), Bacillus pumilus Stamm QST2808 (II-17), Bacillus amyloliquefaciens Stamm IN937a (II-18), Rhizobium spp. (II-10), Bacillus thuringiensis subsp. tenebrionis (II-28).

In einer bevorzugten Ausführungsform der Offenbarung sind die Wirkstoffe der Gruppe (II) ausgewählt aus der Gruppe der Bacillus-Spezies bestehend aus Bacillus subtilis (II-3), Bacillus subtilis Stamm QST 713 (Serenade™) (II-4), Bacillus subtilis Stamm GB03) (II-15), Bacillus pumilus Stamm GB34 (II-16), Bacillus pumilus Stamm QST2808 (II-17), Bacillus amyloliquefaciens Stamm IN937a (II-18), Bacillus thuringiensis subsp. tenebrionis (II-28).

In einer bevorzugten Ausführungsform der Offenbarung sind die Wirkstoffe der Gruppe (II) ausgewählt aus der Gruppe der Pilzspezies bestehend aus Paecilomyces lilacinus (II-5), Paecilomyces lilacinus Strain 251 (Bioact™) (II-6), Metarhizium anisopliae (II-9), Beauveria spp. (II-11), Verticillium spp. (II-12), Metschnikowia fructicola (II-13), Metschnikowia fructicola Stamm NRRL Y-30752. (II-14), ) Myrothecium verrucaria Stamm AARC -0255 (II-19), Metarhizium anisopliae Stamm F52 (II-23), Arbuskulärer Mycorrhizapilz (II-24), Beauveria bassiana, in particular Stamm ATCC 74040 (II-25), Beauveria brongniartii (II-26), Lecanicillium lecanii (formerly known as Verticillium lecanii) (II-27).

In einer bevorzugten Ausführungsform der Offenbarung sind die Wirkstoffe der Gruppe (II) ausgewählt aus der Gruppe bestehend aus Fluensulfone (II-1), Imicyafos (II-2), Paecilomyces lilacinus (II-5), Paecilomyces lilacinus Stamm 251 (Bioact™) (II-6), Metarhizium anisopliae (II-9), Metschnikowia fructicola (II-13), Metschnikowia fructicola Stamm NRRL Y-30752. (II-14), ) Bacillus subtilis Stamm GB03) (II-15), Bacillus amyloliquefaciens Stamm FZB 42 (II-19), Bacillus thuringiensis subsp. tenebrionis (11-28), Pyrethrum (II-21), Cydia pomonella granulosis virus (CpGV) (II-22), Metarhizium anisopliae Stamm F52 (II-23), Arbuskulärer Mycorrhizapilz (II-24).

In einer bevorzugten Ausführungsform der Offenbarung sind die Wirkstoffe der Gruppe (II) ausgewählt aus der Gruppe bestehend aus Fluensulfone (II-1), Imicyafos (II-2), , Bacillus subtilis (II-3), Bacillus subtilis Stamm QST 713 (Serenade™) (II-4), Paecilomyces lilacinus (II-5), Paecilomyces lilacinus Strain 251 (Bioact™) (II-6) sowie Metschnikowia fructicola (II-13).

In einer besonders bevorzugten Ausführungsform der Offenbarung sind die Wirkstoffe der Gruppe (II) ausgewählt aus der Gruppe bestehend aus Fluensulfone (II-1), Imicyafos (II-2), , Bacillus subtilis Stamm QST 713 (Serenade™) (II-4), Paecilomyces lilacinus Strain 251 (Bioact™) (II-6).

In einer bevorzugten Ausführungsform der Offenbarung sind die Wirkstoffe der Gruppe (II) ausgewählt aus der Gruppe der niedermolekularen Wirkstoffe Fluensulfone (II-1), Imicyafos (II-2), Azadirachtin (II-7), Thymol (II-8).

In einer bevorzugten Ausführungsform ist die nicht therapeutische Verwendung von Wirkstoffkombinationen wie oben definiert zur Bekämpfung tierischer Schädlinge beschrieben.

In einer bevorzugten Ausführungsform ist die nicht therapeutische Verwendung von Wirkstoffkombinationen wie oben definiert zur Bekämpfung von Nematoden beschrieben.

In einer bevorzugten Ausführungsform ist ein nicht therapeutisches Verfahren zur Bekämpfung tierischer Schädlinge beschrieben, das dadurch gekennzeichnet ist, das man Wirkstoffkombinationen wie oben definiert, auf die Blätter, Blüten, Stängel oder das Saatgut der zu schützenden Pflanzen, auf tierische Schädlinge und/oder deren Lebensraum oder den Boden einwirken lässt.

In einer bevorzugten Ausführungsform ist ein Verfahren zur Herstellung insektizider und/oder akarizider und/oder nematizider Mittel beschrieben, das dadurch gekennzeichnet ist, dass man Wirkstoffkombinatione wie oben definiert, mit Streckmitteln und/oder oberflächenaktiven Stoffen vermischt.

In einer bevorzugten Ausführungsform sind Mittel enthaltend Wirkstoffkombinationen wie oben definiert zur Bekämpfung tierischer Schädlinge beschrieben.

In einer bevorzugten Ausführungsform ist die Verwendung von Wirkstoffkombinationen wie oben definiert zur Behandlung von Saatgut beschrieben.

In einer bevorzugten Ausführungsform ist die Verwendung von Wirkstoffkombinationen wie oben definiert zur Behandlung des Bodens oder von artifiziellen Substraten beschrieben.

In einer bevorzugten Ausführungsform ist Saatgut umfassend Wirkstoffkombinationen wie oben definiert beschrieben.

Überraschenderweise ist die fungizide, insektizide und/oder akarizide und/oder nematizide Wirkung, insbesondere die nematizide Wirkung, der erfindungsgemäßen Wirkstoffkombinationen, insbesondere nach Bodenanwendung, wesentlich höher als die Summe der Wirkungen der einzelnen Wirkstoffe. Es liegt ein nicht vorhersehbarer echter synergistischer Effekt vor und nicht nur eine Wirkergänzung. Zudem sind die erfindungsgemäßen Wirkstoffkombinationen geeignet, ertragssteigernd zu wirken.

Bevorzugt sind Wirkstoffkombinationen enthaltend die Verbindungen der Formel (I-1) und mindestens einen Wirkstoff der Formel (II).

Von hervorgehobenem Interesse sind folgende Kombinationen:

(I-1) + (II-1), (I-1) + (II-2), (I-1) + (II-3), (I-1) + (II-4), (I-1) + (II-5), (I-1) + (II-6), (I-1) + (II-7), (I-1) + (II-8), (I-1) + (II-9), (I-1) + (II-10), (I-1) + (II-11), (I-1) + (II-12), (I-1) + (II-13), (I-1) + (II-14), (I-1) + (II-15), (I-1) + (II-16), (I-1) + (II-17), (I-1) + (II-18), (I-1) + (II-19), (I-1) + (II-20), (I-1) + (II-21), (I-1) + (II-22), (I-1) + (II-23), (I-1) + (II-24), (I-1) + (II-25), (I-1)

+ (II-26), (I-1) + (II-27), (I-1) + (II-28).

Die Wirkstoffkombinationen können darüber hinaus auch weitere fungizid, akarizid, nematizid oder insektizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich die verbesserte Wirkung besonders deutlich. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formel (I-1) und den Mischpartner in den in der nachfolgenden Tabelle angegeben bevorzugten und besonders bevorzugten Mischungsverhältnissen:

| Mischpartner | bevorzugtes Mischungsverhältnis (I-1):Mischpartner | besonders bevorzugtes Mischungsverhältnis (I-1): Mischpartner | Ganz besonders bevorzugtes Mischungsverhältnis (I-1): Mischpartner |
|---|---|---|---|
| II-1 | 500 : 1 bis 1 : 500 | 125 : 1 bis 1 : 125 | 25 : 1 bis 1 : 25 |
| II-2 | 500 : 1 bis 1 : 500 | 125 : 1 bis 1 : 125 | 25 : 1 bis 1 : 25 |
| II-3 | 500 : 1 bis 1 : 500 | 125 : 1 bis 1 : 125 | 25 : 1 bis 1 : 25 |
| II-4 | 500 : 1 bis 1 : 500 | 125 : 1 bis 1 : 125 | 25 : 1 bis 1 : 25 |
| II-5 | 500 : 1 bis 1 : 500 | 125 : 1 bis 1 : 125 | 25 : 1 bis 1 : 25 |
| II-6 | 500 : 1 bis 1 : 500 | 125 : 1 bis 1 : 125 | 25 : 1 bis 1 : 25 |
| II-7 | 500 : 1 bis 1 : 500 | 125 : 1 bis 1 : 125 | 25 : 1 bis 1 : 25 |
| II-8 | 500 : 1 bis 1 : 500 | 125 : 1 bis 1 : 125 | 25 : 1 bis 1 : 25 |
| II-9 | 500 : 1 bis 1 : 50000 | 125 : 1 bis 1 : 12500 | 25 : 1 bis 1 : 2500 |
| II-10 | 500 : 1 bis 1 : 500 | 125 : 1 bis 1 : 125 | 25 : 1 bis 1 : 25 |
| II-11 | 500 : 1 bis 1 : 500 | 125 : 1 bis 1 : 125 | 25 : 1 bis 1 : 25 |
| II-12 | 500 : 1 bis 1 : 500 | 125 : 1 bis 1 : 125 | 25 : 1 bis 1 : 25 |
| II-13 | 500 : 1 bis 1 : 500 | 125 : 1 bis 1 : 125 | 25 : 1 bis 1 : 25 |
| II-14 | 500 : 1 bis 1 : 500 | 125 : 1 bis 1 : 125 | 25 : 1 bis 1 : 25 |
| II-15 | 500 : 1 bis 1 : 500 | 125 : 1 bis 1 : 125 | 25 : 1 bis 1 : 25 |
| II-16 | 500 : 1 bis 1 : 500 | 125 : 1 bis 1 : 125 | 25 : 1 bis 1 : 25 |
| II-17 | 500 : 1 bis 1 : 500 | 125 : 1 bis 1 : 125 | 25 : 1 bis 1 : 25 |
| II-18 | 500 : 1 bis 1 : 500 | 125 : 1 bis 1 : 125 | 25 : 1 bis 1 : 25 |
| II-19 | 500 : 1 bis 1 : 500 | 125 : 1 bis 1 : 125 | 25 : 1 bis 1 : 25 |
| II-20 | 500 : 1 bis 1 : 500 | 125 : 1 bis 1 : 125 | 25 : 1 bis 1 : 25 |
| II-21 | 500 : 1 bis 1 : 500 | 125 : 1 bis 1 : 125 | 25 : 1 bis 1 : 25 |
| II-22 | 500 : 1 bis 1 : 500 | 125 : 1 bis 1 : 125 | 25 : 1 bis 1 : 25 |
| II-23 | 500 : 1 bis 1 : 500 | 125 : 1 bis 1 : 125 | 25 : 1 bis 1 : 25 |
| II-24 | 500 : 1 bis 1 : 500 | 125 : 1 bis 1 : 125 | 25 : 1 bis 1 : 25 |
| II-25 | 500 : 1 bis 1 : 500 | 125 : 1 bis 1 : 125 | 25 : 1 bis 1 : 25 |
| II-26 | 500 : 1 bis 1 : 500 | 125 : 1 bis 1 : 125 | 25 : 1 bis 1 : 25 |
| II-27 | 500 : 1 bis 1 : 500 | 125 : 1 bis 1 : 125 | 25 : 1 bis 1 : 25 |
| II-28 | 500 : 1 bis 1 : 500 | 125 : 1 bis 1 : 125 | 25 : 1 bis 1 : 25 |

**Tierische Schädlinge**

Die Wirkstoffkombinationen eignen sich bei guter Pflanzenverträglichkeit zur Bekämpfung von tierischen Schädlingen, wie Insekten und/oder Spinnentieren, insbesondere von Nematoden, die im Weinanbau, Obstanbau, in der Landwirtschaft, in Gärtnereien und in Forsten vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

**Insekten**

Aus der Ordnung der Anoplura (Phthiraptera) z.B. Damalinia spp., Haematopinus spp., Linognathus spp., Pediculus spp., Trichodectes spp..

Aus der Klasse der Arachnida z.B. Acarus spp., Aceria sheldoni, Aculops spp., Aculus spp., Amblyomma spp., Amphitetranychus viennensis, Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Halotydeus destructor, Hemitarsonemus spp., Hyalomma spp., Ixodes spp., Latrodectus mactans, Metatetranychus spp., Nuphersa spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp..

Aus der Ordnung der Chilopoda z.B. Geophilus spp., Scutigera spp..

Aus der Ordnung der Coleoptera z.B. Acalymma vittatum, Acanthoscelides obtectus, Adoretus spp., Agelastica alni, Agriotes spp., Amphimallon solstitialis, Anobium punctatum, Anoplophora spp., Anthonomus spp., Anthrenus spp., Apion spp., Apogonia spp., Atomaria spp., Attagenus spp., Bruchidius obtectus, Bruchus spp., Cassida spp., Cerotoma trifurcata, Ceutorrhynchus spp., Chaetocnema spp., Cleonus mendicus, Conoderus spp., Cosmopolites spp., Costelytra zealandica, Ctenicera spp., Curculio spp., Cryptorhynchus lapathi, Cylindrocopturus spp., Dermestes spp., Diabrotica spp., Dichocrocis spp., Diloboderus spp., Epilachna spp., Epitrix spp., Faustinus spp., Gibbium psylloides, Hellula undalis, Heteronychus arator, Heteronyx spp., Hylamorpha elegans, Hylotrupes bajulus, Hypera postica, Hypothenemus spp., Lachnosterna consanguinea, Lema spp., Leptinotarsa decemlineata, Leucoptera spp., Lissorhoptrus oryzophilus, Lixus spp., Luperodes spp., Lyctus spp., Megascelis spp., Melanotus spp., Meligethes aeneus, Melolontha spp., Migdolus spp., Monochamus spp., Naupactus xanthographus, Niptus hololeucus, Oryctes rhinoceros, Oryzaephilus surinamensis, Oryzaphagus oryzae, Otiorrhynchus spp., Oxycetonia jucunda, Phaedon cochleariae, Phyllophaga spp., Phyllotreta spp., Popillia japonica, Premnotrypes spp., Psylliodes spp., Ptinus spp., Rhizobius ventralis, Rhizopertha dominica, Sitophilus spp., Sphenophorus spp., Sternechus spp., Symphyletes spp., Tanymecus spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Diplopoda z.B. Blaniulus guttulatus.

Aus der Ordnung der Diptera z.B. Aedes spp., Agromyza spp., Anastrepha spp., Anopheles spp., Asphondylia spp., Bactrocera spp., Bibio hortulanus, Calliphora erythrocephala, Ceratitis capitata, Chironomus spp., Chrysomyia spp., Cochliomyia spp., Contarinia spp., Cordylobia anthropophaga, Culex spp., Cuterebra spp., Dacus oleae, Dasyneura spp., Delia spp., Dermatobia hominis, Drosophila spp., Echinocnemus spp., Fannia spp., Gastrophilus spp., Hydrellia spp., Hylemyia spp., Hyppobosca spp., Hypoderma spp., Liriomyza spp.. Lucilia spp., Musca spp., Nezara spp., Oestrus spp., Oscinella frit, Pegomyia spp., Phorbia spp., Prodiplosis spp., Psila rosae, Rhagoletis spp., Stomoxys spp., Tabanus spp., Tannia spp., Tetanops spp., Tipula spp..

Aus der Klasse der Gastropoda z.B. Arion spp., Biomphalaria spp., Bulinus spp., Deroceras spp., Galba spp., Lymnaea spp., Oncomelania spp., Pomacea spp., Succinea spp..

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Collaria spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa

spp., Leptoglossus phyllopus, Lygus spp., Macropes excavatus, Miridae, Monalonion atratum, Nezara spp., Oebalus spp., Pentomidae, Piesma quadrata, Piezodorus spp., Psallus spp., Pseudacysta persea, Rhodnius spp., Sahlbergella singularis, Scaptocoris castanea, Scotinophora spp., Stephanitis nashi, Tibraca spp., Triatoma spp.

Aus der Ordnung der Homoptera z.B. Acyrthosipon spp., Acrogonia spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Drosicha spp., Dysaphis spp., Dysmicoccus spp., Empoasca spp., Eriosoma spp., Erythroneura spp., Euscelis bilobatus, Ferrisia spp., Geococcus coffeae, Hieroglyphus spp., Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva spp., Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes spp., Trioza spp., Typhlocyba spp., Unaspis spp., Viteus vitifolii, Zygina spp..

Aus der Ordnung der Hymenoptera z.B. Athalia spp., Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Acromyrmex spp., Atta spp., Cornitermes cumulans, Microtermes obesi, Odontotermes spp., Reticulitermes spp,

Aus der Ordnung der Lepidoptera z.B. Acronicta major, Adoxophyes spp., Aedia leucomelas, Agrotis spp., Alabama spp., Amyelois transitella, Anarsia spp., Anticarsia spp., Argyroploce spp., Barathra brassicae, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp., Choristoneura spp., Clysia ambiguella, Cnaphalocerus spp., Cnephasia spp., Conopomorpha spp., Conotrachelus spp., Copitarsia spp., Cydia spp., Dalaca noctuides, Diaphania spp., Diatraea saccharalis, Earias spp., Ecdytolopha aurantium, Elasmopalpus lignosellus, Eldana saccharina, Ephestia kuehniella, Epinotia spp., Epiphyas postvittana, Etiella spp., Eulia spp., Eupoecilia ambiguella, Euproctis spp., Euxoa spp., Feltia spp., Galleria mellonella, Gracillaria spp., Grapholitha spp., Hedylepta spp., Helicoverpa spp., Heliothis spp., Hofmannophila pseudospretella, Homoeosoma spp., Homona spp., Hyponomeuta padella, Kakivoria flavofasciata, Laphygma spp., Laspeyresia molesta, Leucinodes orbonalis, Leucoptera spp., Lithocolletis spp., Lithophane antennata, Lobesia spp., Loxagrotis albicosta, Lymantria spp., Lyonetia spp., Malacosoma neustria, Maruca testulalis, Mamestra brassicae, Mocis spp., Mythimna separata, Nymphula spp., Oiketicus spp., Oria spp., Orthaga spp., Ostrinia spp., Oulema oryzae, Panolis flammea, Parnara spp., Pectinophora spp., Perileucoptera spp., Phthorimaea spp., Phyllocnistis citrella, Phyllonorycter spp., Pieris spp., Platynota stultana, Plusia spp., Plutella xylostella, Prays spp., Prodenia spp., Protoparce spp., Pseudaletia spp., Pseudoplusia includens, Pyrausta nubilalis, Rachiplusia nu, Schoenobius spp., Scirpophaga spp., Scotia segetum, Sesamia spp., Sparganothis spp., Spodoptera spp., Stathmopoda spp., Stomopteryx subsecivella, Synanthedon spp., Tecia solanivora, Thermesia gemmatalis, Tinea pellionella, Tineola bisselliella, Tortrix spp., Trichoplusia spp., Tuta absoluta, Virachola spp..

Aus der Ordnung der Orthoptera z.B. Acheta domesticus, Blatta orientalis, Blattella germanica, Dichroplus spp., Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella spp..

Aus der Ordnung der Thysanoptera z.B. Anaphothrips obscurus, Baliothrips biformis, Drepanothris reuteri, Enneothrips flavens, Frankliniella spp., Heliothrips spp., Hercinothrips femoralis, Rhipiphorothrips cruentatus, Scirtothrips spp., Taeniothrips cardamoni, Thrips spp..

Aus der Ordnung der Thysanura z.B. Lepisma saccharina.

**Nematoden**

Grundsätzlich können alle Arten von pflanzenparasitären Nematoden mit den erfindungsgemäßen Wirkstoffkombinationen bekämpft werden. Besonders vorteilhaft erweisen sich die erfindungsgemäßen Wirkstoffkombinationen

zur Bekämpfung von Nematoden, die ausgewählt sind aus der Gruppe bestehend aus: Aglenchus agricola, Anguina tritici, Aphelenchoides arachidis, Aphelenchoides fragariae, Belonolaimus gracilis, Belonolaimus longicaudatus, Belonolaimus nortoni, Cacopaurus pestis, Criconemella curvata, Criconemella onoensis, Criconemella ornata, Criconemella rusium, Criconemella xenoplax (= Mesocriconema xenoplax) and Criconemella spp. in general, Criconemoides ferniae, Criconemoides onoense, Criconemoides ornatum and Criconemoides spp. in general, Ditylenchus destructor, Ditylenchus dipsaci, Ditylenchus myceliophagus and Ditylenchus spp. in general, Dolichodorus heterocephalus, Globodera pallida (=Heterodera pallida), Globodera rostochiensis, Globodera solanacearum, Globodera tabacum, Globodera virginiae, Helicotylenchus digonicus, Helicotylenchus dihystera, Helicotylenchus erythrine, Helicotylenchus multicinctus, Helicotylenchus nannus, Helicotylenchus pseudorobustus and Helicotylenchus spp. in general, Hemicriconemoides, Hemicycliophora arenaria, Hemicycliophora nudata, Hemicycliophora parvana, Heterodera avenae, Heterodera cruciferae, Heterodera glycines, Heterodera oryzae, Heterodera schachtii, Heterodera zeae and Heterodera spp. in general, Hoplolaimus aegyptii, Hoplolaimus californicus, Hoplolaimus columbus, Hoplolaimus galeatus, Hoplolaimus indicus, Hoplolaimus magnistylus, Hoplolaimus pararobustus, Longidorus africanus, Longidorus breviannulatus, Longidorus elongatus, Longidorus laevicapitatus, Longidorus vineacola and Longidorus spp. in general, Meloidogyne acronea, Meloidogyne africana, Meloidogyne arenaria, Meloidogyne arenaria thamesi, Meloidogyne artiella, Meloidogyne chitwoodi, Meloidogyne coffeicola, Meloidogyne ethiopica, Meloidogyne exigua, Meloidogyne graminicola, Meloidogyne graminis, Meloidogyne hapla, Meloidogyne incognita, Meloidogyne incognita acrita, Meloidogyne javanica, Meloidogyne kikuyensis, Meloidogyne naasi, Meloidogyne paranaensis, Meloidogyne thamesi and Meloidogyne spp. in general, Meloinema spp., Nacobbus aberrans, Neotylenchus vigissi, Paraphelenchus pseudoparietinus, Paratrichodorus allius, Paratrichodorus lobatus, Paratrichodorus minor, Paratrichodorus nanus, Paratrichodorus porosus, Paratrichodorus teres and Paratrichodorus spp. in general, Paratylenchus hamatus, Paratylenchus minutus, Paratylenchus projectus and Paratylenchus spp. in general, Pratylenchus agilis, Pratylenchus alleni, Pratylenchus andinus, Pratylenchus brachyurus, Pratylenchus cerealis, Pratylenchus coffeae, Pratylenchus crenatus, Pratylenchus delattrei, Pratylenchus giibbicaudatus, Pratylenchus goodeyi, Pratylenchus hamatus, Pratylenchus hexincisus, Pratylenchus loosi, Pratylenchus neglectus, Pratylenchus penetrans, Pratylenchus pratensis, Pratylenchus scribneri, Pratylenchus teres, Pratylenchus thornei, Pratylenchus vulnus, Pratylenchus zeae and Pratylenchus spp. in general, Pseudohalenchus minutus, Psilenchus magnidens, Psilenchus tumidus, Punctodera chalcoensis, Quinisulcius acutus, Radopholus citrophilus, Radopholus similis, Rotylenchulus borealis, Rotylenchulus parvus, Rotylenchulus reniformis and Rotylenchulus spp. in general, Rotylenchus laurentinus, Rotylenchus macrodoratus, Rotylenchus robustus, Rotylenchus uniformis and Rotylenchus spp. in general, Scutellonema brachyurum, Scutellonema bradys, Scutellonema clathricaudatum and Scutellonema spp. in general, Subanguina radiciola, Tetylenchus nicotianae, Trichodorus cylindricus, Trichodorus minor, Trichodorus primitivus, Trichodorus proximus, Trichodorus similis, Trichodorus sparsus and Trichodorus spp. in general, Tylenchorhynchus agri, Tylenchorhynchus brassicae, Tylenchorhynchus clarus, Tylenchorhynchus claytoni, Tylenchorhynchus digitatus, Tylenchorhynchus ebriensis, Tylenchorhynchus maximus, Tylenchorhynchus nudus, Tylenchorhynchus vulgaris and Tylenchorhynchus spp. in general, Tylenchulus semipenetrans, Xiphinema americanum, Xiphinema brevicolle, Xiphinema dimorphicaudatum, Xiphinema index and Xiphinema spp. in general.

Ganz besonders vorteilhaft erweisen sich die erfindungsgemäßen Wirkstoffkombinationen zur Bekämpfung von Nematoden, die ausgewählt sind aus der Gruppe bestehend aus: Meloidogyne spp., wie z.B. Meloidogyne incognita, Meloidogyne javanica, Meloidogyne hapla, Meloidogyne arenaria; Ditylenchus ssp., wie z.B. Ditylenchus dipsaci, Ditylelenchus destructor; Pratylenchus ssp., wie z.B. Pratylenchus penetrans, Pratylenchus fallax, Pratylenchus coffeae, Pratylenchus loosi, Pratylenchus vulnus; Globodera spp., wie z.B. Globodera rostochiensis, Globodera pallida etc.; Heterodera spp. , such as Heterodera glycines Heterodera shachtoii etc.; Aphelenchoides spp., wie z.B. Aphelenchoides besseyi, Aphelenchoides ritzemabosi, Aphelenchoides fragarieae; Aphelenchus ssp., wie z.B. Aphelenchus avenae; Radopholus ssp, wie z.B. Radopholus similis; Tylenchulus ssp., wie z.B. Tylenchulus semipenetrans; Rotylenchulus ssp., wie z.B. Rotylenchulus reniformis;

Bursaphelenchus spp., wie z.B. Bursaphelenchus xylophilus, Aphelenchoides spp., Longidorus spp., Xiphinema spp., Trichodorus spp.

Außerdem erweisen sich die erfindungsgemäßen Wirkstoffkombinationen zur Bekämpfung von Nematoden wirksam, die Menschen oder Tiere befallen, wie z.B.Spulwurm, Aftermade, Filarien, Wuchereri bancrofti, Fadenwürmer (convoluted filaria), Gnathostoma etc.

**Tiergesundheit**

Die erfindungsgemäßen Wirkstoffkombinationen wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp.,

Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die erfindungsgemäßen Wirkstoffkombinationen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Wirkstoffkombinationen eine wirtschaftlichere und einfachere Tierhaltung möglich ist.

Die Anwendung der erfindungsgemäßen Wirkstoffkombinationen geschieht im Veterinärsektor und bei der Tierhaltung in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel, Haustiere etc. kann man die Wirkstoffkombinationen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

**Kulturen**

Die nur allgemein beschriebenen zu schützenden Kulturen sind im Folgenden differenziert und spezifiziert. So versteht man hinsichtlich der Anwendung unter Gemüse z.B. Fruchtgemüse und Blütenstände als Gemüse, beispielsweise Karotten, Paprika, Peperoni, Tomaten, Auberginen, Gurken, Kürbisse, Zucchini, Ackerbohnen, Stangenbohnen, Buschbohnen, Erbsen, Artischocken, Mais;

aber auch Blattgemüse, beispielsweise Kopfsalat, Chicoree, Endivien, Kressen, Rauken, Feldsalat, Eisbergsalat, Lauch, Spinat, Mangold;

weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;

ferner Kohlgemüse, wie Blumenkohl, Broccoli, Kohlrabi, Rotkohl, Weißkohl, Grünkohl, Wirsing, Rosenkohl, Chinakohl.

Hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;

aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;

weiterhin Wein, Hopfen, Oliven, Tee, Soja, Raps, Baumwolle, Zuckerrohr, Rüben, Kartoffeln, Tabak und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven,
außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amaryllis, Dahlien, Azaleen, Malven, aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Usambaraveilchen, Sonnenblumen, Begonien, in Zierrasen, in Golfrasen aber auch in Getreide, wie Gerste, Weizen, Roggen, Triticale, Hafer, in Reis, in Hirsen, in Mais,
ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koriander, Safran, Ingwer.

Die zu schützenden Kulturen sind im Folgenden besonders hervorgehoben: Paprika, Peperoni, Tomaten, Auberginen, Gurken, Kürbisse, Zucchini, Artischocken, Mais, Sellerie, Rote Beete, Möhren, Radieschen, Meerrettich, Schwarzwurzeln, Spargel, Speiserüben, Palmsprossen, Bambussprossen, Zwiebeln, Lauch, Orangen, Grapefruits, Mandarinen, Zitronen, Limetten, Bitterorangen, Kumquats, Satsumas, Äpfel, Birnen und Quitten und Steinobst, wie beispielsweise Pfirsiche, Nektarinen, Kirschen, Pflaumen, Zwetschgen, Aprikosen, Wein, Hopfen, Soja, Raps, Baumwolle, Zuckerrohr, Rüben, Kartoffeln, Tabak, Haselnüsse, Walnüsse, Pistazien, Cashewnüsse, Paranüsse, Pekannüsse, Butternüsse, Kastanien, Hickorynüsse, Macadamiannüsse, Erdnüsse, Rosen, Nelken, Gerbera, Lilien, Margeriten, Chrysanthemen, Tulpen, Narzissen, Anemonen, Mohn, Amaryllis, Dahlien, Azaleen, Malven, Gerste, Weizen, Roggen, Triticale, Hafer, Reis, Hirse, Mais.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

**GMOs**

In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Erfindungsgemäß können alle Pflanzen und Pflanzenteile behandelt werden. Unter Pflanzen versteht man alle Pflanzen und Pflanzenpopulationen wie erwünschte und unerwünschte wilde Pflanzen, Sorten und Pflanzenvarietäten (egal, ob diese durch Pflanzensortenschutzrechte oder Pflanzenzüchterrecht geschützt werden können oder nicht). Sorten und Pflanzenvarietäten können Pflanzen sein, die mit traditionellen Vermehrungs- und Züchtungsmethoden erhalten werden, welche durch eine oder mehrere biotechnologische Methoden, wie zum Beispiel die Verwendung von Doppelhaploiden, Protoplastenfusion, zufälliger und gerichteter Mutagenese, molekularen oder genetischen Markern, oder durch Bioengineering-Methoden und gentechnische Methoden unterstützt oder ergänzt werden können. Unter Pflanzenteilen versteht man alle oberirdischen und unterirdischen Teile und Organe der Pflanzen wie Sproß, Blatt, Blüte und Wurzel, wobei beispielhaft Blätter, Nadeln, Stängel, Stämme, Blüten, Fruchtkörper, Früchte und Saatgut sowie Wurzeln, Knollen und Rhizome aufgeführt werden. Erntegut und vegetatives und generatives Vermehrungsmaterial,

zum Beispiel Stecklinge, Knollen, Rhizome, Ableger und Saatgut, zählen ebenfalls zu den Pflanzenteilen.

Unter den Pflanzen, die nach dem erfindungsgemäßen Verfahren geschützt werden können, sind zu nennen: Hauptfeldfruchtarten wie Mais, Sojabohne, Baumwolle, Brassica-Ölsaaten wie Brassica napus (z.B. Canola), Brassica rapa, B. juncea (z.B. Senf) und Brassica carinata, Reis, Weizen, Zuckerrübe, Zuckerrohr, Hafer, Roggen, Gerste, Hirse, Triticale, Flax, Rebe und verschiedene Früchte und Gemüse aus verschiedenen botanischen Taxa wie Rosaceae sp. (zum Beispiel Kernobst wie Äpfel und Birnen, jedoch auch Steinobst wie Aprikosen, Kirschen, Mandeln und Pfirsiche, Beerenfrüchte wie Erdbeeren), Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp. (zum Beispiel Bananenbäume und -plantagen), Rubiaceae sp. (zum Beispiel Kaffee), Theaceae sp., Sterculiceae sp., Rutaceae sp. (zum Beispiel Zitronen, Orangen und Grapefruit); Solanaceae sp. (zum Beispiel Tomaten, Kartoffeln, Paprika, Aubergine), Liliaceae sp., Compositiae sp. (zum Beispiel Salat, Artichoke und Cichorum - darunter Wurzel Cichorie, Endivie oder Gemeine Wegwarte), Umbelliferae sp. (zum Beispiel Karotte, Petersilie, Stauden- und Wurzelsellerie), Cucurbitaceae sp. (zum Beispiel Gurke - darunter Einlegegurke, Sommerkürbis, Wassermelone, Kürbisse und Melonen), Alliaceae sp. (zum Beispiel Zwiebel und Lauch), Cruciferae sp. (zum Beispiel Weißkohl, Rotkohl, Brokkoli, Blumenkohl, Rosenkohl, Pakchoi, Kohlrabi, Radieschen/Rettich, Meerrettich, Kresse, Chinakohl), Leguminosae sp. (zum Beispiel Erdnüsse, Erbsen und Bohnen - wie Stangenbohnen und Dicke Bohnen), Chenopodiaceae sp. (zum Beispiel Mangold, Beißkohl, Spinat, Rote Rüben), Malvaceae (zum Beispiel Okra), Asparagaceae (zum Beispiel Spargel); gartenbauliche Kulturen und Forstkulturen; Zierpflanzen; sowie genetisch modifizierte Homologe dieser Kulturpflanzen.

Das erfindungsgemäße Behandlungsverfahren kann bei der Behandlung von genetisch modifizierten Organismen (GMOs), z.B. Pflanzen oder Samen, verwendet werden. Bei genetisch modifizierten Pflanzen (oder transgenen Pflanzen) handelt es sich um Pflanzen, bei denen ein heterologes Gen stabil in das Genom eingebaut wurde. Der Ausdruck "heterologes Gen" bedeutet im wesentlichen ein Gen, das außerhalb der Pflanze bereitgestellt oder assembliert wird und das, wenn es in das Zellkerngenom, das Chloroplastengenom oder das Mitochondriengenom eingeführt wird, der transformierten Pflanze neue oder verbesserte agronomische oder sonstige Merkmale verleiht, und zwar dadurch, dass es ein Protein oder Polypeptid von Interesse exprimiert oder dass es ein anderes Gen, das in der Pflanze vorliegt, bzw. andere Gene, die in der Pflanze vorliegen, herunterreguliert oder abschaltet (zum Beispiel mittels Antisense-Technologie, Cosuppressionstechnologie oder RNA-Interferenz-Technologie (RNAi-Technologie)). Ein heterologes Gen, das sich in dem Genom befindet, wird auch als Transgen bezeichnet. Ein Transgen, das durch seine bestimmte Lage in dem Pflanzengenom definiert ist, wird Transformations-Event oder transgenes Event genannt.

In Abhängigkeit von den Pflanzenarten oder Pflanzensorten, ihrem Standort und ihren Wachstumsbedingungen (Böden, Klima, Vegetationsperiode, Ernährung) kann die erfindungsgemäße Behandlung auch zu überadditiven ("synergistischen") Effekten führen. So sind zum Beispiel die folgenden Effekte möglich, die über die eigentlich zu erwartenden Effekte hinausgehen: verringerte Aufwandmengen und/oder erweitertes Wirkungsspektrum und/oder erhöhte Wirksamkeit der Wirkstoffe und Zusammensetzungen, die erfindungsgemäß eingesetzt werden können, besseres Pflanzenwachstum, erhöhte Toleranz gegenüber hohen oder niedrigen Temperaturen, erhöhte Toleranz gegenüber Trockenheit oder Wasser- oder Bodensalzgehalt, erhöhte Blühleistung, Ernteerleichterung, Reifebeschleunigung, höhere Erträge, größere Früchte, größere Pflanzenhöhe, intensivere grüne Farbe des Blatts, frühere Blüte, höhere Qualität und/oder höherer Nährwert der Ernteprodukte, höhere Zuckerkonzentration in den Früchten, bessere Lagerfähigkeit und/oder Verarbeitbarkeit der Ernteprodukte.

In gewissen Aufwandmengen können die erfindungsgemäßen Wirkstoffkombinationen auch eine stärkende Wirkung auf Pflanzen ausüben. Sie eignen sich daher für die Mobilisierung des pflanzlichen Abwehrsystems gegen Angriff durch unerwünschte Mikroorganismen. Dies kann gegebenenfalls einer der Gründe für die erhöhte Wirksamkeit der erfindungsgemäßen Kombinationen sein, zum Beispiel gegen Pilze. Pflanzenstärkende (resistenzinduzierende) Substanzen sollen im vorliegenden Zusammenhang auch solche Substanzen oder Substanzkombinationen bedeuten, die fähig sind, das pflanzliche Abwehrsystem so zu stimulieren, dass die behandelten Pflanzen, wenn sie im Anschluß daran mit unerwünschten Mikroorganismen inokkuliert werden, einen beträchtlichen Resistenzgrad gegen diese Mikroorganismen aufweisen. Im vorliegenden Fall versteht man unter unerwünschten Mikroorganismen phytopathogene Pilze, Bakterien und Viren. Die erfindungsgemäßen Substanzen lassen sich daher zum Schutz von Pflanzen gegen Angriff durch die oben erwähnten Pathogene innerhalb eines gewissen Zeitraums nach der Behandlung einsetzen. Der Zeitraum, über den eine Schutzwirkung erzielt wird, erstreckt sich im allgemeinen von 1 bis 10 Tagen, vorzugsweise 1 bis 7 Tagen, nach der Behandlung der Pflanzen mit den Wirkstoffen.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls vorzugsweise erfindungsgemäß behandelt werden, sind gegen einen oder mehrere biotische Streßfaktoren resistent, d. h. diese Pflanzen weisen eine verbesserte Abwehr gegen tierische und mikrobielle Schädlinge wie Nematoden, Insekten, Milben, phytopathogene Pilze, Bakterien, Viren und/oder Viroide auf.

Beispiele für nematodenresistente Pflanzen sind zum Beispiel in den US-Patentanmeldungen Nr. 11/765,491, 11/765,494, 10/926,819, 10/782,020, 12/032,479, 10/783,417, 10/782,096, 11/657,964, 12/192,904, 11/396,808, 12/166,253, 12/166,239, 12/166,124, 12/166,209, 11/762,886, 12/364,335, 11/763,947, 12/252,453, 12/209,354, 12/491,396 oder 12/497,221 beschrieben.

Pflanzen und Pflanzensorten, die ebenfalls erfindungsgemäß behandelt werden können, sind solche Pflanzen, die gegen einen oder mehrere abiotische Streßfaktoren resistent sind. Zu den abiotischen Streßbedingungen können zum Beispiel Dürre, Kälte- und Hitzebedingungen, osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Streß- und nicht-Streß-Bedingungen) beeinflußt werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Beispiele für Pflanzen mit den obengenannten Merkmalen sind in Tabelle A aufgelistet, die jedoch nicht allumfassend ist.

Pflanzen, die erfindungsgemäß behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen, d. h. mechanisches Entfernen der männlichen Geschlechtsorgane (bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, das man von den Hybridpflanzen ernten will, um die Samen handelt, ist es üblicherweise günstig, sicherzustellen, dass die Pollenfertilität in Hybridpflanzen völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 92/05251, WO 95/09910, WO 98/27806, WO 05/002324, WO 06/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 91/02069).

Pflanzen oder Pflanzensorten (die mit Methoden der Pflanzenbiotechnologie, wie der Gentechnik, erhalten werden), die erfindungsgemäß behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidresistente Pflanzen sind zum Beispiel glyphosatetolerante Pflanzen, d. h. Pflanzen, die gegenüber dem Herbizid Glyphosate oder dessen Salzen tolerant gemacht worden sind. Pflanzen können auf verschiedene Weisen glyphosatetolerant gemacht werden. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium Salmonella typhimurium (Comai et al., Science (1983), 221, 370-371), das CP4-Gen des Bakteriums Agrobacterium sp. (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 01/66704) kodieren. Es kann sich auch um eine mutierte EPSPS handeln, wie sie zum Beispiel in

EP 0837944, WO 00/66746, WO 00/66747 oder WO 02/26995 beschrieben ist. Glyphosatetolerante Pflanzen können auch dadurch erhalten werden, dass man ein Gen exprimiert, das für ein Glyphosate-Oxidoreduktase-Enzym, wie es in US-Patenten Nr. 5,776,760 und 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 02/036782, WO 03/092360, WO 05/012515 und WO 07/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 01/024615 oder WO 03/013226 beschrieben sind, enthalten, selektiert. Pflanzen, die eine Glyphosatetoleranz vermittelnde EPSPS-Gene exprimieren, sind zum Beispiel in den US-Patentanmeldungen Nr. 11/517,991, 10/739,610, 12/139,408, 12/352,532, 11/312,866, 11/315,678, 12/421,292, 11/400,598, 11/651,752, 11/681,285, 11/605,824, 12/468,205, 11/760,570, 11/762,526, 11/769,327, 11/769,255, 11/943801 oder 12/362,774 beschrieben. Pflanzen, die andere eine Glyphosatetoleranz vermittelnde Gene enthalten, wie Decarboxylase-Gene, sind zum Beispiel in den US-Patentanmeldungen Nr. 11/588,811, 11/185,342, 12/364,724, 11/185,560 oder 12/423,926 beschrieben.

Sonstige herbizidresistente Pflanzen sind zum Beispiel Pflanzen, die gegenüber Herbiziden, die das Enzym Glutaminsynthase hemmen, wie Bialaphos, Phosphinothricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet, zum Beispiel beschrieben in der US-Patentanmeldung Nr. 11/760,602. Solch ein wirksames entgiftendes Enzym ist zum Beispiel ein Enzym, das für eine Phosphinotricin-acetyltransferase kodiert (wie zum Beispiel das bar- oder pat-Protein aus Streptomyces-Arten). Pflanzen, die eine exogene Phosphinothricin-acetyltransferase exprimieren, sind zum Beispiel in den US-Patenten Nr. 5,561,236; 5,648,477; 5,646,024; 5,273,894; 5,637,489; 5,276,268; 5,739,082; 5,908,810 und 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei HPPD handelt es sich um ein Enzym, das die Reaktion, in der para-Hydroxyphenylpyruvat (HPP) zu Homogentisat umgesetzt wird, katalysiert. Pflanzen, die gegenüber HPPD-Hemmern tolerant sind, können mit einem Gen, das für ein natürlich vorkommendes resistentes HPPD-Enzym kodiert, oder einem Gen, das für ein mutiertes oder chimäres HPPD-Enzym gemäß WO 96/38567, WO 99/24585 und WO 99/24586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 99/34008 und WO 02/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Enzym mit Prephenatdehydrogenase-Aktivität (PDH-Aktivität) kodiert, wie dies in WO 2004/024928 beschrieben ist. Außerdem können Pflanzen dadurch toleranter gegenüber HPPD-Hemmer-Herbiziden gemacht werden, dass man ihrem Genom ein Gen hinzufügt, welches ein Enzym kodiert, das zur Metabolisierung oder zum Abbau von HPPD-Hemmern, wie den in WO 2007/103567 und WO 2008/150473 gezeigten CYP450-Enzymen, befähigt ist.

Noch weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in den US-Patenten Nr. 5,605,011, 5,378,824, 5,141,870 und 5,013,659, beschrieben ist. Die Herstellung von sulfonylharnstofftoleranten Pflanzen und imidazolinontoleranten Pflanzen ist in den US-Patenten Nr. 5,605,011; 5,013,659; 5,141,870; 5,767,361; 5,731,180; 5,304,732; 4,761,373; 5,331,107; 5,928,937; und 5,378,824; sowie in der internationalen Veröffentlichung WO 96/33270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 07/024782 und in der US-Patentanmeldung Nr. 61/288958 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in dem US-Patent Nr. 5,084,082, für Reis in WO 97/41218, für die Zuckerrübe in dem US-Patent Nr. 5,773,702 und WO 99/057965, für Salat in dem US-Patent 5,198,599 oder für die Sonnenblume in WO 01/065922 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz

verleiht, erhalten werden.

Der Begriff "insektenresistente transgene Pflanze" umfaßt im vorliegenden Zusammenhang jegliche Pflanze, die mindestens ein Transgen enthält, das eine Kodiersequenz umfaßt, die für folgendes kodiert:

1) ein insektizides Kristallprotein aus Bacillus thuringiensis oder einen insektiziden Teil davon, wie die insektiziden Kristallproteine, die von Crickmore et al., Microbiology and Molecular Biology Reviews (1998), 62, 807-813, von Crickmore et al. (2005) in der Bacillus thuringiensis-Toxinnomenklatur aktualisiert, online bei: http://www.lifesci.sussex.ac.uk/Home/Neil_Crickmore/Bt/), zusammengestellt wurden, oder insektizide Teile davon, z.B. Proteine der Cry-Proteinklassen Cry1Ab, Cry1Ac, Cry1B, Cry1C, Cry1D, Cry1F, Cry2Ab, Cry3Aa oder Cry3Bb oder insektizide Teile davon (z.B. EP-A 1999141 und WO 2007/107302), oder derartige von synthetischen Genen kodierte Proteine, wie zum Beispiel in und der US-Patentanmeldung Nr. 12/249,016 beschrieben; oder

2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cry34 und Cry35 (Moellenbeck et al., Nat. Biotechnol. (2001), 19, 668-72; Schnepf et al., Applied Environm. Microbiol. (2006), 71, 1765-1774) besteht, oder das binäre Toxin, das aus dem Cry1A- oder Cry1F-Protein und dem Cry2Aa- oder Cry2Ab- oder Cry2Ae-Protein besteht (US-Patentanmeldung Nr. 12/214,022 und EP 08010791.5) besteht; oder

3) ein insektizides Hybridprotein, das Teile von zwei unterschiedlichen insektiziden Kristallproteinen aus Bacillus thuringiensis umfaßt, wie zum Beispiel ein Hybrid aus den Proteinen von 1) oben oder ein Hybrid aus den Proteinen von 2) oben, z. B. das Protein Cry1A.105, das von dem Mais-Event MON89034 produziert wird (WO 2007/027777); oder

4) ein Protein gemäß einem der Punkte 1) bis 3) oben, wobei einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der betroffenen Zielinsektenarten zu erweitern und/oder wegen Veränderungen, die in die Kodier-DNA während der Klonierung oder Transformation induziert wurden, wie das Protein Cry3Bb1 in Mais-Events MON863 oder MON88017 oder das Protein Cry3A im Mais-Event MIR604; oder

5) ein insektizides sezerniertes Protein aus Bacillus thuringiensis oder Bacillus cereus oder einen insektiziden Teil davon, wie die vegetativ wirkenden insektiziden Proteine (vegetative insecticidal proteins, VIP), die unter http://www.lifesci.sussex.ac.uk/home/Neil_Crickmore/Bt/vip.html angeführt sind, z. B. Proteine der Proteinklasse VIP3Aa; oder

6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 94/21795) oder

7) ein insektizides Hybridprotein, das Teile von verschiedenen sezernierten Proteinen von Bacillus thuringiensis oder Bacillus cereus umfaßt, wie ein Hybrid der Proteine von 1) oder ein Hybrid der Proteine von 2) oben; oder

8) ein Protein gemäß einem der Punkte 5) bis 7) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der betroffenen Zielinsektenart zu erweitern und/oder wegen Veränderungen, die in die Kodier- DNA während der Klonierung oder Transformation eingeführt wurden (wobei die Kodierung für ein insektizides Protein erhalten bleibt), wie das Protein VIP3Aa im Baumwoll-Event COT 102; oder

9) ein sezerniertes Protein aus Bacillus thuringiensis oder Bacillus cereus, das in Gegenwart eines Kristallproteins aus Bacillus thuringiensis insektizid wirkt, wie das binäre Toxin, das aus VIP3 und Cry1A oder Cry1F besteht (US-Patentanmeldungen Nr. 61/126083 und 61/195019), oder das binäre Toxin, das aus dem Protein VIP3 und den Proteinen Cry2Aa oder Cry2Ab oder Cry2Ae besteht (US-Patentanmeldung Nr. 12/214,022 und EP 08010791.5); oder

10) ein Protein gemäß 9) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen, und/oder um das Spektrum der betroffenen Zielinsektenart zu erweitern, und/oder wegen Veränderungen, die in die Kodier-DNA während der Klonierung oder Transformation eingeführt wurden (wobei die Codierung für eine insektizides Protein

erhalten bleibt).

Natürlich zählt zu den insektenresistenten transgenen Pflanzen im vorliegenden Zusammenhang auch jegliche Pflanze, die eine Kombination von Genen umfaßt, die für die Proteine von einer der oben genannten Klassen 1 bis 10 kodieren. In einer Ausführungsform enthält eine insektenresistente Pflanze mehr als ein Transgen, das für ein Protein nach einer der oben genannten Klassen 1 bis 10 kodiert, um das Spektrum der betroffenen Zielinsektenarten zu erweitern wenn verschiedene Proteine, die auf verschiedene Zielinsektenarten abzielen, verwendet werden, oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Eine "insektenresistente transgene Pflanze" beinhaltet im vorliegenden Zusammenhang weiterhin jegliche Pflanze, die mindestens ein Transgen enthält, welches eine Sequenz umfasst, die bei Expression eine doppelsträngige RNA produziert, welche bei Aufnahme durch ein Pflanzenschädlingsinsekt das Wachstum dieses Schädlingsinsekts hemmt, wie dies z.B. in WO 2007/080126, WO 2006/129204, WO 2007/074405, WO 2007/080127 und WO 2007/035650 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Streßfaktoren tolerant. Solche Pflanzen können durch genetische Transformation oder durch Selektion von Pflanzen, die eine Mutation enthalten, die solch eine Streßresistenz verleiht, erhalten werden. Zu besonders nützlichen Pflanzen mit Streßtoleranz zählen folgende:

1) Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 00/04173, WO/2006/045633, EP 04077984.5 oder EP 06009836.5 beschrieben ist.

2) Pflanzen, die ein streßtoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;

3) Pflanzen, die ein streßtoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in der EP 04077624.7, WO 2006/133827, PCT/EP07/002433, EP 1999263 oder WO 2007/107326 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:

1) Transgene Pflanzen, die eine modifizierte Stärke synthetisieren, die bezüglich ihrer chemischphysikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP 0571427, WO 95/04826, EP 0719338, WO 96/15248, WO 96/19581, WO 96/27674, WO 97/11188, WO 97/26362, WO 97/32985, WO 97/42328, WO 97/44472, WO 97/45545, WO 98/27212, WO 98/40503, WO 99/58688, WO 99/58690, WO 99/58654, WO 00/08184, WO 00/08185, WO 00/08175, WO 00/28052, WO 00/77229, WO 01/12782, WO 01/12826, WO 02/101059, WO 03/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 00/22140, WO 2006/063862, WO 2006/072603, WO 02/034923, EP 06090134.5, EP 06090228.5, EP 06090227.7, EP 07090007.1, EP 07090009.7, WO 01/14569, WO 02/79410, WO 03/33540, WO 2004/078983, WO 01/19975, WO 95/26407, WO 96/34968, WO 98/20145, WO 99/12950, WO 99/66050, WO 99/53072, US 6,734,341, WO 00/11192, WO 98/22604, WO 98/32326, WO 01/98509, WO 01/98509, WO 2005/002359, US 5,824,790, US 6,013,861, WO 94/04693, WO 94/09144, WO 94/11520, WO 95/35026 bzw. WO 97/20936 beschrieben.

2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 96/01904, WO 96/21023, WO 98/39460 und WO 99/24593 beschrieben ist, Pflanzen, die alpha-1,4-Glucane produzieren, wie dies in WO 95/31553, US 2002031826, US 6,284,479, US 5,712,107, WO 97/47806, WO 97/47807, WO 97/47808 und WO 00/14249 beschrieben ist, Pflanzen, die alpha-1,6-verzweigte alpha-1,4-Glucane produzieren, wie dies in WO 00/73422 beschrieben ist, und Pflanzen, die Alternan produzieren, wie dies in WO 00/47727, WO 00/73422, EP 06077301.7, US 5,908,975 und EP 0728213 beschrieben ist.

3) Transgene Pflanzen, die Hyaluronan produzieren, wie dies zum Beispiel in WO 2006/032538, WO 2007/039314, WO 2007/039315, WO 2007/039316, JP 2006304779 und WO 2005/012529 beschrieben ist.

4) Transgene Pflanzen oder Hybridpflanzen, wie Zwiebeln mit Merkmalen wie 'hoher Gehalt an löslichen Feststoffen', 'milde' (low pungency, ist gleich LP) und/oder 'Langzeitlagerung' (long storage, ist gleich LS), wie dies in den US-Patentanmeldungen Nr. 12/020,360 und 61/054,026 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:

a) Pflanzen wie Baumwollpflanzen, die eine veränderte Form von Cellulosesynthasegenen enthalten, wie dies in WO 98/00549 beschrieben ist,

b) Pflanzen wie Baumwollpflanzen, die eine veränderte Form von rsw2- oder rsw3-homologen Nukleinsäuren enthalten, wie dies in WO 2004/053219 beschrieben ist;

c) Pflanzen wie Baumwollpflanzen mit einer erhöhten Expression der Saccharosephosphatsynthase, wie dies in WO 01/17333 beschrieben ist;

d) Pflanzen wie Baumwollpflanzen mit einer erhöhten Expression der Saccharosesynthase, wie dies in WO 02/45485 beschrieben ist;

e) Pflanzen wie Baumwollpflanzen bei denen der Zeitpunkt der Durchlaßsteuerung der Plasmodesmen an der Basis der Faserzelle verändert ist, z. B. durch Herunterregulieren der faserselektiven β-1,3-Glucanase, wie dies in WO 2005/017157, oder wie in der EP 08075514.3 oder in der US-Patentanmeldung Nr. 61/128,938 beschrieben ist;

f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:

a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;

b) Pflanzen wie Rapspflanzen, die Öl mit einem niedrigen Linolensäuregehalt produzieren, wie dies in US 6,270,828, US 6,169,190 oder US 5,965,755 beschrieben ist.

c) Pflanzen wie Rapspflanzen, die Öl mit einem niedrigen gesättigten Fettsäuregehalt produzieren, wie dies z. B. in US 5,434,283 oder US-Patentanmeldung Nr. 12/668303 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Samenstreuungseigenschaften. Solche Pflanzen können durch genetische Transformation oder durch Selektion von Pflanzen, die eine Mutation enthalten, die solche veränderten Samenstreuungseigenschaften verleihen, erhalten werden; dazu zählen Rapspflanzen mit verzögerter oder verringerter Samenstreuung, wie dies in der US-Patentanmeldung Nr. 61/135,230, WO09/068313 und WO10/006732 beschrieben ist.

Besonders nützliche transgene Pflanzen, die erfindungsgemäß behandelt werden können, sind Pflanzen, die Transformations-Events, oder Kombination von Transformations-Events, enthalten und für die Anmeldungen in den Vereinigten Staaten von Amerika beim Animal and Plant Health Inspection Service (APHIS) des United States Department of Agriculture (USDA) auf Deregulierung vorliegen, egal, ob solche Anträge genehmigt wurden oder noch bearbeitet werden. Diese Information ist jeder Zeit leicht von APHIS erhältlich, (4700 River Road Riverdale, MD 20737, USA) zum Beispiel auf der Website (URL http://www.aphis.usda.gov/brs/not_reg.html). Zum Einreichdatum der vorliegenden Anmeldung handelte es sich bei den Anträgen auf Deregulierung, die bei APHIS bearbeitet wurden oder von APHIS genehmigt wurden, um diejenigen, die in Tabelle B aufgelistet sind, wobei diese Tabelle die folgende Information enthält:

- Antrag: Identifikationsnummer des Antrags. Technische Beschreibungen der Transformations-Events finden sich in den einzelnen Antragsdokumenten, die von APHIS durch Bezug auf diese Antragsnummer erhältlich sind, zum Beispiel auf der APHIS-Website. Die Beschreibungen werden in den folgenden Text hiermit durch Bezugnahme aufgenommen.
- Erweiterung eines Antrags: Bezugnahme auf einen früheren Antrag, für den eine Erweiterung beantragt wird.
- Institution: Name des Antragstellers.
- Gegenstand der Regulation: die jeweilige Pflanzenart.
- Transgener Phänotyp: das den Pflanzen durch das Transformations-Event vermittelte Merkmal.
- Transformations-Event oder Linie: Name des bzw. der Events (manchmal auch als Linie(n) bezeichnet), für das Deregulation beantragt wird.
- APHIS-Dokumente: verschiedene von APHIS in Bezug auf den Antrag veröffentlichte Dokumente, die von APHIS erhältlich sind.

Zusätzliche besonders nützliche Pflanzen, die einzelne Transformations-Events oder eine Kombination von Transformations-Events enthalten, sind zum Beispiel in den Datenbanken von verschiedenen nationalen oder regionalen Behörden angeführt (siehe zum Beispiel http://gmoinfo.jrc.it/gmp_browse.aspx und http://cera-gmc.org/index.php?evidcode=&hstIDXCode=&gType=&AbbrCode=&atCode=&stCode=&coIDCode= &action=gm_crop_database&mode=Submit).

Zu weiteren besonderen transgenen Pflanzen zählen Pflanzen, die ein Transgen in einer agronomisch neutralen oder vorteilhaften Stellung enthalten, wie dies in beliebigen Patentveröffentlichungen, die in Tabelle C aufgelistet sind, beschrieben ist.

In einer Ausführungsform der Erfindung werden die Pflanzen A-1 bis A-183 von Tabelle A ganz oder teilweise bzw. wird Vermehrungsmaterial dieser Pflanzen mit den erfindungsgemäßen Wirkstoffkombinationen allein oder in Form von Zusammensetzungen, die eine Wirkstoffkombination umfassen, behandelt oder in Kontakt gebracht.

| Nr. | Transgenes Event | Unternehmen | Beschreibung | Kulturpflanze |
|---|---|---|---|---|
| A-1 | ASR368 | Scotts Seeds | Glyphosate -Toleranz, die durch Insertieren eines modifizierten, für die 5-Enolpyruvylshikimat-3-phosphatsynthase (EPSPS) codierenden Gens aus Agrobacterium tumefaciens, Kreuzungspartner B99061, erhalten wurde. | *Agrostis stolonifera Weißes Straußgras* |
| A-2 | Asr-368 | | Glyphosate-Toleranz; US 2006-162007 | Straußgras |

(fortgesetzt)

| Nr. | Transgenes Event | Unternehmen | Beschreibung | Kulturpflanze |
|---|---|---|---|---|
| A-3 | H7-1 | Monsanto Company | Zuckerrübe mit Toleranz für das Herbizid Glyphosate; Erzeugung durch Insertieren eines Gens für das Enzym 5-Enolypyruvylshikimat-3-phosphatsynthase (EPSPS) aus dem Agrobacterium tumefaciens Stamm CP4; WO 2004-074492 | *Beta vulgaris* |
| A-4 | T120-7 | Bayer CropScience (Aventis CropScience (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Beta vulgaris* |
| A-5 | GTSB77 | Novartis Seeds; Monsanto Company | Zuckerrübe mit Toleranz für das Herbizid Glyphosate; Erzeugung durch Insertieren eines Gens für das Enzym 5-Enolypyruvylshikimat-3-phosphatsynthase (EPSPS) aus dem Agrobacterium tumefaciens-Stamm CP4. | *Beta vulgaris (Zuckerrübe)* |
| A-6 | T227-1 | | Glyphosate-Toleranz; US 2004-117870 | *Beta vulgaris* Zuckerrübe |
| A-7 | 23-18-17, 23-198 | Monsanto Company (früher Calgene) | Canola-Raps mit hohem Laurinsäure- (12:0) und Myristinsäure- (14:0)-Gehalt; Erzeugung durch Insertieren eines Gens für Thioesterase aus dem Kalifornischen Lorbeer (Umbellularia californica). | *Brassica napus* (Argentinischer Canola-Raps) |
| A-8 | 45A37,46A40 | Pioneer Hi-Bred International Inc. | Canola-Raps mit hohem Ölsäure- und niedrigem Linolensäuregehalt ; Erzeugung durch eine Kombination von chemischer Mutagenese für die Selektion auf eine Fettsäuredesaturase-Mutante mit erhöhtem Ölsäuregehalt und traditionelle Rückkreuzung zur Einführung des Merkmals niedriger Linolensäuregehalt. | *Brassica napus* (Argentinischer Canola-Raps) |
| A-9 | 46A12,46A16 | Pioneer Hi-Bred International Inc. | Kombination von chemischer Mutagenese zur Erzeugung des Merkmals hoher Ölsäuregehalt und traditioneller Züchtung mit eingetragenen Canola-Rapssorten. | *Brassica napus* (Argentinischer Canola-Raps) |
| A-10 | GT200 | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. | *Brassica napus* (Argentinischer Canola-Raps) |

(fortgesetzt)

| Nr. | Transgenes Event | Unternehmen | Beschreibung | Kulturpflanze |
|---|---|---|---|---|
| A-11 | GT73, RT73 | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. | *Brassica napus* (Argentinischer Canola-Raps) |
| A-12 | HCN10 | Aventis CropScience | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-13 | HCN92 | Bayer CropScience (Aventis CropScience (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-14 | MS1, RF1 =>PGS1 | Aventis CropScience (formerly Plant Genetic Systems) | Pollensterilitäts/Fertifitätsrestorations/ Bestäubungskontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |
| A-15 | MS1, RF2 =>PGS2 | Aventis CropScience (früher Plant Genetic Systems) | Pollensterilitäts/Fertifitätsrestorations/ Bestäubungskontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |
| A-16 | MS8xRF3 | Bayer CropScience (Aventis CropScience (AgrEvo)) | Pollensterilitäts/Fertifitätsrestorations/ Bestäubungskontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |

(fortgesetzt)

| Nr. | Transgenes Event | Unternehmen | Beschreibung | Kulturpflanze |
|---|---|---|---|---|
| A-17 | MS-B2 | | Pollensterilität; WO 01/31042 | *Brassica napus* (Argentinischer Canola-Raps) |
| A-18 | MS-BN1/RF-BN1 | | Pollensterilität/Restoration; WO 01/41558 | *Brassica napus* (Argentinischer Canola-Raps) |
| A-19 | NS738, NS1471, NS1473 | Pioneer Hi-Bred International Inc. | Selektion von somaclonal Varianten mit veränderten Acetolactatsynthase (ALS) -Enzymen und anschließende chemische Mutagenese. Zwei Linien (P1, P2) mit Modifikationen an verschiedenen, nicht gekoppelten Loci wurden ursprünglich selektiert. NS738 enthält nur die P2 Mutation. | *Brassica napus* (Argentinischer Canola-Raps) |
| A-20 | OXY-235 | Aventis CropScience (formerly Rhône Poulenc Inc.) | Toleranz für die Herbizide Bromoxynil und Ioxynil durch Einbau des Nitrilase-Gens aus Klebsiella pneumoniae. | *Brassica napus* (Argentinischer Canola-Raps) |
| A-21 | PHY14, PHY35 | Aventis CropScience (früher Plant Genetic Systems) | Erzeugung der Pollensterilität mittels Insertion des Barnase-Ribonucleasegens aus Bacillus amyloliquefaciens; Restoration Fertilität durch Insertieren des Barstar-RNase-Hemmers; PPT-Resistenz durch PPT-Acetyltransferase (PAT) aus Streptomyces hygroscopicus. | *Brassica napus* (Argentinischer Canola-Raps) |
| A-22 | PHY36 | Aventis CropScience (früher Plant Genetic Systems) | Erzeugung der Pollensterilität mittels Insertion des Barnase-Ribonucleasegens aus Bacillus amyloliquefaciens; Restoration Fertilität durch Insertieren des Barstar-RNase-Hemmers; PPT-Acetyltransferase (PAT) aus Streptomyces hygroscopicus. | *Brassica napus* (Argentinischer Canola-Raps) |
| A-23 | RT73 | | Glyphosate-Resistenz; WO 02/36831 | *Brassica napus* (Argentinischer Canola-Raps) |
| A-24 | T45 (HCN28) | Bayer CropScience (Aventis CropScience (AgrEvo)) | Einführen des für die PPT-Acetyltransferase (PAT) codierenden Gens aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-25 | HCR-1 | Bayer Crop Science (Aventis CropScience (AgrEvo)) | Einführung des Merkmals Toleranz für das Herbizid Glufosinate-Ammonium aus der transgenen B. napus-Linie T45. Dieses Merkmal wird von dem Gen für die Phosphinothricinacetyltransferase (PAT) aus S. viridochromogenes vermittelt. | *Brassica rapa* (Polnischer Canola-Raps) |

(fortgesetzt)

| Nr. | Transgenes Event | Unternehmen | Beschreibung | Kulturpflanze |
|---|---|---|---|---|
| A-26 | ZSR500/502 | Monsanto Company | Einführung einer modifizierten 5-Enolpyruvylshikimat-3-phosphatsynthase (EPSPS) und eines Gens aus Achromobacter sp., das Glyphosate durch Umwandlung in Aminomethylphosphonsäure (AMPA) und Glyoxylate abbaut, mittels Artkreuzung mit GT73. | *Brassica rapa* (Polnischer Canola-Raps) |
| A-27 | EE-1 | | Insektenresistenz (Cry1Ac); WO 2007/091277 | Aubergine |
| A-28 | 55-1/63-1 | Cornell University | Gegen das Papaya-Ringspot-Virus (PRSV) resistente Papaya, die durch Insertion der für das Hüllprotein (CP) codierenden Sequenzen von diesem Pflanzen-Potyvirus erzeugt wurde. | *Carica papaya* (Papaya) |
| A-29 | RM3-3, RM3-4, RM3-6 | Bejo Zaden BV | Erzeugung der Pollensterilität mittels Insertion des Barnase-Ribonucleasegens aus Bacillus amyloliquefaciens; die PPT-Resistenz mittels dem bar-Gen aus S. hygroscopicus, das für das PAT-Enzym codiert. | *Cichorium intybus* (Chicoree) |
| A-30 | A, B | Agritope Inc. | Verringerte Akkumulation von S-Adenosylmethionin (SAM), und daher verringerte Ethylensynthese, durch Einführung des für die S-Adenosylmethioninhydrolase codierenden Gens. | *Cucumis melo* (Melone) |
| A-31 | CZW-3 | Asgrow (USA); Seminis Vegetable Inc. (Canada) | Gegen das Gurkenmosaikvirus (CMV), das Zucchini-Yellows Mosaic-Virus (ZYMV) und das Wassermelonenmosaikvirus (WMV) 2 resistenter Kürbis ( Curcurbita pepo); Erzeugung durch Insertieren der für das Hüllprotein (CP) codierenden Sequenzen von jedem dieser Pflanzenviren in das Wirtsgenom. | *Cucurbita pepo* (Kürbis) |
| A-32 | ZW20 | Upjohn (USA); Seminis Vegetable Inc. (Canada) | Gegen das Zucchini-Yellows Mosaic-Virus (ZYMV) und das Wassermelonenmosaik-Virus (WMV) 2 resistenter Kürbis ( Curcurbita pepo); Erzeugung durch Insertieren der für das Hüllprotein (CP) codierenden Sequenzen von jedem dieser Pflanzenpotyviren in das Wirtsgenom. | *Cucurbita pepo* (Kürbis) |
| A-33 | 66 | Florigene Pty Ltd. | Gegen Sulfonylharnstoffherbizide tolerante Nelken mit verzögerter Seneszenz; Erzeugung durch Insertieren einer verkürzten Kopie des Gens für die Aminocyclopropancyclase (ACC)-Synthase aus der Nelke zwecks Unterdrückung der Expression des endogenen nichtmodifizierten Gens, das für die normale Ethylenbiosynthese erforderlich ist. Die Toleranz für Sulfonylharnstoffherbizide wurde durch Einführung einer chlorsulfurontoleranten Version des Gens für die Acetolactatsynthase (ALS) aus Tabak erzeugt. | *Dianthus caryophyllus* (Nelke) |

(fortgesetzt)

| Nr. | Transgenes Event | Unternehmen | Beschreibung | Kulturpflanze |
|---|---|---|---|---|
| A-34 | 4,11,15,16 | Florigene Pty Ltd. | Gegen Sulfonylharnstoffherbizide tolerante Nelken mit modifizierter Farbe, die dadurch erzeugt wurden, dass zwei Anthocyaninbiosynthesegene insertiert wurden, deren Expression zu einer violett/ malvenfarbenen Färbung führt. Die Toleranz für Sulfonylharnstoffherbizide wurde durch Einführung einer chlorsulfurontoleranten Version des Gens für die Acetolactatsynthase (ALS) aus Tabak erzeugt. | *Dianthus caryophyllus* (Nelke) |
| A-35 | 959A, 988A, 1226A, 1351A, 1363A, 1400A | Florigene Pty Ltd. | Einführung von zwei Anthocyaninbiosynthesegenen, die zu einer violett/malvenfarbenen Färbung führt; Einführung einer Variante der Acetolactatsynthase (ALS). | *Dianthus caryophyllus* (Nelke) |
| A-36 | 3560.4.3.5 | | Glyphosate/ALS-Hemmer-Toleranz; WO 2008002872 | *Glycine max* L. (Sojabohne) |
| A-37 | A2704-12 | | Glufosinate-Toleranz; WO 2006/108674 | *Glycine max* L. (Sojabohne) |
| A-38 | A2704-12, A2704-21, A5547-35 | Aventis CropScience | Sojabohne mit Toleranz für Glufosinate-Ammonium-Herbizide; Erzeugung durch Insertieren eines modifizierten Gens für die Phosphinothricin-acetyltransferase (PAT) aus dem Bodenbakterium Streptomyces viridochromogenes. | *Glycine max* L. (Sojabohne) |
| A-39 | A5547-127 | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinothricin-acetyltransferase (PAT) aus dem Bodenbakterium Streptomyces viridochromogenes. | *Glycine max* L. (Sojabohne) |
| A-40 | A5547-35 | | Glufosinate-Toleranz; WO 2006/108675 | *Glycine max* L. (Sojabohne) |
| A-41 | DP-305423-1 | | Hoher Ölsäuregehalt / ALS-Hemmer-Toleranz; WO 2008/054747 | *Glycine max* L. (Sojabohne) |
| A-42 | DP356043 | Pioneer Hi-Bred International Inc. | Sojabohnen-Event mit zwei Herbizidtoleranzgenen: Glyphosate-N-acetyltransferase, die Glyphosate entgiftet, sowie eine modifizierte Acetolactat- synthase (A | *Glycine max* L. (Sojabohne) |
| A-43 | G94-1, G94-19, G168 | DuPont Canada Agricultural Products | Sojabohne mit hohem Ölsäuregehalt; Erzeugung durch Insertieren einer zweiten Kopie des Gens für eine Fettsäuredesaturase (GmFad2-1) aus der Sojabohne, was zu einem "Abschalten" des endogenen Wirtsgens führte. | *Glycine max* L. (Sojabohne) |

(fortgesetzt)

| Nr. | Transgenes Event | Unternehmen | Beschreibung | Kulturpflanze |
|---|---|---|---|---|
| A-44 | GTS 40-3-2 | Monsanto Company | Glyphosate-tolerante Sojabohnensorte; Erzeugung durch Insertieren eines modifizierten Gens für die 5-Enolpyruvylshikimat-3-phosphatsynthase (EPSPS) aus dem Bodenbakterium Agrobacterium tumefaciens. | *Glycine max* L. (Sojabohne) |
| A-45 | GU262 | Bayer CropScience (Aventis CropScience (AgrEvo)) | Sojabohne mit Toleranz für Glufosinate-Ammonium-Herbizide ; Erzeugung durch Insertieren eines modifizierten Gens für die Phosphinothricin-acetyltransferase (PAT) aus dem Bodenbakterium Streptomyces viridochromogenes. | *Glycine max* L. (Sojabohne) |
| A-46 | MON87701 | | Insektenresistenz (Cry1Ac); WO 2009064652 | *Glycine max* L. (Sojabohne) |
| A-47 | MON87705 | | veränderte Fettsäurespiegel (mittlere Ölsäure und niedrig gesättigt); WO 2010037016 | *Glycine max* L. (Sojabohne) |
| A-48 | MON87754 | | erhöhter Ölgehalt; WO 2010024976 | *Glycine max* L. (Sojabohne) |
| A-49 | MON87769 | | Stearidonsäure (SDA) enthaltendes Öl; WO 2009102873 | *Glycine max* L. (Sojabohne) |
| A-50 | MON89788 | Monsanto Company | Glyphosate-tolerante Sojabohnensorte; Erzeugung durch Insertieren eines modifizierten aroA (epsps)-Gens für die 5-Enolpyruvylshikimat-3-phosphat- synthase (EPSPS) aus dem Agrobacterium tumefaciens CP4; WO 2006130436 | *Glycine max* L. (Sojabohne) |
| A-51 | OT96-15 | Agriculture & Agri-Food Canada | Sojabohne mit niedrigem Linolensäuregehalt; Erzeugung durch traditionelle Kreuzung zwecks Einbau des neuen Merkmals aus einer natürlich vorkommenden fanl-Genmutante, die auf niedrigen Linolensäuregehalt selektriert worden war. | *Glycine max* L. (Sojabohne) |
| A-52 | W62, W98 | Bayer CropScience (Aventis CropScience (AgrEvo)) | Sojabohne mit Toleranz für Glufosinate-Ammonium-Herbizide ; Erzeugung durch Insertieren eines modifizierten Gens für die Phosphinothricin-acetyltransferase (PAT) aus dem Bodenbakterium Streptomyces hygroscopicus. | *Glycine max* L. (Sojabohne) |
| A-53 | 15985 | Monsanto Company | Insektenresistente Baumwolle; Ableitung durch Transformation der Elternsorte DP50B, die Event 531 (mit Expression des CrylAc Proteins) enthielt, mit aufgereinigter Plasmid-DNA, die das cry2Ab- Gen aus B. thuringiensis subsp. Kurstaki enthielt. | *Gossypium hirsutum* L. (Baumwolle) |
| A-54 | 1143-14A | | Insektenresistenz (Cry1Ab); WO 2006/128569 | *Gossypium hirsutum* L. (Baumwolle) |

(fortgesetzt)

| Nr. | Transgenes Event | Unternehmen | Beschreibung | Kulturpflanze |
|---|---|---|---|---|
| A-55 | 1143-51B | | Insektenresistenz (Cry1Ab); WO 2006/128570 | *Gossypium hirsutum* L. (Baumwolle) |
| A-56 | 19-51A | DuPont Canada Agricultural Products | Einführung einer Acetolactatsynthase (ALS)-Variante. | *Gossypium hirsutum* L. (Baumwolle) |
| A-57 | 281-24-236 | DOW AgroSciences LLC | Insektenresistente Baumwolle; Erzeugung durch Insertieren des cry1F-Gens aus Bacillus thuringiensisvar. aizawai. Das Gen für die PAT aus Streptomyces viridochromogenes wurde als Selektionsmarker eingeführt. | *Gossypium hirsutum* L. (Baumwolle) |
| A-58 | 3006-210-23 | DOW AgroSciences LLC | Insektenresistente Baumwolle; Erzeugung durch Insertieren des crylAc-Gens aus Bacillus thuringiensissubsp. kurstaki. Das Gen für die PAT aus Streptomyces viridochromogenes wurde als Selektionsmarker eingeführt. | *Gossypium hirsutum* L. (Baumwolle) |
| A-59 | 31807/31808 | Calgene Inc. | Insektenresistente Baumwolle mit Toleranz für das Herbizid Bromoxynil; Erzeugung durch Insertion des crylAc-Gens aus Bacillus thuringiensis und eines Gens für Nitrilase aus Klebsiella pneumoniae. | *Gossypium hirsutum* L. (Baumwolle) |
| A-60 | BXN | Calgene Inc. | Baumwolle mit Toleranz für das Herbizid Bromoxynil; Erzeugung durch Insertion eines Gens für Nitrilase aus Klebsiella pneumoniae. | *Gossypium hirsutum* L. (Baumwolle) |
| A-61 | CE43-67B | | Insektenresistenz (Cry1Ab); WO 2006/128573 | *Gossypium hirsutum* L. (Baumwolle) |
| A-62 | CE44-69D | | Insektenresistenz (Cry1Ab); WO 2006/128571 | *Gossypium hirsutum* L. (Baumwolle) |
| A-63 | CE46-02A | | Insektenresistenz (Cry1Ab); WO 2006/128572 | *Gossypium hirsutum* L. (Baumwolle) |
| A-64 | Cot102 | | Insektenresistenz (Vip3A); US 2006-130175 | *Gossypium hirsutum* L. (Baumwolle) |
| A-65 | COT102 | Syngenta Seeds, Inc. | Insektenresistente Baumwolle; Erzeugung durch Insertion des vip3A(a) Gens aus Bacillus thuringiensis AB88. Das für APH4 codierende Gen aus E. coli wurde als Selektionsmarker eingeführt. | *Gossypium hirsutum* L. (Baumwolle) |
| A-66 | COT202 | | Insektenresistenz (VIP3A); US2009181399 | *Gossypium hirsutum* L. (Baumwolle) |
| A-67 | Cot202 | | Insektenresistenz (VIP3); US 2007-067868 | *Gossypium hirsutum* L. (Baumwolle) |

(fortgesetzt)

| Nr. | Transgenes Event | Unternehmen | Beschreibung | Kulturpflanze |
|---|---|---|---|---|
| A-68 | DAS-21Ø23-5 x DAS-24236-5 | DOW AgroSciences LLC | WideStrike™ , eine Baumwolle mit Insektenresistenzkombination; Ableitung durch traditionelles Kreuzen der Elternlinien 3006-210-23 (OECD-Bezeichnung: DAS-21Ø23-5) und 281-24-236 (OECD-Bezeichung: DAS-24236-5). | *Gossypium hirsutum* L. (Baumwolle) |
| A-69 | DAS-21Ø23-5 x DAS-24236-5 x MON88913 | DOW AgroSciences LLC und Pioneer Hi-Bred International Inc. | Baumwolle mit einer Kombination von Insektenresistenz und Glyphosate-Toleranz; Erzeugung durch traditionelles Kreuzen von WideStrike-Baumwolle (OECD-Bezeichnung: DAS-21Ø23-5 x DAS-24236-5) mit MON88913, bekannt unter der Bezeichnung RoundupReady Flex (OECD-Bezeichnung: MON-88913-8). | *Gossypium hirsutum* L. (Baumwolle) |
| A-70 | DAS-21Ø23-5 x DAS-24236-5 x MON-Ø1445-2 | DOW AgroSciences LLC | WideStrike™ /Roundup Ready®-Baumwolle, eine Baumwolle mit einer Kombination von Insektenresistenz und Glyphosate-Toleranz; Ableitung durch traditionelles Kreuzen von WideStrike-Baumwolle (OECD-Bezeichnung: DAS-21Ø23-5 x DAS-24236-5) mit MON1445 (OECD-Bezeichnung: MON-Ø1445-2). | *Gossypium hirsutum* L. (Baumwolle) |
| A-71 | EE-GH3 | | Glyphosate-Toleranz; WO 2007/017186 | *Gossypium hirsutum* L. (Baumwolle) |
| A-72 | EE-GH5 | | Insektenresistenz (Cry1Ab); WO 2008/122406 | *Gossypium hirsutum* L. (Baumwolle) |
| A-73 | EE-GH6 | | Insektenresistenz (cry2Ae); WO2008151780 | *Gossypium hirsutum* L. (Baumwolle) |
| A-74 | event 281-24-236 | | Insektenresistenz (Cry1F); WO 2005/103266 | *Gossypium hirsutum* L. (Baumwolle) |
| A-75 | event3006-210-23 | | Insektenresistenz (Cry1Ac); WO 2005/103266 | *Gossypium hirsutum* L. (Baumwolle) |
| A-76 | GBH614 | Bayer CropScience (Aventis CropScience (AgrEvo)) | Baumwolle mit Toleranz für das Herbizid Glyphosate; Erzeugung durch Insertieren des 2MEPSPS-Gens in die Sorte Coker312 mittels Agrobacterium unter der Kontrolle von Ph4a748At und TpotpC. | *Gossypium hirsutum* L. (Baumwolle) |
| A-77 | LLCotton25 | Bayer CropScience (Aventis CropScience (AgrEvo)) | Baumwolle mit Toleranz gegen das Herbizid Glufosinate-Ammonium; Erzeugung durch Insertieren eines modifizierten Gens für die Phosphinothricinacetyltransferase (PAT) aus dem Bodenbakterium Streptomyces hygroscopicus; WO 2003013224 | *Gossypium hirsutum* L. (Baumwolle) |

(fortgesetzt)

| Nr. | Transgenes Event | Unternehmen | Beschreibung | Kulturpflanze |
|---|---|---|---|---|
| A-78 | LLCotton25 x MON15985 | Bayer CropScience (Aventis CropScience (AgrEvo)) | Baumwolle mit einer Kombination von Herbizidtoleranz und Insektenresistenz, bei der die Toleranz für das Herbizid Glufosinate-Ammonium aus LLCotton25 (OECD-Bezeichnung: ACS-GHØØ1-3) mit Resistenz gegen Insekten aus MON15985 (OECD-Bezeichnung: MON-15985-7) kombiniert ist. | *Gossypium hirsutum* L. (Baumwolle) |
| A-79 | MON 15985 | | Insektenresistenz (Cry1A/Cry2Ab); US 2004-250317 | *Gossypium hirsutum* L. (Baumwolle) |
| A-80 | MON1445/169 8 | Monsanto Company | Baumwolle mit Toleranz für das Herbizid Glyphosate; Erzeugung durch Insertieren einer natürlichen Glyphosattoleranten Form des Enzyms 5-Enolpyruvylshikimat-3-phosphatsynthase (EPSPS) aus dem A. tumefaciens-Stamm CP4. | *Gossypium hirsutum* L. (Baumwolle) |
| A-81 | MON15985 x MON88913 | Monsanto Company | Baumwolle mit einer Kombination von Insektenresistenz und Glyphosate-Toleranz; Erzeugung durch traditionelles Kreuzen der Elternlinien MON88913 (OECD-Bezeichnung: MON-88913-8) und 15985 (OECD-Bezeichnung: MON-15985-7). Glyphosate-Toleranz stammt von der Linie MON88913, die zwei Gene enthält, die für das Enzym 5-Enolypyruvylshikimat-3-phosphatsynthase (EPSPS) aus dem Agrobacterium tumefaciens-Stamm CP4 codieren. Die Insektenresistenz stammt von der Linie MON15985, die durch Transformation der Elternsorte DP50B, die Event 531 (Expression des CrylAc-Proteins) enthielt, mit aufgereinigter Plasmid-DNA, die das cry2Ab-Gen aus B. thuringiensis subsp. kurstaki enthielt, erzeugt wurde. | *Gossypium hirsutum* L. (Baumwolle) |
| A-82 | MON-15985-7 x MON-Ø1445-2 | Monsanto Company | Baumwolle mit einer Kombination von Insektenresistenz und Herbizidtoleranz; Erzeugung durch traditionelles Kreuzen der Elternlinien 15985 (OECD-Bezeichnung: MON-15985-7) und MON-1445 (OECD-Bezeichnung: MON-Ø1445-2). | *Gossypium hirsutum* L. (Baumwolle) |
| A-83 | MON531/757/ 1076 | Monsanto Company | Insektenresistente Baumwolle; Erzeugung durch Insertieren des crylAc-Gens aus Bacillus thuringiensis subsp. kurstaki HD-73 (B.t.k.). | *Gossypium hirsutum* L. (Baumwolle) |
| A-84 | MON88913 | Monsanto Company | Baumwolle mit Toleranz für das Herbizid Glyphosate; Erzeugung durch Insertieren von zwei Genen für das Enzym 5-Enolypyruvylshikimat-3-phosphatsynthase (EPSPS) aus dem Agrobacterium tumefaciens-Stamm CP4; WO 2004/072235 | *Gossypium hirsutum* L. (Baumwolle) |

(fortgesetzt)

| Nr. | Transgenes Event | Unternehmen | Beschreibung | Kulturpflanze |
|---|---|---|---|---|
| A-85 | MON-ØØ531-6 x MON-Ø1445-2 | Monsanto Company | Baumwolle mit einer Kombination von Insektenresistenz und Herbizidtoleranz; Erzeugung durch traditionelles Kreuzen der Elternlinien MON531 (OECD-Bezeichnung: MON-ØØ531-6) und MON-1445 (OECD-Bezeichnung: MON-Ø1445-2). | *Gossypium hirsutum* L. (Baumwolle) |
| A-86 | PV-GHGT07 (1445) | | Glyphosate-Toleranz; US 2004-148666 | *Gossypium hirsutum* L. (Baumwolle) |
| A-87 | T304-40 | | Insektenresistenz (Cry1Ab); WO2008/122406 | *Gossypium hirsutum* L. (Baumwolle) |
| A-88 | T342-142 | | Insektenresistenz (Cry1Ab); WO 2006/128568 | *Gossypium hirsutum* L. (Baumwolle) |
| A-89 | X81359 | BASF Inc. | Toleranz für Imidazolinonherbizide durch Selektieren auf eine natürlich vorkommende Mutante. | *Helianthus annuus* (Sonnenblume) |
| A-90 | RH44 | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Lens culinaris* (Linse) |
| A-91 | FP967 | University of Saskatchewan, Crop Dev. Centre | Eine Acetolactatsynthase (ALS)-Variante wurde von einer chlorsulfurontoleranten Linie von A. thaliana erhalten und zur Transformation von Flachs eingesetzt. | *Linum usitatissimum* L. (Flachs, Lein) |
| A-92 | 5345 | Monsanto Company | Resistenz gegen Schadlepidopteren durch Einführen des cry1Ac-Gens aus Bacillus thuringiensis subsp. Kurstaki. | *Lycopersicon esculentum* ( Tomate) |
| A-93 | 8338 | Monsanto Company | Einführung einer Gensequenz, die für das Enzym 1-Aminocyclopropan-1-carbonsäuredeaminase (ACCd) codiert, das die Vorstufe des Fruchtreifungshormons Ethylen metabolisiert. | *Lycopersicon esculentum* ( Tomate) |
| A-94 | 1345-4 | DNA Plant Technology Corporation | Tomaten mit verzögerter Reife wurden dadurch erzeugt, dass man eine zusätzliche Kopie eines verkürzten Gens für die 1-Aminocyclopropan-1-carbonsäure (ACC) -Synthase insertierte, was zur Herunterregulation der endogenen ACC-Synthase und zu einer verringerten Ethylenakkumulation führte. | *Lycopersicon esculentum* ( Tomate) |
| A-95 | 35 IN | Agritope Inc. | Einführung einer Gensequenz, die für das Enzym S-Adenosylmethioninhydrolase codiert, das die Vorstufe des Fruchtreifungshormons Ethylen metabolisiert. | *Lycopersicon esculentum* ( Tomate) |

(fortgesetzt)

| Nr. | Transgenes Event | Unternehmen | Beschreibung | Kulturpflanze |
|---|---|---|---|---|
| A-96 | B, Da, F | Zeneca Seeds | Tomaten mit verzögertem Weichwerden wurden dadurch erzeugt, dass man eine verkürzte Version des Gens für die Polygalacturonase (PG) in sense- oder antisense-Orientierung insertierte, um die Expression des endogenen PG-Gens zu reduzieren und so den Pektinabbau zu reduzieren. | *Lycopersicon esculentum* ( Tomate) |
| A-97 | FLAVR SAVR | Calgene Inc. | Tomaten mit verzögertem Weichwerden wurden dadurch erzeugt, dass man eine zusätzliche Kopie des Gens für die Polygalacturonase (PG) in antisense-Orientierung insertierte, um die Expression des endogenen PG-Gens zu reduzieren und so den Pektinabbau zu reduzieren. | *Lycopersicon esculentum* ( Tomate) |
| A-98 | J101, J163 | Monsanto Company und Forage Genetics International | Eine für das Herbizid Glyphosate tolerante Luzerne wurde dadurch erzeugt, dass man ein Gen für das Enzym 5-Enolypyruvylshikimat-3-phosphatsynthase (EPSPS) aus dem Agrobacterium tumefaciens-Stamm CP4 insertierte. | *Medicago sativa* (Luzerne) |
| A-99 | C/F/93/08-02 | Societe National d'Exploitation des Tabacs et Allumettes | Toleranz für die Herbizide Bromoxynil und Ioxynil durch Einbau des Nitrilasegens aus Klebsiella pneumoniae. | *Nicotiana tabacum* L. (Tabak) |
| A-100 | Vector 21-41 | Vector Tobacco Inc. | Reduzierter Nikotingehalt durch Einführung einer zweiten Kopie der Chinolinsäurephosphoribosyltransferase (QTPase) aus dem Tabak in antisense-Orientierung. Das für NPTII codierende Gen aus E. coli wurde als Selektionsmarker eingeführt, um Transformanten zu identifizieren. | *Nicotiana tabacum* L. (Tabak) |
| A-101 | CL121, CL141, CFX51 | BASF Inc. | Toleranz für das Iimidazolinonherbizid Imazethapyr wurde durch chemische Mutagenese des Enzyms Acetolactatsynthase (ALS) mittels Ethylmethansulfonat (EMS) induziert. | *Oryza sativa* (Reis) |
| A-102 | GAT-OS2 | | Glufosinate-Toleranz; WO 01/83818 | *Oryza sativa* (Reis) |
| A-103 | GAT-OS3 | | Glufosinate-Toleranz; US 2008-289060 | *Oryza sativa* (Reis) |
| A-104 | IMINTA-1, IMINTA-4 | BASF Inc. | Toleranz für Imidazolinonherbizide wurde durch chemische Mutagenese des Enzyms Acetolactatsynthase (ALS) mittels Natriumazid induziert. | *Oryza sativa* (Reis) |

(fortgesetzt)

| Nr. | Transgenes Event | Unternehmen | Beschreibung | Kulturpflanze |
|---|---|---|---|---|
| A-105 | LLRICE06, LLRICE62 | Aventis CropScience | Für das Herbizid Glufosinate-Ammonium toleranter Reis; Erzeugung durch Insertieren eines modifizierten Gens für die Phosphinothricinacetyltransferase (PAT) aus dem Bodenbakterium Streptomyces hygroscopicus). | *Oryza sativa* (Reis) |
| A-106 | LLRICE601 | Bayer CropScience (Aventis CropScience (AgrEvo)) | Für das Herbizid Glufosinate-Ammonium toleranter Reis; Erzeugung durch Insertieren eines modifizierten Gens für die Phosphinothricinacetyltransferase (PAT) aus dem Bodenbakterium Streptomyces hygroscopicus). | *Oryza sativa* (Reis) |
| A-107 | PE-7 | | Insektenresistenz (Cry1Ac); WO 2008/114282 | *Oryza sativa* (Reis) |
| A-108 | PWC16 | BASF Inc. | Toleranz für das Imidazolinon-Herbizid Imazethapyr wurde durch chemische Mutagenese des Enzyms Acetolactatsynthase (ALS) mittels Ethylmethansulfonat (EMS) induziert. | *Oryza sativa* (Reis) |
| A-109 | TT51 | | Insektenresistenz (Cry1Ab/Cry1Ac); CN184065 | *Oryza sativa* (Reis) |
| A-110 | C5 | United States Department of Agriculture Agricultural Research Service | Pflaumenbaum mit Resistenz gegen das Plum-Pox-Virus (PPV), Herstellung durch Agrobacterium-vermittelte Transformation mit einem Hüllproteingen (CP) des Virus. | *Prunus domestica* (Pflaume) |
| | EH92-527 | BASF Plant Science | Erntegut-Zusammensetzung; Amflora; nur für die EU gültige Bezeichnung: BPS-25271-9 | |
| A-111 | ATBT04-6, ATBT04-27, ATBT04-30, ATBT04-31, ATBT04-36, SPBT02-5, SPBT02-7 | Monsanto Company | Kartoffelkäferresistente Kartoffeln, Erzeugung durch Insertieren des cry3A-Gens aus Bacillus thuringiensis (subsp. tenebrionis). | *Solanum tuberosum* L. (Kartoffel) |
| A-112 | BT6, BT10, BT12, BT16, BT17, BT18, BT23 | Monsanto Company | Kartoffelkäferresistente Kartoffeln, Erzeugung durch Insertieren des cry3A-Gens aus Bacillus thuringiensis (subsp. tenebrionis). | *Solanum tuberosum* L. (Kartoffel) |
| A-113 | RBMT15-101, SEMT15-02, SEMT15-15 | Monsanto Company | Kartoffeln mit Resistenz gegen den Kartoffelkäfer und das Y-Virus der Kartoffel (PVY); Erzeugung durch Insertieren des cry3A-Gens aus Bacillus thuringiensis (subsp. tenebrionis) und des PVY-Gens für das Hüllprotein. | *Solanum tuberosum* L. (Kartoffel) |

(fortgesetzt)

| Nr. | Transgenes Event | Unternehmen | Beschreibung | Kulturpflanze |
|---|---|---|---|---|
| A-114 | RBMT21-129, RBMT21-350, RBMT22-082 | Monsanto Company | Kartoffeln mit Resistenz gegen den Kartoffelkäfer und das Kartoffel-Blattrollvirus (PLRV); Erzeugung durch Insertieren des cry3A-Gens aus Bacillus thuringiensis (subsp. tenebrionis) und des PLRV-Gens für Replikase. | *Solanum tuberosum* L. (Kartoffel) |
| A-115 | AP205CL | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-116 | AP602CL | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-117 | BW255-2, BW238-3 | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-118 | BW7 | BASF Inc. | Toleranz gegenüber Imidazolinonherbiziden, induziert durch chemische Mutagenese des Gens für die Acetohydroxysäuresynthase (AHAS) unter Verwendung von Natriumazid. | *Triticum aestivum* (Weizen) |
| A-119 | Event 1 | | Fusarium-Resistenz (Trichothecen-3-O-cetyltransferase); CA 2561992 | *Triticum aestivum* (Weizen) |
| A-120 | JOPLIN1 | | Krankheits-(Pilz-)Resistenz (Trichothecen-3-O-acetyltransferase); US 2008064032 | *Triticum aestivum* (Weizen) |
| A-121 | MON71800 | Monsanto Company | Glyphosatetolerante Weizensorte; Erzeugung durch Insertieren eines modifizierten Gens für die 5-Enolpyruvylshikimat-3-phosphatsynthase (EPSPS) aus dem Bodenbakterium Agrobacterium tumefaciens Stamm CP4. | *Triticum aestivum* (Weizen) |
| A-122 | SWP965001 | Cyanamid Crop Protection | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-123 | Teal 11A | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |

(fortgesetzt)

| Nr. | Transgenes Event | Unternehmen | Beschreibung | Kulturpflanze |
|---|---|---|---|---|
| A-124 | 176 | Syngenta Seeds, Inc. | Insektenresistenter Mais; Erzeugung durch Insertieren des crylAb-Gens aus Bacillus thuringiensis subsp. kurstaki. Die genetische Modifikation vermittelt eine Resistenz gegen Schädigung durch den Maiszünsler. | *Zea mays* L. (Mais) |
| A-125 | 3272 | | Selbstverarbeitender Mais (alpha-Amylase); US 2006-230473 | *Zea mays* L. (Mais) |
| A-126 | 3751IR | Pioneer Hi-Bred International Inc. | Selektion von somaklonalen Varianten durch Embryokultur auf imidazolinonhaltigen Medien. | *Zea mays* L. (Mais) |
| A-127 | 676,678,680 | Pioneer Hi-Bred International Inc. | Pollensteriler Mais mit Toleranz für das Herbizid Glufosinate-Ammonium; Erzeugung durch Insertieren von Genen für die DNA-Adeninmethylase und die Phosphinothricinacetyltransferase (PAT) aus Escherichia coli bzw. Streptomyces viridochromogenes. | *Zea mays* L. (Mais) |
| A-128 | ACS-ZMØØ3-2 x MON-ØØ81Ø-6 | Bayer CropScience (Aventis CropScience (AgrEvo)) | Maishybrid mit einer Kombination aus Insektenresistenz und Herbizidtoleranz; Ableitung durch traditionelles Kreuzen der Elternlinien T25 (OECD-Bezeichnung: ACS-ZMØØ3-2) und MON810 (OECD-Bezeichnung: MON-ØØ81Ø-6). | *Zea mays* L. (Mais) |
| A-129 | B16 | | Glufosinate-Resistenz; US 2003-126634 | *Zea mays* L. (Mais) |
| A-130 | B16 (DLL25) | Dekalb Genetics Corporation | Mais mit Toleranz für das Herbizid Glufosinate-Ammonium; Erzeugung durch Insertieren des Gens für die Phosphinothricinacetyltransferase (PAT) aus Streptomyces hygroscopicus. | *Zea mays* L. (Mais) |
| A-131 | BT11 (X4334CBR, X4734CBR) | Syngenta Seeds, Inc. | Insektenresistenter und herbizidtoleranter Mais; Erzeugung durch Insertieren des crylAb-Gens aus Bacillus thuringiensis subsp. kurstaki, und des Gens für die Phosphinothricin-N-acetyltransferase (PAT) aus S. viridochromogenes. | *Zea mays* L. (Mais) |

(fortgesetzt)

| Nr. | Transgenes Event | Unternehmen | Beschreibung | Kulturpflanze |
|---|---|---|---|---|
| A-132 | BT11 x MIR604 | Syngenta Seeds, Inc. | Mais mit einer Kombination von Insektenresistenz und Herbizidtoleranz; Erzeugung durch traditionelles Kreuzen der Elternlinien BT11 (nur für die OECD gültige Bezeichnung: SYN-BT∅11-1) und MIR604 (nur für die OECD gültige Bezeichnung: SYN-IR6∅5-5). Die Resistenz gegen den Maiszünsler und die Toleranz für das Herbizid Glufosinate-Ammonium (Liberty) stammt von BT11, die das cry1Ab-Gen aus Bacillus thuringiensis subsp. kurstaki enthält, und das Gen für die Phosphinothricin-N-acetyltransferase (PAT) aus S. viridochromogenes. Die Resistenz gegen den Maiswurzelbohrer stammt von MIR604, die das mcry3A-Gen aus Bacillus thuringiensis enthält. | *Zea mays* L. (Mais) |
| A-133 | BT11 x MIR604 x GA21 | Syngenta Seeds, Inc. | Mais mit einer Kombination von Insektenresistenz und Herbizidtoleranz; Erzeugung durch traditionelles Kreuzen der Elternlinien BT11 (nur für die OECD gültige Bezeichnung: SYN-BTØ11-1), MIR604 (nur für die OECD gültige Bezeichnung: SYN-IR6Ø5-5) und GA21 (nur für die OECD gültige Bezeichnung: MON- ØØØ21-9). Die Resistenz gegen den Maiszünsler und die Toleranz für das Herbizid Glufosinte-Ammonium (Liberty) stammt von BT11, die das cry1Ab-Gen aus Bacillus thuringiensis subsp. kurstaki enthält, und das Gen für die Phosphinothricin-N-acetyltransferase (PAT) aus S. viridochromogenes. Die Resistenz gegen den Maiswurzelbohrer stammt von MIR604, die das mcry3A-Gen aus Bacillus thuringiensis enthält. Die Toleranz für das Herbizid Glyphosate stammt von GA21, die ein modifiziertes EPSPS-Gen aus Mais enthält. | *Zea mays* L. (Mais) |
| A-134 | CBH-351 | Aventis CropScience | Mais mit Insektenresistenz und Toleranz für das Herbizid Glufosinate-Ammonium; Entwicklung durch Insertieren des Gens für das Cry9C-Protein aus Bacillus thuringiensis subsp. tolworthi und des Gens für die Phosphinothricinacetyltransferase (PAT) aus Streptomyces hygroscopicus. | *Zea mays* L. (Mais) |
| A-135 | DAS-06275-8 | DOW AgroSciences LLC | Maissorte mit Resistenz gegen Lepidoptereninsekten und Toleranz für das Herbizid Glufosinate-Ammonium; Erzeugung durch Insertieren des cry1F-Gens aus Bacillus thuringiensis var. aizawai und der Phosphinothricinacetyltransferase (PAT) aus Streptomyces hygroscopicus. | *Zea mays* L. (Mais) |

(fortgesetzt)

| Nr. | Transgenes Event | Unternehmen | Beschreibung | Kulturpflanze |
|---|---|---|---|---|
| A-136 | DAS-59122-7 | DOW AgroSciences LLC und Pioneer Hi-Bred International Inc. | Mais mit Resistenz gegen den Maiswurzelbohrer; Erzeugung durch Insertieren des cry34Ab1- und des cry35Ab1-Gens aus dem Bacillus thuringiensis-Stamm PS149B1. Das für PAT codierende Gen aus Streptomyces viridochromogenes wurde als Selektionsmarker eingeführt; US 2006-070139 | *Zea mays* L. (Mais) |
| A-137 | DAS-59122-7 x NK603 | DOW AgroSciences LLC und Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) mit NK603 (nur für die OECD gültige Bezeichnung: MON-ØØ6Ø3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Toleranz für das Herbizid Glyphosate stammt von NK603. | *Zea mays* L. (Mais) |
| A-138 | DAS-59122-7 x TC1507 x NK603 | DOW AgroSciences LLC und Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) und TC1507 (nur für die OECD gültige Bezeichnung: DAS-Ø15Ø7-1) mit NK603 (nur für die OECD gültige Bezeichnung: MON-ØØ6Ø3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Lepidopterenresistenz und die Toleranz für das Herbizid Glufosinate-Ammonium stammen von TC1507. Die Toleranz für das Herbizid Glyphosate stammt von NK603. | *Zea mays* L. (Mais) |
| A-139 | DAS-Ø15Ø7-1 x MON-ØØ6Ø3-6 | DOW AgroSciences LLC | Mais mit einer Kombination von Insektenresistenz und Herbizidtoleranz; Erzeugung durch traditionelles Kreuzen der Elternlinien 1507 (OECD-Bezeichnung: DAS-Ø15Ø7-1) und NK603 (OECD-Bezeichnung: MON-ØØ6Ø3-6). | *Zea mays* L. (Mais) |
| A-140 | DBT418 | Dekalb Genetics Corporation | Mais mit Insektenresistenz und Toleranz für das Herbizid Glufosinate-Ammonium; Entwicklung durch Insertieren von Genen für das CrylAC-Protein aus Bacillus thuringiensis subsp kurstaki und der Phosphinothricinacetyltransferase (PAT) aus Streptomyces hygroscopicus. | *Zea mays* L. (Mais) |

(fortgesetzt)

| Nr. | Transgenes Event | Unternehmen | Beschreibung | Kulturpflanze |
|---|---|---|---|---|
| A-141 | DK404SR | BASF Inc. | Somaklonale Varianten mit einer modifizierten Acetyl-CoA-Carboxylase (ACCase) wurden durch Embryokultur auf mit Sethoxydim angereichertem Medium selektiert. | *Zea mays* L. (Mais) |
| A-142 | DP-098140-6 | | Glyphosate-Toleranz / ALS-Hemmer-Toleranz; WO 2008/112019 | *Zea mays* L. (Mais) |
| A-143 | D-Ø9814Ø-6 (Event 98140) | Pioneer Hi-Bred International Inc. | Die Maislinie 98140 wurde genetisch modifiziert, das GAT4621-Protein (Glyphosateacetyltransferase) und ZM-HRA-Protein (modifizierte Mais-Version einer Acetolactatsynthase) zu exprimieren. Das GAT4621-Protein, das von dem gat4621-Gen codiert wird, vermittelt Toleranz für Glyphosate-enthaltende Herbizide durch Acetylierung von Glyphosate, wodurch dieses nichtphytotoxisch wird. Das ZM-HRA-Protein, das von dem zm-hra-Gen codiert wird, vermittelt eine Toleranz für die Herbizidklasse der ALS-Hemmer. | *Zea mays* L. (Mais) |
| A-144 | Event 3272 | Syngenta Seeds, Inc. | Maislinie, die ein hitzestabiles Alpha-Amylasegen amy797E für die Ethanolproduktion mit dem Trockenvermahlungsverfahren exprimiert. Das Phosphomannoseisomerase-Gen aus E. coli wurde als Selektionsmarker eingesetzt. | *Zea mays* L. (Mais) |
| A-145 | EXP1910IT | Syngenta Seeds, Inc. (früher Zeneca Seeds) | Eine Toleranz für das Imidazolinonherbizid Imazethapyr wurde durch chemische Mutagenese des Enzyms Acetolactatsynthase (ALS) mit Hilfe von Ethylmethansulfonat (EMS) induziert. | *Zea mays* L. (Mais) |
| A-146 | FI117 | | Glyphosate-Resistenz; US 6,040,497 | *Zea mays* L. (Mais) |
| A-147 | GA21 | Monsanto Company | Eine modifizierte 5-Enolpyruvylshikimat-3-phosphatsynthase (EPSPS), ein Enzym, das am Shikimat-Biosyntheseweg für die Bildung der aromatischen Aminosäuren beteiligt ist, wurde durch Beschuß mit der Genkanone induziert. | *Zea mays* L. (Mais) |
| A-148 | GAT-ZM1 | | Glufosinate-Toleranz; WO 01/51654 | *Zea mays* L. (Mais) |
| A-149 | GG25 | | Glyphosate-Resistenz; US 6,040,497 | *Zea mays* L. (Mais) |
| A-150 | GJ11 | | Glyphosate-Resistenz; US 6,040,497 | *Zea mays* L. (Mais) |
| A-151 | IT | Pioneer Hi-Bred International Inc. | Eine Toleranz für das Imidazolinonherbizid Imazethapyr wurde durch in-vitro-Selektion von somaklonalen Varianten erhalten. | *Zea mays* L. (Mais) |

(fortgesetzt)

| Nr. | Transgenes Event | Unternehmen | Beschreibung | Kulturpflanze |
|---|---|---|---|---|
| A-152 | LY038 | Monsanto Company | Veränderte Aminosäurezusammensetzung, insbesondere erhöhte Lysingehalte, durch Einführung des cordapA-Gens aus Corynebacterium glutamicum, das für das Enzym Dihydrodipicolinatsynthase (cDHDPS) codiert; US 7,157,281 | *Zea mays* L. (Mais) |
| A-153 | MIR 162 | | Insektenresistenz; WO 2007142840 | *Zea mays* L. (Mais) |
| A-154 | MIR604 | Syngenta Seeds, Inc. | Ein gegen den Maiswurzelbohrer resistenter Mais wurde durch Transformation mit einem modifizierten cry3A-Gen erzeugt. Das Phosphomannoseisomerase-Gen aus E.coli wurde als Selektionsmarker eingesetzt; (Cry3a055); EP 1 737 290 | *Zea mays* L. (Mais) |
| A-155 | MIR604 x GA21 | Syngenta Seeds, Inc. | Mais mit einer Kombination von Insektenresistenz und Herbizidtoleranz; Erzeugen durch traditionelles Kreuzen der Elternlinien MIR604 (nur für die OECD gültige Bezeichnung: SYN-IR6Ø5-5) und GA21 (nur für die OECD gültige Bezeichnung: MON-ØØØ21-9). Die Resistenz gegen den Maiswurzelbohrer stammt von MIR604, die mcry3A-Gen aus Bacillus thuringiensis enthält. Die Toleranz für das Herbizid Glyphosate stammt von GA21. | *Zea mays* L. (Mais) |
| A-156 | MON80100 | Monsanto Company | Insektenresistenter Mais; Erzeugung durch Insertieren des crylAb-Gens aus Bacillus thuringiensis subsp. kurstaki. Die genetische Modifikation vermittelt Resistenz gegen Befall durch den Maiszünsler. | *Zea mays* L. (Mais) |
| A-157 | MON802 | Monsanto Company | Mais mit Insektenresistenz und Toleranz für das Herbizid Glyphosate; Erzeugung durch Insertieren der Gene für das CrylAb-Protein aus Bacillus thuringiensis und die 5-Enolpyruvylshikimat-3-posphatsynthase (EPSPS) aus dem A. tumefaciens-Stamm CP4. | *Zea mays* L. (Mais) |
| A-158 | MON809 | Pioneer Hi-Bred International Inc. | Resistenz gegen den Maiszünsler (Ostrinia nubilalis) durch Einführen eines synthetischen cry1Ab-Gens. Glyphosate-Resistenz durch Einführen der bakteriellen Version eines pflanzlichen Enzyms, der 5-Enolpyruvylshikimat-3-phosphatsynthase (EPSPS). | *Zea mays* L. (Mais) |
| A-159 | MON810 | Monsanto Company | Insektenresistenter Mais; Erzeugung durch Insertieren einer verkürzten Form des crylAb-Gens aus Bacillus thuringiensis subsp. kurstaki HD-1. Die genetische Modifikation vermittelt eine Resistenz gegen Befall durch den Maiszünsler; US 2004-180373 | *Zea mays* L. (Mais) |

(fortgesetzt)

| Nr. | Transgenes Event | Unternehmen | Beschreibung | Kulturpflanze |
|---|---|---|---|---|
| A-160 | MON810 x MON88017 | Monsanto Company | Mais mit einer Kombination von Insektenresistenz und Glyphosate-Toleranz; Erzeugung durch traditionelles Kreuzen der Elternlinien MON810 (OECD-Bezeichnung: MON-ØØ81Ø-6) und MON88017 (OECD-Bezeichnung: MON-88Ø17-3). Die Resistenz gegen den Maiszünsler stammt von einer verkürzten Form des crylAb-Gens aus Bacillus thuringiensis subsp. kurstaki HD-1, die in MON810 vorliegt. Die Resistenz gegen den Maiswurzelbohrer stammt vom cry3Bb1-Gen aus Bacillus thuringiensis subspecies kumamotoensis, Stamm EG4691, das in MON88017 vorliegt. Die Toleranz für Glyphosate stammt von einem Gen für die 5-Enolpyruvylshikimat-3-phosphatsynthase (EPSPS) aus dem Agrobacterium tumefaciens-Stamm CP4, das in MON88017 vorliegt. | *Zea mays* L. (Mais) |
| A-161 | MON832 | Monsanto Company | Einführung der Glyphosate-Oxidase (GOX) und einer modifizierten 5-Enolpyruvylshikimat-3-phosphatsynthase (EPSPS), eines Enzyms, das am Shikimat-Biosyntheseweg für die Bildung der aromatischen Aminosäuren beteiligt ist, durch Beschuß mit der Genkanone. | *Zea mays* L. (Mais) |
| A-162 | MON863 | Monsanto Company | Mais mit Resistenz gegen den Maiswurzelbohrer; Erzeugung durch Insertieren des cry3Bb1-Gens aus Bacillus thuringiensis subsp. kumamotoensis. | *Zea mays* L. (Mais) |
| A-163 | MON87460 | | Dürretoleranz; Wassermangeltoleranz; WO 2009/111263 | *Zea mays* L. (Mais) |
| A-164 | MON88017 | Monsanto Company | Mais mit Resistenz gegen den Maiswurzelbohrer; Erzeugung durch Insertieren des cry3Bb1-Gens aus Bacillus thuringiensis subsp. Kumamotoensis, Stamm EG4691. Eine Toleranz für Glyphosate wurde dadurch erhalten, dass man ein Gen für die 5-Enolpyruvylshikimat-3-Phosphatsynthase (EPSPS) aus dem Agrobacterium tumefaciens-Stamm CP4 insertierte; WO 2005059103 | *Zea mays* L. (Mais) |
| A-165 | MON89034 | Monsanto Company | Mais-Event, das zwei unterschiedliche insektizide Proteine aus Bacillus thuringiensis, die Resistenz gegen verschiedene Schadlepigopteren vermittelt, exprimiert; Insektenresistenz (Lipidoptera -Cry1A.105-Cry2Ab); WO 2007140256 | *Zea mays* L. (Mais) |

(fortgesetzt)

| Nr. | Transgenes Event | Unternehmen | Beschreibung | Kulturpflanze |
|---|---|---|---|---|
| A-166 | MON89034 x MON88017 | Monsanto Company | Mais mit einer Kombination von Insektenresistenz und Glyphosate-Toleranz; Erzeugung durch traditionelles Kreuzen der Elternlinien MON89034 (OECD-Bezeichnung: MON-89 Ø34-3) und MON88017 (OECD-Bezeichnung: MON-88Ø17-3). Die Lepiopterenrresistenz stammt von zwei cry-Genen, die in MON89043 vorliegen. Die Resistenz gegen den Maiswurzelbohrer stammt von einem einzelnen cry-Gen, und die Toleranz für Glyphosate stammt von einem Gen für die 5-Enolpyruvylshikimat-3-phosphatsynthase (EPSPS) aus dem Agrobacterium tumefaciens, das in MON88017 vorliegt. | *Zea mays* L. (Mais) |
| A-167 | MON-ØØ6Ø3-6 x MON-ØØ81Ø-6 | Monsanto Company | Maishybrid mit einer Kombination von Insektenresistenz und Herbizidtoleranz, Erzeugung durch traditionelles Kreuzen der Elternlinien NK603 (OECD-Bezeichnung: MON-ØØ6Ø3-6) und MON810 (OECD-Bezeichnung: MON-ØØ81Ø-6). | *Zea mays* L. (Mais) |
| A-168 | MON-ØØ81Ø-6 x LY038 | Monsanto Company | Mais mit einer Kombination von Insektenresistenz und erhöhtem Lysingehalt, Erzeugung durch traditionelles Kreuzen der Elternlinien MON810 (OECD-Bezeichnung: MON-ØØ81Ø-6) und LY038 (OEC-Bezeichnung: REN-ØØØ38-3). | *Zea mays* L. (Mais) |
| A-169 | MON-ØØ863-5 x MON-ØØ6Ø3-6 | Monsanto Company | Maishybrid mit einer Kombination von Insektenresistenz und Herbizidtoleranz, Erzeugung durch traditionelles Kreuzen der Elternlinien MON863 (OECD-Bezeichnung: MON-ØØ863-5) und NK603 (OECD-Bezeichnung: MON-ØØ6Ø3-6). | *Zea mays* L. (Mais) |
| A-170 | MON-ØØ863-5 x MON-ØØ81Ø-6 | Monsanto Company | Maishybrid mit einer Insektenresistenzkombination; Erzeugung durch traditionelles Kreuzen der Elternlinien MON863 (OECD-Bezeichnung: MON-ØØ863-5) und MON810 (OECD-Bezeichnung: MON-ØØ81Ø-6) | *Zea mays* L. (Mais) |
| A-171 | MON-ØØ863-5 x MON-ØØ81Ø-6 x MON-ØØ6Ø3-6 | Monsanto Company | Maishybrid mit einer Kombination von Insektenresistenz und Herbizidtoleranz, Erzeugung durch traditionelles Kreuzen des kombinationshaltigen Hybriden MON-ØØ863-5 x MON-ØØ81Ø-6 und NK603 (OECD-Bezeichnung: MON-ØØ6Ø3-6). | *Zea mays* L. (Mais) |

(fortgesetzt)

| Nr. | Transgenes Event | Unternehmen | Beschreibung | Kulturpflanze |
|---|---|---|---|---|
| A-172 | MON-ØØØ21-9 x MON-ØØ81Ø-6 | Monsanto Company | Maishybrid mit einer Kombination von Insektenresistenz und Herbizidtoleranz, Ableitung durch traditionelles Kreuzen der Elternlinien GA21 (OECD-Bezeichnung: MON-ØØØ21-9) und MON810 (OECD-Bezeichnung: MON-ØØ81Ø-6). | *Zea mays* L. (Mais) |
| A-173 | MS3 | Bayer CropScience (Aventis CropScience (AgrEvo)) | Pollensterilität durch Expression des Barnase-Ribonuklease-Gens aus Bacillus amyloliquefaciens; die PPT-Resistenz wurde über die PPT-Acetyltransferase (PAT) erzielt. | *Zea mays* L. (Mais) |
| A-174 | MS6 | Bayer CropScience (Aventis CropScience (AgrEvo)) | Pollensterilität durch Expression des Barnase-Ribonuklease-Gens aus Bacillus amyloliquefaciens; die PPT-Resistenz wurde über die PPT-Acetyltransferase (PAT) erzielt. | *Zea mays* L. (Mais) |
| A-175 | NK603 | Monsanto Company | Einführung einer modifizierten 5-Enolpyruvylshikimat-3-phosphatsynthase (EPSPS), eines Enzyms, das am Shikimat-Biosyntheseweg für die Bildung der aromatischen Aminosäuren beteiligt ist, durch Beschuß mit der Genkanone. | *Zea mays* L. (Mais) |
| A-176 | PV-ZMGT32 (NK603) | | Glyphosate-Toleranz; US 2007-056056 | *Zea mays* L. (Mais) |
| A-177 | PV-ZMGT32(nk603) | | Glyphosate-Toleranz; US 2007292854 | *Zea mays* L. (Mais) |
| A-178 | PV-ZMIR13 (MON863) | | Insektenresistenz (Cry3Bb); US 2006-095986 | *Zea mays* L. (Mais) |
| A-179 | SYN-BTØ11-1 x MON-ØØØ21-9 | Syngenta Seeds, Inc. | Mais mit einer Kombination von Insektenresistenz und Herbizidtoleranz, Erzeugung durch traditionelles Kreuzen der Elternlinien BT11 (nur für die OECD gültige Bezeichnung: SYN-BTØ11-1) und GA21 (nur für die OECD gültige Bezeichnung: MON-ØØØ21-9). | *Zea mays* L. (Mais) |
| A-180 | T14, T25 | Bayer CropScience (Aventis CropScience (AgrEvo)) | Mais mit Toleranz für das Herbizid Glufosinate; Erzeugung durch Insertieren des Gens für die Phosphinothricin-N-acetyltransferase (PAT) des aeroben Actinomyceten Streptomyces viridochromogenes. | *Zea mays* L. (Mais) |
| A-181 | TC1507 | Mycogen (c/o Dow AgroSciences) ; Pioneer (c/o Dupont) | Mais mit Insektenresistenz und Toleranz für das Herbizid Glufosinate-Ammonium; Erzeugung durch Insertieren des cry1F-Gens aus Bacillus thuringiensis var. aizawai und des Gens für die Phosphinothricin-N-acetyltransferase aus Streptomyces viridochromogenes. | *Zea mays* L. (Mais) |

(fortgesetzt)

| Nr. | Transgenes Event | Unternehmen | Beschreibung | Kulturpflanze |
|---|---|---|---|---|
| A-182 | TC1507 x DAS-59122-7 | DOW AgroSciences LLC und Pioneer Hi-Bred International Inc. | Mais mit einer Kombination aus Insektenresistenz und Herbizidtoleranz; Herstellung durch traditionelles Kreuzen der Elternlinien TC1507 (nur für die OECD gültige Bezeichnung: DAS-01507-1) mit DAS-59122-7 (nur für die OECD gültige Bezeichnung: DAS-59122-7). Die Resistenz gegen Lepidopteren-Insekten stammt von TC1507 aufgrund des Vorhandenseins des cry1F-Gens aus Bacillus thuringiensis var. aizawai Die Resistenz gegen den Maiswurzelbohrer stammt von der Linie DAS-59122-7, die das cry34Ab1- und das cry35Ab1-Gen aus dem Bacillus. thuringiensis-Stamm PS149B1 enthält. Die Toleranz für das Herbizid Glufosinate-Ammonium stammt von TC1507 von dem Gen für die Phosphinothricin-N-acetyltransferase aus Streptomyces viridochromogenes. | *Zea mays* L. (Mais) |
| A-183 | VIP1034 | | Insektenresistenz; WO 03/052073 | *Zea mays* L. (Mais) |

In einer Ausführungsform der Erfindung werden die Pflanzen B-1 bis B-129 von Tabelle B ganz oder teilweise bzw. wird Vermehrungsmaterial dieser Pflanzen mit den erfindungsgemäßen Wirkstoffkombinationen allein oder in Form von Zusammensetzungen, die eine Wirkstoffkombination umfassen, behandelt oder in Kontakt gebracht.

**Tabelle B**

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| Nr. | Antrag | Antragserweiterung Nummer*** | Institution | Pflanze | Trans-formations-Event oder Linie | EA-Abschlußbeurteilung & Bestimmung |
|---|---|---|---|---|---|---|
| B-1 | 10-070-01p | | Virginia Tech | Erdnuss | Resistent gegen Sclerotinia-Fäule | N70, P39 und W171 |
| B-2 | 09-349-01p | | Dow AgroSciences | Sojabohne | 2,4-D- und Glufosinate-Toleranz | DAS-68416-4 |
| B-3 | 09-328-01p | | Bayer Crop Science | Sojabohne | Glyphosate- und Isoxaflutole-Toleranz | FG72 |
| B-4 | 09-233-01p | | Dow | Mais | 2,4-D- und ACCase-Hemmer-Toleranz | DAS-40278-9 |
| B-5 | 09-201-01p | | Monsanto | Sojabohne | verbessertes Fettsäureprofil | MON-877Ø5-6 |
| B-6 | 09-183-01p | | Monsanto | Sojabohne | Stearidonsäurepoduktion | MON-87769 |
| B-7 | 09-082-01p | | Monsanto | Sojabohne | LepidopterenResistenz | MON 87701 |
| B-8 | 09-063-01p | | Stine Seed | Mais | Glyphosate-Toleranz | HCEM485 |
| B-9 | 09-055-01p | | Monsanto | Mais | Dürretoleranz | MON 87460 |
| B-10 | 09-015-01p | | BASF Plant Science, LLC | Sojabohne | Imidazolinon-Toleranz | BPS-CV127-9 Sojabohne |
| B-11 | 08-366-01p | | ArborGen | Eucalyptus | Frosttoleranz, geänderte Fertilität | ARB-FTE1-08 |
| B-12 | 08-340-01p | | Bayer | Baumwolle | Glufosinate-Toleranz, Insektenresistenz | T304-40XGHB119 |
| B-13 | 08-338-01p | | Pioneer | Mais | Pollensterilität, wiederhergestellte Fertilität, visueller Marker | DP-32138-1 |
| B-14 | 08-315-01p | | Florigene | Rose | Veränderte Blütenfarbe | IFD-524Ø1-4 und IFD-529Ø1-9 |
| B-15 | 07-108-01p | | Syngenta | Baumwolle | Lepidopterenresistenz | COT67B |
| B-16 | 06-354-01p | | Pioneer | Sojabohne | Hoher Ölsäuregehalt | D-3Ø5423-1 |
| B-17 | 06-354-01p | | Pioneer | Sojabohne | Hoher Ölsäuregehalt | D-3Ø5423-1 |

(fortgesetzt)

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| Nr. | Antrag | Antragserweiterung Nummer*** | Institution | Pflanze | Trans-formations-Event oder Linie | EA-Abschlußbeurteilung & Bestimmung |
|---|---|---|---|---|---|---|
| B-18 | 05-280-01p | | Syngenta | Mais | Hitzestabile Alpha-Amylase | 3272 |
| B-19 | | | | | | |
| B-20 | 04-110-01p | | Monsanto & Forage Genetics | Alfalfa | Glyphosate-Toleranz | J101,J163 |
| B-21 | | | | | | |
| B-22 | | | | | | |
| B-23 | | | | | | |
| B-24 | 03-104-01p | | Monsanto & Scotts | Weißes Straußgras | Glyphosate-Toleranz | ASR368 |
| B-25 | | | | | | |
| B-26 | | | | | | |
| B-27 | | | | | | |
| B-28 | | | | | | |
| B-29 | | | | | | |
| B-30 | 07-253-01p | | Syngenta | Mais | Lepidopterenresistenz | MIR-162 Mais |
| B-31 | | | | | | |
| B-32 | 07-152-01p | | Pioneer | Mais | Glyphosate- & Imidazolinon-Toleranz | DP-098140-6 |
| B-33 | | | | | | |
| B-34 | 04-337-01p | | University of Florida | Papaya | Resistenz gegen Papaya- Ringspot-Virus | X17-2 |
| B-35 | | | | | | |
| B-36 | 06-332-01p | | Bayer CropScience | Baumwolle | Glyphosate-Toleranz | GHB614 |
| B-37 | | | | | | |

(fortgesetzt)

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| Nr. | Antrag | Antragserweiterung Nummer*** | Institution | Pflanze | Trans-formations-Event oder Linie | EA-Abschlußbeurteilung & Bestimmung |
|---|---|---|---|---|---|---|
| B-38 | 06-298-01p | | Monsanto | Mais | Maiszünslerresistenz | MON 89034 |
| B-39 | | | | | | |
| B-40 | 06-271-01p | | Pioneer | Sojabohne | Glyphosate- & Acetolactatsynthase-toleranz | 356043 (D-356043-5) |
| B-41 | | | | | | |
| B-42 | 06-234-01p | 98-329-01p | Bayer CropScience | Reis | Phosphinothricintoleranz | LLRICE601 |
| B-43 | | | | | | |
| B-44 | 06-178-01p | | Monsanto | Sojabohne | Glyphosate-toleranz | MON 89788 |
| B-45 | | | | | | |
| B-46 | 04-362-01p | | Syngenta | Mais | Schutz gegen den Maiswurzelbohrer | MIR604 |
| B-47 | | | | | | |
| B-48 | | | | | | |
| B-49 | 04-264-01p | | ARS | Pflaume | Resistenz gegen das Plum-Pox-Virus | C5 |
| B-50 | | | | | | |
| B-51 | 04-229-01p | | Monsanto | Mais | Hoher Lysingehalt | LY038 |
| B-52 | | | | | | |
| B-53 | 04-125-01p | | Monsanto | Mais | Maiswurzelbohrerresistenz | 88017 |
| B-54 | | | | | | |
| B-55 | 04-086-01p | | Monsanto | Baumwolle | Glyphosate-Toleranz | MON 88913 |
| B-56 | | | | | | |
| B-57 | | | | | | |

(fortgesetzt)

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| Nr. | Antrag | Antragserweiterung Nummer*** | Institution | Pflanze | Trans-formations-Event oder Linie | EA-Abschlußbeurteilung & Bestimmung |
|---|---|---|---|---|---|---|
| B-58<br>B-59 | 03-353-01p | | Dow | Mais | Maiswurzelbohrerresistenz | 59122 |
| B-60<br>B-61 | 03-323-01p | | Monsanto | Zuckerrübe | Glyphosate-Toleranz | H7-1 |
| B-62<br>B-63 | 03-181-01p | 00-136-01p | Dow | Mais | Lepidopteren-Resistenz & Phosphinothricintoleranz | TC-6275 |
| B-64<br>B-65 | 03-155-01p | | Syngenta | Baumwolle | Lepidopterenresistenz | COT 102 |
| B-66<br>B-67 | 03-036-01p | | Mycogen/Dow | Baumwolle | Lepidopterenresistenz | 281-24-236 |
| B-68<br>B-69 | 03-036-02p | | Mycogen/Dow | Baumwolle | Lepidopterenresistenz | 3006-210-23 |
| B-70 | 02-042-01p | | Aventis | Baumwolle | Phosphinothricintoleranz | LLCotton25 |
| B-71 | 01-324-01p | 98-216-01p | Monsanto | Raps | Glyphosate-Toleranz | RT200 |
| B-72 | 01-206-01p | 98-278-01p | Aventis | Raps | Phosphinothricintoleranz & Bestäubungskontrolle | MS1 & RF1/RF2 |
| B-73 | 01-206-02p | 97-205-01p | Aventis | Raps | Phosphinothricintoleranz | Topas 19/2 |
| B-74 | 01-137-01p | | Monsanto | Meis | Maiswurzelbohrerresistenz | MON 863 |
| B-75 | 01-121-01p | | Vector | Tabak | Verringerter Nikotingehalt | Vector 21-41 |
| B-76 | 00-342-01p | | Monsanto | Baumwolle | Lepidopterenresistenz | Cotton Event 15985 |

(fortgesetzt)

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| **Nr.** | **Antrag** | **Antragserweiterung Nummer*** ** | **Institution** | **Pflanze** | **Trans-formations-Event oder Linie** | **EA-Abschlußbeurteilung & Bestimmung** |
|---|---|---|---|---|---|---|
| B-77 | 00-136-01p | | Mycogen c/o Dow & Pioneer | Mais | Lepidopteren-Resistenz & Phosphinothricintoleranz | Line 1507 |
| B-78 | 00-011-01p | 97-099-01p | Monsanto | Mais | Glyphosate-Toleranz | NK603 |
| B-79 | 99-173-01p | 97-204-01p | Monsanto | Kartoffel | PLRV- & CPB-Resistenz | RBMT22-82 |
| B-80 | 98-349-01p | 95-228-01p | AgrEvo | Mais | Phosphinothricintoleranz und Pollensterilität | MS6 |
| B-81 | 98-335-01p | | U. of Saskatchewan | Flachs | Toleranz für Sulfonylharnstoffherbizidrückstände im Boden | CDC Triffid |
| B-82 | 98-329-01p | | AgrEvo | Reis | Phosphinothricintoleranz | LLRICE06, LLRICE62 |
| B-83 | 98-278-01p | | AgrEvo | Raps | Phosphinothricintoleranz & Bestäubungskontrolle | MS8 & RF3 |
| B-84 | 98-238-01p | | AgrEvo | Sojabohne | Phosphinothricintoleranz | GU262 |
| B-85 | 98-216-01p | | Monsanto | Raps | Glyphosate-Toleranz | RT73 |
| B-86 | 98-173-01p | | Novartis Seeds & Monsanto | Rübe | Glyphosate-Toleranz | GTSB77 |
| B-87 | 98-014-01p | 96-068-01p | AgrEvo | Sojabohne | Phosphinothricintoleranz | A5547-127 |
| B-88 | 97-342-01p | | Pioneer | Mais | Pollensterilität & Phosphinothricintoleranz | 676,678,680 |
| B-89 | 97-339-01p | | Monsanto | Kartoffel | CPB- & PVY-Resistenz | RBMT15-101, SEMT15-02, SEMT15-15 |
| B-90 | 97-336-01p | | AgrEvo | Rübe | Phosphinothricintoleranz | T-120-7 |
| B-91 | 97-287-01p | | Monsanto | Tomate | Lepidopterenresistenz | 5345 |

(fortgesetzt)

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| **Nr.** | **Antrag** | **Antragserweiterung Nummer*** ** | **Institution** | **Pflanze** | **Trans-formations-Event oder Linie** | **EA-Abschlußbeurteilung & Bestimmung** |
|---|---|---|---|---|---|---|
| B-92 | 97-265-01p | | AgrEvo | Mais | Phosphinothricintoleranz & Lepidopterenresistenz | CBH-351 |
| B-93 | 97-205-01p | | AgrEvo | Raps | Phosphinothricintoleranz | T45 |
| B-94 | 97-204-01p | | Monsanto | Kartoffel | CPB- & PLRV-Resistenz | RBMT21-129 & RBMT21-350 |
| B-95 | 97-148-01p | | Bejo | Cichorium intybus | Pollensterilität | RM3-3, RM3-4, RM3-6 |
| B-96 | 97-099-01p | | Monsanto | Mais | Glyphosate-Toleranz | GA21 |
| B-97 | 97-013-01p | | Calgene | Baumwolle | Bromoxyniltoleranz & Lepidopterenresistenz | Events 31807 & 31808 |
| B-98 | 97-008-01p | | Du Pont | Sojabohne | Verändertes Ölprofil | G94-1, G94-19, G-168 |
| B-99 | 96-317-01p | | Monsanto | Mais | Glyphosate-toleranz & ECB-Resistenz | MON802 |
| B-100 | 96-291-01p | | DeKalb | Mais | Maiszünslerresistenz | DBT418 |
| B-101 | 96-248-01p | 92-196-01p | Calgene | Tomate | Veränderte Fruchtabreifung | 1 zusätzliche FLAVRSAVR Linie |
| B-102 | 96-068-01p | | AgrEvo | Sojabohne | Phosphinothricintoleranz | W62, W98, A2704- 12, A2704-21, A5547-35 |
| B-103 | 96-051-01p | | Cornell U | Papaya | PRSV- Resistenz | 55-1,63-1 |
| B-104 | 96-017-01p | 95-093-01p | Monsanto | Mais | Maiszünslerresistenz | MON809 & MON810 |
| B-105 | 95-352-01p | | Asgrow | Sommerkürbis | CMV, ZYMV, WMV2- Resistenz | CZW-3 |
| B-106 | 95-338-01p | | Monsanto | Kartoffel | CPB-Resistenz | SBT02-5 & -7, ATBT04-6 &-27, - 30, -31, -36 |
| B-107 | 95-324-01p | | Agritope | Tomate | Veränderte Fruchtabreifung | 35 1 N |

(fortgesetzt)

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| Nr. | Antrag | Antragserweiterung Nummer*** | Institution | Pflanze | Trans-formations-Event oder Linie | EA-Abschlußbeurteilung & Bestimmung |
|---|---|---|---|---|---|---|
| B-108 | 95-256-01p | | Du Pont | Baumwolle | Sulfonylharnstoffresistenz | 19-51a |
| B-109 | 95-228-01p | | Plant Genetic Systems | Mais | Pollensteril | MS3 |
| B-110 | 95-195-01p | | Northrup King | Mais | Maiszünslerresistenz | Bt11 |
| B-111 | 95-179-01p | 92-196-01p | Calgene | Tomate | Veränderte Fruchtabreifung | 2 zusätzliche FLAVRSAVR-Linien |
| B-112 | 95-145-01p | | DeKalb | Mais | Phosphinothricintoleranz | B16 |
| B-113 | 95-093-01p | | Monsanto | Mais | Lepidopterenresistenz | MON 80100 |
| B-114 | 95-053-01p | | Monsanto | Tomate | Veränderte Fruchtabreifung | 8338 |
| B-115 | 95-045-01p | | Monsanto | Baumwolle | Glyphosate-toleranz | 1445, 1698 |
| B-116 | 95-030-01p | 92-196-01p | Calgene | Tomate | Veränderte Fruchtabreifung | 20 zusätzliche FLAVRSAVR-Linien |
| B-117 | 94-357-01p | | AgrEvo | Mais | Phosphinothricintoleranz | T14, T25 |
| B-118 | 94-319-01p | | Ciba Seeds | Mais | Lepidopterenresistenz | Event 176 |
| B-119 | 94-308-01p | | Monsanto | Baumwolle | Lepidopterenresistenz | 531, 757, 1076 |
| B-120 | 94-290-01p | | Zeneca & Petoseed | Tomate | Verringerter Polygalacturonasegehalt in der Frucht | B, Da, F |
| B-121 | 94-257-01p | | Monsanto | Kartoffel | Coleopterenresistenz | BT6, BT10, BT12, BT16, BT17, BT18, BT23 |
| B-122 | 94-230-01p | 92-196-01p | Calgene | Tomate | Veränderte Fruchtabreifung | 9 zusätzliche FLAVRSAVR-Linien |
| B-123 | 94-228-01p | | DNA Plant Tech | Tomate | Veränderte Fruchtabreifung | 1345-4 |

(fortgesetzt)

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus, CPB-Kartoffelkäfer, PLRV- Kartoffel-Blattrollvirus, PRSV-Papaya-Ringspot-Virus, PVY-Kartoffel-Y-Virus, WMV2- Wassermelonenmosaikvirus 2"ZYMV-Zucchini-Gelbmosaikvirus

| Nr. | Antrag | Antragserweiterung Nummer*** | Institution | Pflanze | Trans-formations-Event oder Linie | EA-Abschlußbeurteilung & Bestimmung |
|---|---|---|---|---|---|---|
| B-124 | 94-227-01p | 92-196-01p | Calgene | Tomate | Veränderte Fruchtabreifung | Linie N73 1436-111 |
| B-125 | 94-090-01p | | Calgene | Raps | Verändertes Ölprofil | pCGN3828-212/86- 18 & 23 |
| B-126 | 93-258-01p | | Monsanto | Sojabohne | Glyphosate-toleranz | 40-3-2 |
| B-127 | 93-196-01p | | Calgene | Baumwolle | Bromoxyniltoleranz | BXN |
| B-128 | 92-204-01p | | Upjohn | Sommerkürbis | WMV2- & ZYMV-Resistenz | ZW-20 |
| B-129 | 92-196-01p | | Calgene | Tomate | Veränderte Fruchtabreifung | FLAVRSAVR |

In einer Ausführungsform werden die Pflanzen, die ein transgenes Event gemäß D-1 bis D-48 von Tabelle D umfassen oder solch ein Merkmal exprimieren, ganz oder teilweise, bzw. wird Vermehrungsmaterial dieser Pflanzen, mit den erfindungsgemäßen Wirkstoffkombinationen allein oder in Form von Zusammensetzungen, die eine Wirkstoffkombination umfassen, behandelt oder in Kontakt gebracht.

**Tabelle D**

| Nicht allumfassende Liste von transgenen Events und Merkmalen, auf die die Erfindung angewandt werden kann, unter Bezugnahme auf Patentanmeldungen. | | | | |
|---|---|---|---|---|
| **Nr.** | **Pflanzenart** | **Transgenes Event** | **Merkmal** | **Patentbezeichnung** |
| D-1 | Mais | PV-ZMGT32 (NK603) | Glyphosate-Toleranz | US 2007-056056 |
| D-2 | Mais | MIR604 | Insektenresistenz (Cry3a055) | EP-A 1 737 290 |
| D-3 | Mais | LY038 | Hoher Lysingehalt | US 7,157,281 |
| D-4 | Mais | 3272 | Selbstverarbeitender Mais (Alpha-Amylase) | US 2006-230473 |
| D-5 | Mais | PV-ZMIR13 (MON863) | Insektenresistenz (Cry3Bb) | US 2006-095986 |
| D-6 | Mais | DAS-59122-7 | Insektenresistenz (Cry34Ab1/Cry35Ab1) | US 2006-070139 |
| D-7 | Mais | TC1507 | Insektenresistenz (Cry1F) | US 7,435,807 |
| D-8 | Mais | MON810 | Insektenresistenz (Cry1Ab) | US 2004-180373 |
| D-9 | Mais | VIP1034 | Insektenresistenz | WO 03/052073 |
| D-10 | Mais | B16 | Glufosinate-Resistenz | US 2003-126634 |
| D-11 | Mais | GA21 | Glyphosate-Resistenz | US 6,040,497 |
| D-12 | Mais | GG25 | Glyphosate-Resistenz | US 6,040,497 |
| D-13 | Mais | GJ11 | Glyphosate-Resistenz | US 6,040,497 |
| D-14 | Mais | FI117 | Glyphosate-Resistenz | US 6,040,497 |
| D-15 | Mais | GAT-ZM1 | Glufosinate-Toleranz | WO 01/51654 |
| D-16 | Mais | DP-098140-6 | Glyphosate-Toleranz / ALS-Hemmer-Toleranz | WO 2008/112019 |
| D-17 | Weizen | Event 1 | Fusarium-Resistenz (Trichothecen- 3-O-acetyltransferase) | CA 2561992 |
| D-18 | Zuckerrübe | T227-1 | Glyphosate-Toleranz | US 2004-117870 |
| D-19 | Zuckerrübe | H7-1 | Glyphosate-Toleranz | WO 2004-074492 |
| D-20 | Sojabohne | MON89788 | Glyphosate-Toleranz | US 2006-282915 |
| D-21 | Sojabohne | A2704-12 | Glufosinate-Toleranz | WO 2006/108674 |
| D-22 | Sojabohne | A5547-35 | Glufosinate-Toleranz | WO 2006/108675 |
| D-23 | Sojabohne | DP-305423-1 | Hoher Ölsäuregehalt / ALS-Hemmer-Toleranz | WO 2008/054747 |
| D-24 | Reis | GAT-OS2 | Glufosinate-Toleranz | WO 01/83818 |
| D-25 | Reis | GAT-OS3 | Glufosinate-Toleranz | US 2008-289060 |
| D-26 | Reis | PE-7 | Insektenresistenz (Cry1Ac) | WO 2008/114282 |
| D-27 | Raps | MS-B2 | Pollensterilität | WO 01/31042 |
| D-28 | Raps | MS-BN1/RF-BN1 | Pollensterilität/-Restoration | WO 01/41558 |
| D-29 | Raps | RT73 | Glyphosate-Resistenz | WO 02/36831 |

(fortgesetzt)

| Nicht allumfassende Liste von transgenen Events und Merkmalen, auf die die Erfindung angewandt werden kann, unter Bezugnahme auf Patentanmeldungen. | | | | |
|---|---|---|---|---|
| **Nr.** | **Pflanzenart** | **Transgenes Event** | **Merkmal** | **Patentbezeichnung** |
| D-30 | Baumwolle | CE43-67B | Insektenresistenz (Cry1Ab) | WO 2006/128573 |
| D-31 | Baumwolle | CE46-02A | Insektenresistenz (Cry1Ab) | WO 2006/128572 |
| D-32 | Baumwolle | CE44-69D | Insektenresistenz (Cry1Ab) | WO 2006/128571 |
| D-33 | Baumwolle | 1143-14A | Insektenresistenz (Cry1Ab) | WO 2006/128569 |
| D-34 | Baumwolle | 1143-51B | Insektenresistenz (Cry1Ab) | WO 2006/128570 |
| D-35 | Baumwolle | T342-142 | Insektenresistenz (Cry1Ab) | WO 2006/128568 |
| D-36 | Baumwolle | event3006-210-23 | Insektenresistenz (Cry1Ac) | WO 2005/103266 |
| D-37 | Baumwolle | PV-GHGT07 (1445) | Glyphosate-Toleranz | US 2004-148666 |
| D-38 | Baumwolle | MON88913 | Glyphosate-Toleranz | WO 2004/072235 |
| D-39 | Baumwolle | EE-GH3 | Glyphosate-Toleranz | WO 2007/017186 |
| D-40 | Baumwolle | T304-40 | Insektenresistenz (Cry1Ab) | WO2008/122406 |
| D-41 | Baumwolle | Cot202 | Insektenresistenz (VIP3) | US 2007-067868 |
| D-42 | Baumwolle | LLcotton25 | Glufosinate-Resistenz | WO 2007/017186 |
| D-43 | Baumwolle | EE-GH5 | Insektenresistenz (Cry1Ab) | WO 2008/122406 |
| D-44 | Baumwolle | event 281-24-236 | Insektenresistenz (Cry1F) | WO 2005/103266 |
| D-45 | Baumwolle | Cot102 | Insektenresistenz (Vip3A) | US 2006-130175 |
| D-46 | Baumwolle | MON 15985 | Insektenresistenz (Cry1A/Cry2Ab) | US 2004-250317 |
| D-47 | Straußgras | Asr-368 | Glyphosate-Toleranz | US 2006-162007 |
| D-48 | Aubergine | EE-1 | Insektenresistenz (Cry1Ac) | WO 2007/091277 |

In einer Ausführungsform werden die Pflanzen, die ein transgenes Event gemäß E-1 bis E-50 von Tabelle E umfassen oder solch ein Merkmal exprimieren ganz oder teilweise, bzw. wird Vermehrungsmaterial dieser Pflanzen, mit den erfindungsgemäßen Wirkstoffkombinationen allein oder in Form von Zusammensetzungen, die eine Wirkstoffkombination umfassen, behandelt oder in Kontakt gebracht.

**Tabelle E**

Nicht allumfassende Liste von transgenen Events und Merkmalen und deren Handelsnamen.

| Nr. | Handelsname | Pflanze | Unternehmen | genetisch modifizierte Eigenschaften | zusätzliche Informationen |
|---|---|---|---|---|---|
| E-1 | Roundup Ready® | Beta vulgaris (Zuckerrübe) | Monsanto Company | Toleranz für Glyphosate | |
| E-2 | InVigor® | Brassica napus (Argentinischer Canola-Raps) | Bayer CropScience | Canola-Raps wurde mit folgendem Ergebnis genetisch modifiziert:<br><br>Ø Expression eines Gens, das Toleranz für das Herbizid Glyfosinate-Ammonium vermittelt;<br>Ø Einführung eines neuen Hybridzüchtungssystems für Canola-Raps, das auf genetisch modifizierten Pollensterilitäts- (MS) und Fertilitätsrestorer- (RF) Linien beruht;<br>Ø Expression eines Gens für Antibiotikaresistenz. | |
| E-3 | Liberty Link® | Brassica napus (Argentinischer Canola-Raps) | BayerCropScie nce | Toleranz für Phosphinotricin | |
| E-4 | Roundup Ready® | Brassica napus (Canola-Raps) | Monsanto Company | Toleranz für Glyphosate | |
| E-5 | Clearfield® | (Canola-Raps) | BASF Corporation | nicht-GMO, Toleranz für Imazamox | |
| E-6 | Optimum™ GAT™ | Glycine max L. (Sojabohne) | Pioneer Hi-Bred International, Inc | Toleranz für Glyphosate und ALS-Herbizide | |
| E-7 | Roundup Ready® | Glycine max L. (Sojabohne-) | Monsanto Company | Toleranz für Glyphosate | |
| E-8 | Roundup RReady2Yiel TM | Glycine max L. (Sojabohne) | Monsanto Company | Toleranz für Glyphosate | |
| E-9 | STS® | Glycine max L. (Sojabohne) | DuPont | Toleranz für Sulfonylharnstoffe | |
| E-10 | YIELD GARD® | Glycine max L. (Sojabohne) | Monsanto Company | | |

(fortgesetzt)

Nicht allumfassende Liste von transgenen Events und Merkmalen und deren Handelsnamen.

| Nr. | Handelsname | Pflanze | Unternehmen | genetisch modifizierte Eigenschaften | zusätzliche Informationen |
|---|---|---|---|---|---|
| E-11 | AFD® | Gossypium hirsutum L. (Baumwolle) | Bayer CropScience | Zu den Linien zählen z.B. AFD5062LL, AFD5064F, AFD 5065B2F; AFD-Saatgut ist in verschiedenen Sorten mit integrierter Technologie verfügbar, wie zum Beispiel die Bollgard®-, Bollgard II-, Roundup Ready-, Roundup Ready Flex- und LibertyLinlc®-Technologien | |
| E-12 | Bollgard II® | Gossypium hirsutum L. (Baumwolle) | Monsanto Company | MON 15985-Event: Cry2(A)b1; Cry1A(c) | |
| E-13 | Bollgard® | Gossypium hirsutum L. (Baumwolle) | Monsanto Company | Cry 1Ac | |
| E-14 | FiberMax® | Gossypium hirsutum L. (Baumwolle) | Bayer CropScience | | |
| E-15 | Liberty Link® | Gossypium hirsutum L. (Baumwolle) | Bayer CropScience | Toleranz gegen Phosphinotricin | |
| E-16 | Nucotn 33B | Gossypium hirsutum L. (Baumwolle) | Delta Pine and Land | Bt-Toxin in den Linien von Delta Pine: CrylAc | |
| E-17 | Nucotn 35B | Gossypium hirsutum L. (Baumwolle) | Delta Pine and Land | Bt-Toxin in den Linien von Delta Pine: Cry1Ac | |
| E-18 | Nucotn® | Gossypium hirsutum L. (Baumwolle) | Delta Pine and Land | Bt-Toxin in Linien von Delta Pine | |
| E-19 | PhytoGen™ | Gossypium hirsutum L. (Baumwolle) | PhytoGen Seed Company, Dow AgroSciences LLC | umfaßt Sorten, die zum Beispiel Roundup Ready flex, Widestrike enthalten | |

(fortgesetzt)

Nicht allumfassende Liste von transgenen Events und Merkmalen und deren Handelsnamen.

| Nr. | Handelsname | Pflanze | Unternehmen | genetisch modifizierte Eigenschaften | zusätzliche Informationen |
|---|---|---|---|---|---|
| E-20 | Roundup Ready Flex® | Gossypium hirsutum L. (Baumwolle) | Monsanto Company | Toleranz für Glyphosate | |
| E-21 | Roundup Ready® | Gossypium hirsutum L. (Baumwolle) | Monsanto Company | Toleranz für Glyphosate | |
| E-22 | Widestrike™ | Gossypium hirsutum L. (Baumwolle) | Dow AgroSciences LLC | Cry1F und Cry1Ac | Monsanto/Dow |
| E-23 | YIELD GARD® | Gossypium hirsutum L. (Baumwolle) | Monsanto Company | | http: //www.garstseed.com/ Gars tClient/Technology/ agrisure. as px |
| E-24 | Roundup Ready® | Medicago sativa (Luzerne) | Monsanto Company | Toleranz für Glyphosate | |
| E-25 | Clearfield® | Oryza sativa (Reis) | BASF Corporation | nicht-GMO, Toleranz für Imazamox | |
| E-26 | NewLeaf® | Solanum tuberosum L. (Kartoffel) | Monsanto Company | Resistenz gegen Infektion durch Kartoffel-Blattrollvirus (PLRV) und Fraßschaden durch den Kartoffelkäfer Leptinotarsa decemlineata | |
| E-27 | NewLeaf® plus | Solanum tuberosum L. (Kartoffel) | Monsanto Company | Resistenz gegen Infektion durch Kartoffel-Blattrollvirus (PLRV) und Fraßschaden durch den Kartoffelkäfer Leptinotarsa decemlineata | http://www.dowagro.com/ phyt ogen/index.htm |
| E-28 | Protecta® | Solanum tuberosum L. (Kartoffel) | | | |
| E-29 | Clearfield® | Sonnenblume | BASF Corporation | nicht-GMO, Toleranz für Imazamox | |

(fortgesetzt)

Nicht allumfassende Liste von transgenen Events und Merkmalen und deren Handelsnamen.

| Nr. | Handelsname | Pflanze | Unternehmen | genetisch modifizierte Eigenschaften | zusätzliche Informationen |
|---|---|---|---|---|---|
| E-30 | Roundup Ready® | Triticum aestivum (Weizen) | Monsanto Company | Toleranz für Glyphosate, NK603 | |
| E-31 | Clearfield® | Weizen | BASF Corporation | nicht-GMO, Toleranz für Imazamox | |
| E-32 | Agrisure® (Familie) | Zea mays L. (Mais) | Syngenta Seeds, Inc. | hierzu zählen Agrisure CB/LL (BT 11-Event plus Toleranz für Phosphinotricin durch GA21-Event); Agrisure CB/LL/RW (Bt 11-Event, modifiziertes synthetisches Cry3A-Gen, Toleranz für Phosphinotricin durch GA21-Event); Agrisure GT (Toleranz für Glyphosate) ; Agrisure GT/CB/LL(Toleranz für Glyphosate und für Phosphinotricin durch GA21-Event, Bt 11-Event); Agrisure 3000GT (CB/LL/RW/GT: Toleranz für Glyphosate und gegen Phosphinotricin durch GA21-Event, Bt 11-Event, modifiziertes synthetisches Cry3A-Gen) ; Agrisure GT/RW (Toleranz für Glyphosate, modifiziertes synthetisches Cry3A-Gen) ; Agrisure RW (modifiziertes synthetisches Cry3A-Gen); Zukünftige Merkmale | |
| E-33 | BiteGard® | Zea mays L. (Mais) | Novartis Seeds | cry1A(b) -Gen. | |
| E-34 | Bt-Xtra® | Zea mays L. (Mais) | DEKALB Genetics Corporation | cry1Ac-Gen. | |
| E-35 | Clearfield® | Zea mays L. (Mais) | BASF Corporation | nicht-GMO, Toleranz für Imazamox | |
| E-36 | Herculex® (Familie) | Zea mays L. (Mais) | Dow AgroSciences LLC | | |
| E-37 | IMI® | Zea mays L. (Mais) | DuPont | Toleranz für Imidazolinone | |
| E-38 | KnockOut® | Zea mays L. (Mais) | Syngenta Seeds, Inc. | SYN-EV176-9: cry1A(b)-Gen. | |

(fortgesetzt)

| Nicht allumfassende Liste von transgenen Events und Merkmalen und deren Handelsnamen. | | | | | |
|---|---|---|---|---|---|
| **Nr.** | **Handelsname** | **Pflanze** | **Unternehmen** | **genetisch modifizierte Eigenschaften** | **zusätzliche Informationen** |
| E-39 | Mavera® | Zea mays L. (Mais) | Renessen LLC | lysinreich | http://www.dowagro.com/ wide strike/ |
| E-40 | NatureGard® | Zea mays L. (Mais) | Mycogen | cry1A(b)-Gen. | |
| E-41 | Roundup Ready® | Zea mays L. (Mais) | Monsanto Company | Toleranz für Glyphosate | http: //www.starlinkcorn.com/st arlinkcorn.htm |
| E-42 | Roundup Ready® 2 | Zea mays L. (Mais) | Monsanto Company | Toleranz für Glyphosate | |
| E-43 | SmartStax | Zea mays L. (Mais) | Monsanto Company | Kombination von acht Genen | |
| E-44 | StarLink® | Zea mays L. (Mais) | Aventis CropScience - >Bayer CropScience | Cry9c-Gen. | |
| E-45 | STS® | Zea mays L. (Mais) | DuPont | Toleranz für Sulfonylharnstoffe | |
| E-46 | YIELD GARD® | Zea mays L. (Mais) | Monsanto Company | Mon810, Cry1Ab1; Resistenz gegen den Maiszünsler | http://www.dowagro.com/ hercu lex/about/ herculexfamily/ |
| E-47 | YieldGard® Plus | Zea mays L. (Mais) | Monsanto Company | Mon810xMon863, Zweierkombination, Resistenz gegen Maiszünsler und Maiswurzelbohrer | |
| E-48 | YieldGard® Rootworm | Zea mays L. (Mais) | Monsanto Company | Mon863, Cry3Bb1, Resistenz gegen Maiswurzelbohrer | |
| E-49 | YieldGard® VT | Zea mays L. (Mais) | Monsanto Company | Merkmalskombination | |
| E-50 | YieldMaker TM | Zea mays L. (Mais) | DEKALB Genetics Corporation | enthält Roundup Ready 2-Technologie, YieldGard VT, YieldGard Corn Borer, YieldGard Rootworm und YieldGard Plus | |

Transgene Nutzpflanzen, die gemäß der Erfindung behandelt werden können, sind vorzugsweise Pflanzen, die Transformations-Events (Transformations-Integrationsereignisse) oder eine Kombination von Transformations-Events (Transformations-Integrationsereignisse) enthalten, und die zum Beispiel in den Datenbanken für diverse nationale oder regionale Registrierbehörden aufgelistet sind, einschließlich Event 1143-14A (Baumwolle, Insektenkontrolle, nicht hinterlegt, beschrieben in WO2006/128569); Event 1143-51B (Baumwolle, Insektenkontrolle, nicht hinterlegt, beschrieben in WO2006/128570); Event 1445 (Baumwolle, Herbizidtoleranz, nicht hinterlegt, beschrieben in US2002120964 oder WO2002/034946); Event 17053 (Reis, Herbizidtoleranz, hinterlegt als PTA-9843, beschrieben in WO2010/117737); Event 17314 (Reis, Herbizidtoleranz, hinterlegt als PTA-9844, beschrieben in WO2010/117735); Event 281-24-236 (Baumwolle, Insektenkontrolle - Herbizidtoleranz, hinterlegt als PTA-6233, beschrieben in WO2005/103266 oder US2005216969); Event 3006-210-23 (Baumwolle, Insektenkontrolle - Herbizidtoleranz, hinterlegt als PTA-6233, beschrieben in US2007143876 oder WO2005/103266); Event 3272 (Mais, Qualitätsmerkmal (Trait), hinterlegt als PTA-9972, beschrieben in WO2006098952 oder US2006230473); Event 40416 (Mais, Insektenkontrolle - Herbizidtoleranz, hinterlegt als ATCC PTA-11508, beschrieben in WO2011/075593); Event 43A47 (Mais, Insektenkontrolle - Herbizidtoleranz, hinterlegt als ATCC PTA-11509, beschrieben in WO2011/075595); Event 5307 (Mais, Insektenkontrolle, hinterlegt als ATCC PTA-9561, beschrieben in WO2010/077816); Event ASR-368 [Straussgras (bent grass), Herbizidtoleranz, hinterlegt als ATCC PTA-4816, beschrieben in US2006162007 oder WO2004053062]; Event B16 (Mais, Herbizidtoleranz, nicht hinterlegt, beschrieben in US2003126634); Event BPS-CV127-9 (Sojabohne, Herbizidtoleranz, hinterlegt als NCIMB Nr. 41603, beschrieben in WO2010/080829); Event CE43-67B (Baumwolle, Insektenkontrolle, hinterlegt als DSM ACC2724, beschrieben in US2009217423 oder WO2006/128573); Event CE44-69D (Baumwolle, Insektenkontrolle, nicht hinterlegt, beschrieben in US20100024077); Event CE44-69D (Baumwolle, Insektenkontrolle, nicht hinterlegt, beschrieben in WO2006/128571); Event CE46-02A (Baumwolle, Insektenkontrolle, nicht hinterlegt, beschrieben in WO2006/128572); Event COT102 (Baumwolle, Insektenkontrolle, nicht hinterlegt, beschrieben in US2006130175 oder WO2004039986); Event COT202 (Baumwolle, Insektenkontrolle, nicht hinterlegt, beschrieben in US2007067868 oder WO2005054479); Event COT203 (Baumwolle, Insektenkontrolle, nicht hinterlegt, beschrieben in WO2005/054480); Event DAS40278 (Mais, Herbizidtoleranz, hinterlegt als ATCC PTA-10244, beschrieben in WO2011/022469); Event DAS-59122-7 (Mais, Insektenkontrolle - Herbizidtoleranz, hinterlegt als ATCC PTA 11384 , beschrieben in US2006070139); Event DAS-59132 (Mais, Insektenkontrolle - Herbizidtoleranz, nicht hinterlegt, beschrieben in WO2009/100188); Event DAS68416 (Sojabohne, Herbizidtoleranz, hinterlegt als ATCC PTA-10442, beschrieben in WO2011/066384 oder WO2011/066360); Event DP-098140-6 (Mais, Herbizidtoleranz, hinterlegt als ATCC PTA-8296, beschrieben in US2009137395 oder WO2008/112019); Event DP-305423-1 (Sojabohne, Qualitätsmerkmal, nicht hinterlegt, beschrieben in US2008312082 oder WO2008/054747); Event DP-32138-1 (Mais, Hybridsystem, hinterlegt als ATCC PTA-9158, beschrieben in US20090210970 oder WO2009/103049); Event DP-356043-5 (Sojabohne, Herbizidtoleranz, hinterlegt als ATCC PTA-8287, beschrieben in US20100184079 oder WO2008/002872); Event EE-1 (Aubergine, Insektenkontrolle, nicht hinterlegt, beschrieben in WO2007/091277); Event FI117 (Mais, Herbizidtoleranz, hinterlegt als ATCC 209031, beschrieben in US2006059581 oder WO1998/044140); Event GA21 (Mais, Herbizidtoleranz, hinterlegt als ATCC 209033, beschrieben in US2005086719 oder WO1998/044140); Event GG25 (Mais, Herbizidtoleranz, hinterlegt als ATCC 209032, beschrieben in US2005188434 oder WO1998/044140); Event GHB119 (Baumwolle, Insektenkontrolle - Herbizidtoleranz, hinterlegt als ATCC PTA-8398, beschrieben in WO2008/151780); Event GHB614 (Baumwolle, Herbizidtoleranz, hinterlegt als ATCC PTA-6878, beschrieben in US2010050282 oder WO2007/017186); Event GJ11 (Mais, Herbizidtoleranz, hinterlegt als ATCC 209030, beschrieben in US2005188434 oder WO1998/044140); Event GM RZ13 (Zuckerrübe, Virusresistenz, hinterlegt als NCIMB-41601, beschrieben in WO2010/076212); Event H7-1 (Zuckerrübe, Herbizidtoleranz, hinterlegt als NCIMB 41158 oder NCIMB 41159, beschrieben in US2004172669 oder WO2004/074492); Event JOPLIN1 (Weizen, Pilzresistenz nicht hinterlegt, beschrieben in US2008064032); Event LL27 (Sojabohne, Herbizidtoleranz, hinterlegt als NCIMB41658, beschrieben in WO2006/108674 oder US2008320616); Event LL55 (Sojabohne, Herbizidtoleranz, hinterlegt als NCIMB 41660, beschrieben in WO2006/108675 oder US2008196127); Event LLcotton25 (Baumwolle, Herbizidtoleranz, hinterlegt als ATCC PTA-3343, beschrieben in WO2003013224 oder US2003097687); Event LLRICE06 (Reis, Herbizidtoleranz, hinterlegt als ATCC-23352, beschrieben in US6468747 oder WO2000/026345); Event LLRICE601 (Reis, Herbizidtoleranz, hinterlegt als ATCC PTA-2600, beschrieben in US20082289060 oder WO2000/026356); Event LY038 (Mais, Qualitätsmerkmal, hinterlegt als ATCC PTA-5623, beschrieben in US2007028322 oder WO2005061720); Event MIR162 (Mais, Insektenkontrolle, hinterlegt als PTA-8166, beschrieben in US2009300784 oder WO2007/142840); Event MIR604 (Mais, Insektenkontrolle, nicht hinterlegt, beschrieben in US2008167456 oder WO2005103301); Event MON15985 (Baumwolle, Insektenkontrolle, hinterlegt als ATCC PTA-2516, beschrieben in US2004-250317 oder WO2002/100163); Event MON810 (Mais, Insektenkontrolle, nicht hinterlegt, beschrieben in US2002102582); Event MON863 (Mais, Insektenkontrolle, hinterlegt als ATCC PTA-2605, beschrieben in WO2004/011601 oder US2006095986); Event MON87427 (Mais, Bestäubungskontrolle, hinterlegt als ATCC PTA-7899, beschrieben in WO2011/062904); Event MON87460 (Mais, Stresstoleranz, hinterlegt als ATCC PTA-8910, beschrieben in WO2009/111263 oder US20110138504); Event MON87701 (Sojabohne, Insektenkontrolle, hinterlegt als ATCC PTA-8194, beschrieben in US2009130071 oder WO2009/064652); Event

MON87705 (Sojabohne, Qualitätsmerkmal - Herbizidtoleranz, hinterlegt als ATCC PTA-9241, beschrieben in US20100080887 oder WO2010/037016); Event MON87708 (Sojabohne, Herbizidtoleranz, hinterlegt als ATCC PTA9670, beschrieben in WO2011/034704); Event MON87754 (Sojabohne, Qualitätsmerkmal, hinterlegt als ATCC PTA-9385, beschrieben in WO2010/024976); Event MON87769 (Sojabohne, Qualitätsmerkmal, hinterlegt als ATCC PTA-8911, beschrieben in US20110067141 oder WO2009/102873); Event MON88017 (Mais, Insektenkontrolle - Herbizidtoleranz, hinterlegt als ATCC PTA-5582, beschrieben in US2008028482 oder WO2005/059103); Event MON88913 (Baumwolle, Herbizidtoleranz, hinterlegt als ATCC PTA-4854, beschrieben in WO2004/072235 oder US2006059590); Event MON89034 (Mais, Insektenkontrolle, hinterlegt als ATCC PTA-7455, beschrieben in WO2007/140256 oder US2008260932); Event MON89788 (Sojabohne, Herbizidtoleranz, hinterlegt als ATCC PTA-6708, beschrieben in US2006282915 oder WO2006/130436); Event MS11 (Raps, Bestäubungskontrolle - Herbizidtoleranz, hinterlegt als ATCC PTA-850 oder PTA-2485, beschrieben in WO2001/031042); Event MS8 (Raps, Bestäubungskontrolle - Herbizidtoleranz, hinterlegt als ATCC PTA-730, beschrieben in WO2001/041558 oder US2003188347); Event NK603 (Mais, Herbizidtoleranz, hinterlegt als ATCC PTA-2478, beschrieben in US2007-292854); Event PE-7 (Reis, Insektenkontrolle, nicht hinterlegt, beschrieben in WO2008/114282); Event RF3 (Raps, Bestäubungskontrolle - Herbizidtoleranz, hinterlegt als ATCC PTA-730, beschrieben in WO2001/041558 oder US2003188347); Event RT73 (Raps, Herbizidtoleranz, nicht hinterlegt, beschrieben in WO2002/036831 oder US2008070260); Event T227-1 (Zuckerrübe, Herbizidtoleranz, nicht hinterlegt, beschrieben in WO2002/44407 oder US2009265817); Event T25 (Mais, Herbizidtoleranz, nicht hinterlegt, beschrieben in US2001029014 oder WO2001/051654); Event T304-40 (Baumwolle, Insektenkontrolle - Herbizidtoleranz, hinterlegt als ATCC PTA-8171, beschrieben in US2010077501 oder WO2008/122406); Event T342-142 (Baumwolle, Insektenkontrolle, nicht hinterlegt, beschrieben in WO2006/128568); Event TC1507 (Mais, Insektenkontrolle - Herbizidtoleranz, nicht hinterlegt, beschrieben in US2005039226 oder WO2004/099447); Event VIP1034 (Mais, Insektenkontrolle - Herbizidtoleranz, hinterlegt als ATCC PTA-3925, beschrieben in WO2003/052073); Event 32316 (Mais, Insektenkontrolle - Herbizidtoleranz, hinterlegt als PTA-11507, beschrieben in WO2011/084632); Event 4114 (Mais, Insektenkontrolle - Herbizidtoleranz, hinterlegt als PTA-11506, beschrieben in WO2011/084621).

Die aufgeführten Pflanzen können besonders vorteilhaft erfindungsgemäß mit der erfindungsgemäßen Wirkstoffmischung behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die Bekämpfung von tierischen Schädlingen, insbesondere von Nematoden, durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch tierische Schädlinge, insbesondere Nematoden, bestmöglich geschützt wird, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall durch tierische Schädlinge, insbesondere durch Nematoden, sowie auf ein Verfahren zur Ertragssteigerung, indem das Saatgut mit einem erfindungsgemäßen Mittel behandelt wird.

Die Erfindung bezieht sich ebenfalls auf die Verwendung der erfindungsgemäßen Mittel zur Behandlung von Saatgut zum Schutz des Saatguts und der keimenden Pflanze vor tierischen Schädlingen, insbesondere vor Nematoden sowie zur Ertragssteigerung.

Weiterhin bezieht sich die Erfindung auf Saatgut, welches zum Schutz vor tierischen Schädlingen, insbesondere Nematoden, mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen Schutz vor tierischen Schädlingen, insbesondere Nematoden schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können.

## Formulierungen

Die Wirkstoffkombinationen können für die Blatt- und Bodenanwendungen in die üblichen Formulierungen

überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-FettalkoholEther, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 50 Gew.-% liegen.

Die Anwendung geschieht in einer den Anwendungsformen angepaßten üblichen Weise.

**Anwendungsformen**

Beim Einsatz der erfindungsgemäßen Wirkstoffe zur Bekämpfung von tierischen Schädlingen, insbesondere Nematoden können die Aufwandmengen je nach Applikationsart innerhalb eines größeren Bereiches variiert werden. Die Aufwandmenge der erfindungsgemäßen Wirkstoffe beträgt

- bei der Behandlung von Pflanzenteilen, z.B. Blättern: von 0,1 bis 10 000 g/ha, bevorzugt von 10 bis 1 000 g/ha, besonders bevorzugt von 50 bis 300g/ha (bei Anwendung durch Gießen oder Tropfen kann die Aufwandmenge sogar verringert werden, vor allem wenn inerte Substrate wie Steinwolle oder Perlit verwendet werden);

- bei der Saatgutbehandlung: von 2 bis 200 g pro 100 kg Saatgut, bevorzugt von 3 bis 150 g pro 100 kg Saatgut, besonders bevorzugt von 2,5 bis 25 g pro 100 kg Saatgut, ganz besonders bevorzugt von 2,5 bis 12,5 g pro 100 kg Saatgut;
- bei der Bodenbehandlung: von 0,1 bis 10 000 g/ha, bevorzugt von 1 bis 5 000 g/ha.

Diese Aufwandmengen seien nur beispielhaft und nicht limitierend im Sinne der Erfindung genannt.
Die erfindungsgemäßen Wirkstoffe bzw. Mittel können also eingesetzt werden, um Pflanzen innerhalb eines gewissen Zeitraumes nach der Behandlung gegen den Befall durch tierische Schädlinge, insbesondere Nematoden zu schützen. Der Zeitraum, innerhalb dessen Schutz herbeigeführt wird, erstreckt sich im Allgemeinen auf 1 bis 28 Tage, bevorzugt auf 1 bis 14 Tage, besonders bevorzugt auf 1 bis 10 Tage, ganz besonders bevorzugt auf 1 bis 7 Tage nach der Behandlung der Pflanzen mit den Wirkstoffen bzw. auf bis zu 200 Tage nach einer Saatgutbehandlung.

**Blattanwendungen**

Unter Blattanwendung versteht man die erfindungsgemäße Behandlung der Pflanzen und Pflanzenteile mit den Wirkstoffen direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und Injizieren. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

**Bodenanwendung**

Unter Bodenanwendung versteht man die Bekämpfung von Insekten und/oder Spinnmilben und/oder Nematoden durch Angiessen (drenchen) von Pestiziden auf den Boden, Einarbeitung in den Boden und in Bewässerungssystemen als Tröpfchenapplikation auf den Boden. Alternativ können die erfindungsgemäßen Wirkstoffkombinationen in fester Form, (z.B. in Form eines Granulats) in den Standort der Pflanzen eingebracht werden. Bei Wasserreiskulturen kann das auch durch Zudosieren der erfindungsgemäßen Wirkstoffkombinationen in einer festen Anwendungsform (z.B. als Granulat) in ein überflutetes Reisfeld sein.
Die Erfindung betrifft diese Anwendungsformen auf natürlichen (Erdreich) oder artifiziellen Substraten (z.B. Steinwolle, Glaswolle, Quarzsand, Kiesel, Blähton, Vermiculit) im Freiland oder in geschlossenen Systemen (z.B. Gewächshäuser oder unter Folien-Abdeckung) und in einjährigen (z.B. Gemüse, Kartoffeln, Baumwolle, Rüben, Zierpflanzen) oder mehrjährigen Kulturen (z.B. Zitruspflanzen, Obst, tropische Kulturen, Gewürzen, Nüsse, Wein, Koniferen und Zierpflanzen). Es ist ferner möglich, die Wirkstoffe nach dem Ultra-Low-Volume-Verfahren auszubringen oder die Wirkstoffzubereitung oder den Wirkstoff selbst in den Boden zu injizieren.

**Saatgutbehandlung**

Die erfindungsgemäßen Wirkstoffkombinationen eignen sich insbesondere zum Schutz von Saatgut jeglicher Pflanzensorte, die in der Landwirtschaft, im Gewächshaus, in Forsten oder im Gartenbau eingesetzt wird gegen die zuvor genannten tierischen Schädlinge, insbesondere gegen Nematoden. Insbesondere handelt es sich dabei um Saatgut von Getreide (wie Weizen, Gerste, Roggen, Hirse und Hafer), Mais, Baumwolle, Soja, Reis, Kartoffeln, Sonnenblume, Bohne, Kaffee, Rübe (z.B. Zuckerrübe und Futterrübe), Erdnuss, Gemüse (wie Tomate, Gurke, Zwiebeln und Salat), Rasen und Zierpflanzen. Besondere Bedeutung kommt der Behandlung des Saatguts von Getreide (wie Weizen, Gerste, Roggen und Hafer), Mais und Reis und der Behandlung von Baumwoll- und Sojasaatgut zu.
Im Rahmen der vorliegenden Erfindung wird das erfindungsgemäße Mittel alleine oder in einer geeigneten Formulierung auf das Saatgut aufgebracht. Vorzugsweise wird das Saatgut in einem Zustand behandelt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.
Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei

Wirkstoffen zu beachten, die in bestimmten Aufwandmengen phytotoxische Effekte zeigen können.

Die erfindungsgemäßen Wirkstoffkombinationen/Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäß verwendbaren Wirkstoffkombinationen können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die Wirkstoffe oder Wirkstoffkombinationen mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutyl-naphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, be-sonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art eingesetzt werden. So lassen sich die Konzentrate oder die daraus durch Verdünnen mit Wasser erhältlichen Zubereitungen einsetzen zur Beizung des Saatgutes von Getreide, wie Weizen, Gerste, Roggen, Hafer und Triticale, sowie des Saatgutes von Mais, Reis, Raps, Erbsen, Bohnen, Baumwolle, Soja, Sonnenblumen und Rüben oder auch von Gemüsesaatgut der verschiedensten Natur. Die erfindungsgemäß verwendbaren Beizmittel-Formulierungen oder deren verdünnte Zubereitungen können auch zum Beizen von Saatgut transgener Pflanzen eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Die Aufwandmenge an den erfindungsgemäß verwendbaren Beizmittel-Formulierungen kann innerhalb eines größeren Bereiches variiert werden. Sie richtet sich nach dem jeweiligen Gehalt der Wirkstoffe in den Formulierungen und nach dem Saatgut. Die Aufwandmengen der Wirkstoffkombinationen liegen im Allgemeinen zwischen 0,001 und 50 g pro Kilogramm Saatgut, vorzugsweise zwischen 0,01 und 25 g pro Kilogramm Saatgut.

**Berechnungsformel für den Abtötungsgrad einer Kombination aus zwei Wirkstoffen**

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Abtötungsgrad, ausgedrückt in % der unbehandelten Kontrolle, beim Einsatz des Wirkstoffes A in einer Aufwandmenge von $\underline{m}$ ppm, oder $\underline{m}$ g/ha

Y den Abtötungsgrad, ausgedrückt in % der unbehandelten Kontrolle, beim Einsatz des Wirkstoffes B in einer Aufwandmenge von $\underline{n}$ ppm, oder $\underline{n}$ g/ha

E den Abtötungsgrad, ausgedrückt in % der unbehandelten Kontrolle, beim Einsatz des Wirkstoffes A und B in Aufwandmengen von $\underline{m}$ und $\underline{n}$ ppm oder von $\underline{m}$ und $\underline{n}$ g/ha bedeutet,

dann ist

$$E = X + Y - \frac{X \cdot Y}{100}.$$

Ist der tatsächliche insektizide Abtötungsgrad größer als berechnet, so ist die Kombination in ihrer Abtötung überadditiv, d.h. es liegt ein synergistischer Effekt vor. In diesem Fall muß der tatsächlich beobachtete Abtötungsgrad größer sein als der aus der oben angeführten Formel errechnete Wert für den erwarteten Abtötungsgrad (E).

**Beispiel 1:**

Myzus-Test (Spritzbehandlung)

| | |
|---|---|
| Lösungsmittel: | 78 Gewichtsteile Aceton |
| | 1,5 Gewichtsteile Dimethylformamid |
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Zur Herstellung einer zweckmäßigen Biologika-Suspension werden die Zellen, Sporen oder Viren in emulgatorhaltigem Wasser in der gewünschten Konzentration gelöst.

Chinakohlblattscheiben (Brassica pekinensis), die von allen Stadien der Grünen Pfirsichblattlaus (Myzus persicae) befallen sind, werden mit einer Wirkstoff- bzw. Biologika-Zubereitung der gewünschten Konzentration gespritzt.

Nach der gewünschten Zeit wird die Wirkung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel (siehe Blatt 1).

Bei diesem Test zeigte die folgende Kombination aus Fluopyram mit einem weiteren Wirkstoff oder einem Biologika gemäß vorliegender Anmeldung eine synergistisch verstärkte Wirksamkeit im Vergleich zu den einzeln angewendeten Substanzen:

**Tabelle 1-1: Myzus persicae - Test (nicht erfindungsgemäß)**

| Wirkstoff/ Biologika | Konzentration g ai/ha | Mortalität in % nach 1d | |
|---|---|---|---|
| Fluopyram | 1000<br>500 | 0<br>0 | |
| Imicyafos | 67,5 | 0 | |
| Fluopyram + Imicyafos | 1000 + 67,5 | gef.*<br>100 | ber.**<br>0 |
| Pyrethrum | 100 | 80 | |
| Fluopyram + Pyrethrum | 1000 + 100 | gef.*<br>100 | ber.**<br>80 |
| Fluensulfone | 2000 | 0 | |
| Fluopyram + Fluensulfone | 500 + 2000 | gef.*<br>90 | ber.**<br>0 |
| Paecilomyces lilacinus Stamm 251 | 5000 | 0 | |
| Fluopyram + Paecilomyces lilacinus Stamm 251 | 1000 + 5000 | gef.*<br>70 | ber.**<br>0 |
| Bacillus amyloliquefaciens Stamm FZB 42 | 2000 | 0 | |
| Fluopyram + Bacillus amyloliquefaciens | 1000 + 2000 | gef.*<br>90 | ber.**<br>0 |
| Fluopyram + Cydia pomonella granulosis virus (CpGV) | 1000 + 1000 | gef.*<br>70 | ber.**<br>0 |

**Tabelle 1-2: Myzus persicae - Test**

| Wirkstoff/ Biologika | Konzentration g ai/ha | Mortalität in % nach 6d | |
|---|---|---|---|
| Fluopyram | 1000<br>500 | 0<br>0 | |
| Bacillus thuringiensis subsp. tenebrionis | 1000 | 0 | |
| Fluopyram + Bacillus thuringiensis subsp. tenebrionis | 1000 + 1000 | gef.*<br>80 | ber.**<br>0 |
| Azadirachtin | 100 | 0 | |
| Fluopyram + Azadirachtin*** | 1000 + 100 | gef.*<br>70 | ber.**<br>0 |
| Metschnikowia fructicola | 1000 | 0 | |
| Fluopyram + Metschnikowia fructicola*** | 500 + 1000 | gef.*<br>90 | ber.**<br>0 |
| *gef. = gefundene insektizide Wirkung, ** ber. = nach der Colby-Formel berechnete Wirkung<br>*** = nicht erfindungsgemäß | | | |

**Beispiel 2:** (nicht erfindungsgemäß)

**Spodoptera frugiperda -Test (Spritzbehandlung)**

Lösungsmittel: 78,0 Gewichtsteile Aceton
1,5 Gewichtsteile Dimethylformamid

(fortgesetzt)

| | |
|---|---|
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Maisblattscheiben (Zea mays) werden mit einer Wirkstoffzubereitung der gewünschten Konzentration gespritzt und nach dem Abtrocknen mit Raupen des Heerwurms (Spodoptera frugiperda) besetzt.

Nach der gewünschten Zeit wird die Wirkung in % bestimmt. Dabei bedeutet 100 %, dass alle Raupen abgetötet wurden; 0 % bedeutet, dass keine Raupe abgetötet wurde. Die ermittelten Abtötungswerte verrechnet man nach der Colby-Formel (siehe Blatt 1).

Bei diesem Test zeigte die folgende Kombination aus Fluopyram und einem weiteren Wirkstoff gemäß vorliegender Anmeldung eine synergistisch verstärkte Wirksamkeit im Vergleich zu den einzeln angewendeten Wirkstoffen:

**Tabelle 2: Spodoptera frugiperda - Test**

| Wirkstoff/ Biologika | Konzentration g ai/ha | Mortalität in % nach 2$^d$ | |
|---|---|---|---|
| Fluopyram | 1000 | 0 | |
| Pyrethrum | 100 | 33 | |
| Fluopyram + Pyrethrum | 1000 + 100 | gef.* 50 | ber.** 33 |
| * gef. = gefundene insektizide Wirkung, ** ber. = nach der Colby-Formel berechnete Wirkung | | | |

**Beispiel 3 (nicht erfindungsgemäß)**

**Saatgutbehandlung - Auflauftest Baumwolle**

Baumwollsaatgut (Gossypium hirsutum) wird mit der gewünschten Menge Wirkstoff und Sporen sowie Wasser vermischt. Nach Abtrocknung werden jeweils 25 Saatkörner in mit sandigem Lehm gefüllte Töpfe ausgesät.

Nach 2 Tagen wird die Wirkung in % auf Basis der aufgelaufenen Baumwollpflanzen bestimmt. Die folgenden Kombinationen von Fluopyram und Biologika zeigten eine bessere Auflaufrate im Vergleich zu den einzeln angewendeten Substanzen und der unbehandelten Kontrolle:

**Tabelle 3: Auflauf Baumwolle**

| Wirkstoff/ Biologika | Konzentration g ai/kg Saatgut | Auflauf in % im Vergleich zur unbeh. Kontrolle |
|---|---|---|
| Kontrolle (unbehandeltes Saatgut) | | 100 |
| Fluopyram | 1<br>0,5 | 133<br>100 |
| Bacillus subtilis Stamm GB 03 | 0,078 | 158 |
| Fluopyram + B. subtilis Stamm GB 03 | 0,5 + 0,078 | 288 |
| Bacillus amyloliquefaciens Stamm FZB 42 | 0,15<br>0,075 | 163<br>158 |
| Fluopyram + B. amyloliquefaciens Stamm FZB 42 | 1,0 + 0,15<br>0,5 + 0,075 | 225<br>221 |
| * gef. = gefundene insektizide Wirkung, ** ber. = nach der Colby-Formel berechnete Wirkung | | |

**Beispiel 4: (nicht erfindungsgemäß) Meloidogyne incognita- Test** Lösungsmittel: 125,0 Gewichtsteile Aceton

Zur Herstellung einer zweckmäßigen Wirkstoffzubereitung vermischt man 1 Gewichtsteil Wirkstoff mit den angegebenen Mengen Lösungsmittel und verdünnt das Konzentrat mit Wasser auf die gewünschte Konzentration. Zur

Herstellung einer Sporensuspension werden die Sporen mit Wasser auf die gewünschte Konzentration verdünnt.

Gefäße werden mit Sand, Wirkstofflösung, Meloidogyne incognita Ei- Larven- Suspension und Salatsamen gefüllt. Die Salatsamen keimen und die Pflänzchen entwickeln sich. An den Wurzeln entwickeln sich die Gallen.

Nach der gewünschten Zeit wird die nematizide Wirkung anhand der Gallenbildung in % bestimmt. Dabei bedeutet 100 %, dass keine Gallen gefunden wurden; 0 % bedeutet, dass die Zahl der Gallen an den behandelten Pflanzen der unbehandelten Kontrolle entspricht. Die ermittelten Werte verrechnet man nach der Colby-Formel (siehe Blatt 1).

Bei diesem Test zeigte die folgende Kombination aus Fluopyram und Biologika gemäß vorliegender Anmeldung eine synergistisch verstärkte Wirksamkeit im Vergleich zu den einzeln angewendeten Wirkstoffen:

**Tabelle 4: Meloidogyne incognita - Test**

| Wirkstoff/ Biologika | Konzentration in ppm | Mortalität in % nach $21^d$ | |
|---|---|---|---|
| Fluopyram | 0.0005 | 0 | |
| Metarhizium anisopliae Stamm F52 | 5 | 0 | |
| | | gef.* | ber.** |
| Fluopyram + M. anisopliae Stamm F52 | 0.0005 + 5 | 80 | 0 |
| * gef. = gefundene insektizide Wirkung, ** ber. = nach der Colby-Formel berechnete Wirkung | | | |

**Beispiel 5: (nicht erfindungsgemäß) Glycine max - Wuchsförderung in Kombination mit Mycorrhiza**

Sojabohnen-Saatgut (Glycine max) wird mit der gewünschten Menge Wirkstoff in Wasser vermischt. Nach Abtrocknung werden die Samen in mit Sand und Perlite gefüllte Töpfe ausgesät (1:1). Zur Inokulation mit arbuskulärer Mykorrhizapilzen wird die Sand-Perlite Mischung vorher mit dem Mykorrhiza-Inokulum (AMykor GmbH; Germany) in einer Konzentration von 25 ml/L vermischt. Das Saatgut wird mit 3cm Lecaton (Blähton) bedeckt.

Während der folgenden 44 Tage werden die Pflanzen im Gewächshaus unter guten Wachstumsbedingungen kultiviert. Die Töpfe werden mit einer Nährstofflösung (Hoagland and Arnon, 1950, halbkonzentrierte Lösung) mit geringer Phosphat-Konzentration (20 $\mu$M) gegossen.

Die unbehandelten Kontrollpflanzen werden ohne arbuskuläre Mykorrhizapilze, aber unter denselben Bedingungen kultiviert.

Der wuchsfördernde Effekt auf Spross und Wurzeln wird über das Gewicht der frischen Wurzeln der behandelten Pflanze im Vergleich zur unbehandelten Kontrolle ermittelt.

Die folgende Kombination von Wirkstoff und Biologika zeigt ein verstärktes Wurzelwachstum im Vergleich zu deren einzelner Anwendung und zur Kontrolle:

**Tabelle 5: Pflanzenwachstum von Sojabohne**

| Wirkstoff/ Biologika | Konzentration mg/ Saatkorn | Wurzelgewicht in % im Vergl. zur unbeh. Kontrolle |
|---|---|---|
| Control | - | 100 |
| Fluopyram | 0.1 | 116,90 |
| Arbuskulärer Mycorrhizapilz | - | 133,21 |
| Fluopyram + Arbuskulärer Mycorrhizapilz | 0.1 | 137,91 |

## Patentansprüche

1. Wirkstoffkombinationen umfassend

(I-1) N-{2-[3-Chlor-5-(trifluormethyl)-2-pyridinyl]ethyl}-2-trifluormethylbenzamid gemäß Formel (I)

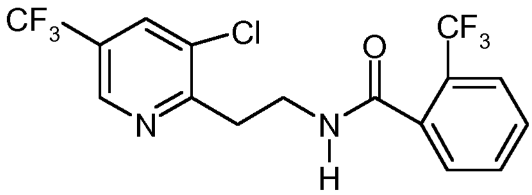

(I)

(Fluopyram)
sowie dessen N-Oxide und
(II) dem insektiziden oder nematiziden Wirkstoff Bacillus thuringiensis subsp. tenebrionis (II-28).

2. Nicht therapeutische Verwendung von Wirkstoffkombinationen wie in Anspruch 1 definiert, zur Bekämpfung tierischer Schädlinge.

3. Verwendung gemäß Anspruch 2, wobei die tierischen Schädlinge Nematoden sind.

4. Nicht therapeutisches Verfahren zur Bekämpfung tierischer Schädlinge, **dadurch gekennzeichnet, dass** man Wirkstoffkombinationen wie in Anspruch 1 definiert, auf die Blätter, Blüten, Stängel oder das Saatgut der zu schützenden Pflanzen, auf tierische Schädlinge und/oder deren Lebensraum oder den Boden einwirken lässt.

5. Verfahren zur Herstellung insektizider und/oder akarizider und/oder nematizider Mittel, **dadurch gekennzeichnet, dass** man Wirkstoffkombinationen, wie in Anspruch 1 definiert, mit Streckmitteln und/oder oberflächenaktiven Stoffen vermischt.

6. Mittel enthaltend Wirkstoffkombinationen gemäß Anspruch 1 zur Bekämpfung tierischer Schädlinge.

7. Verwendung von Wirkstoffkombinationen wie in Anspruch 1 definiert zur Behandlung von Saatgut.

8. Verwendung von Wirkstoffkombinationen wie in Anspruch 1 definiert zur Behandlung des Bodens oder von artifiziellen Substraten.

9. Saatgut umfassend Wirkstoffkombinationen wie in Anspruch 1 definiert.

## Claims

1. Active ingredient combinations comprising

(I-1) N-{2-[3-chloro-5-(trifluoromethyl)-2-pyridinyl]ethyl}-2-trifluoromethylbenzamide of formula (I)

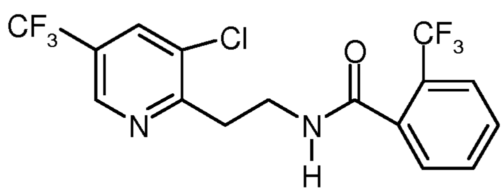

(I)

(fluopyram)
and also its N-oxides and
(II) the active insecticidal or nematicidal ingredient Bacillus thuringiensis subsp. tenebrionis (II-28).

2. Non-therapeutic use of active ingredient combinations as defined in Claim 1 for controlling animal pests.

3. Use according to Claim 2, wherein the animal pests are nematodes.

4. Non-therapeutic method for controlling animal pests, **characterized in that** active ingredient combinations as defined

in Claim 1 are caused to act on the leaves, flowers, stems or seed of the plants to be protected, on animal pests and/or their habitat, or on the soil.

5. Process for preparing insecticidal and/or acaricidal and/or nematicidal compositions, **characterized in that** active ingredient combinations as defined in Claim 1 are mixed with extenders and/or surfactants.

6. Composition comprising active ingredient combinations according to Claim 1 for controlling animal pests.

7. Use of active ingredient combinations as defined in Claim 1 for treating seed.

8. Use of active ingredient combinations as defined in Claim 1 for treating the soil or artificial substrates.

9. Seed comprising active ingredient combinations as defined in Claim 1.

**Revendications**

1. Combinaisons d'agents actifs, comprenant :

(I-1) du N-{2-[3-chloro-5-(trifluorométhyl)-2-pyridinyl]éthyl}-2-trifluorométhylbenzamide selon la formule (I)

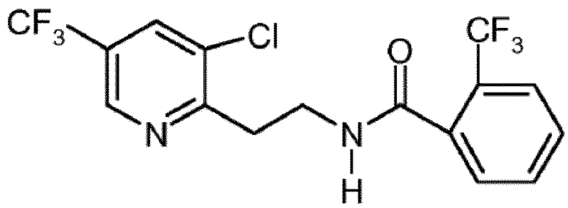

(I)

(Fluopyram)
ainsi que ses N-oxydes, et
(II) l'agent actif insecticide ou nématicide Bacillus thuringiensis subsp; tenebrionis (II-28).

2. Utilisation non thérapeutique de combinaisons d'agents actifs telles que définies dans la revendication 1, pour lutter contre des animaux nuisibles.

3. Utilisation selon la revendication 2, dans laquelle les animaux nuisibles sont des nématodes.

4. Procédé non thérapeutique de lutte contre des animaux nuisibles, **caractérisé en ce que** des combinaisons d'agents actifs telles que définies dans la revendication 1 sont laissées agir sur les feuilles, les fleurs, les tiges ou les graines des plantes à protéger, sur les animaux nuisibles et/ou leur habitat ou sur le sol.

5. Procédé de fabrication d'agents insecticides et/ou acaricides et/ou nématicides, **caractérisé en ce que** des combinaisons d'agents actifs telles que définies dans la revendication 1 sont mélangées avec des extendeurs et/ou des substances tensioactives.

6. Agent contenant des combinaisons d'agents actifs selon la revendication 1 pour lutter contre des animaux nuisibles.

7. Utilisation de combinaisons d'agents actifs telles que définies dans la revendication 1 pour le traitement de graines.

8. Utilisation de combinaisons d'agents actifs telles que définies dans la revendication 1 pour le traitement du sol ou de substrats artificiels.

9. Graine comprenant des combinaisons d'agents actifs telles que définies dans la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2004016088 A
- WO 2005077901 A
- WO 2008003738 A
- EP 2132987 A
- WO 2001002378 A
- EP 0464830 A
- US 6994849 B2
- US 11765491 B
- US 11765494 B
- US 10926819 B
- US 10782020 B
- US 12032479 B
- US 10783417 B
- US 10782096 B
- US 11657964 B
- US 12192904 B
- US 11396808 B
- US 12166253 B
- US 12166239 B
- US 12166124 B
- US 12166209 B
- US 11762886 B
- US 12364335 B
- US 11763947 B
- US 12252453 B
- US 12209354 B
- US 12491396 B
- US 12497221 B
- WO 9205251 A
- WO 9509910 A
- WO 9827806 A
- WO 05002324 A
- WO 06021972 A
- US 6229072 B
- WO 8910396 A
- WO 9102069 A
- WO 0166704 A
- EP 0837944 A
- WO 0066746 A
- WO 0066747 A
- WO 0226995 A
- US 5776760 A
- US 5463175 A
- WO 02036782 A
- WO 03092360 A
- WO 05012515 A
- WO 07024782 A
- WO 01024615 A
- WO 03013226 A
- US 11517991 B
- US 10739610 B
- US 12139408 B
- US 12352532 B
- US 11312866 B
- US 11315678 B
- US 12421292 B
- US 11400598 B
- US 11651752 B
- US 11681285 B
- US 11605824 B
- US 12468205 B
- US 11760570 B
- US 11762526 B
- US 11769327 B
- US 11769255 B
- US 11943801 B
- US 12362774 B
- US 11588811 B
- US 11185342 B
- US 12364724 B
- US 11185560 B
- US 12423926 B
- US 11760602 B
- US 5561236 A
- US 5648477 A
- US 5646024 A
- US 5273894 A
- US 5637489 A
- US 5276268 A
- US 5739082 A
- US 5908810 A
- US 7112665 B
- WO 9638567 A
- WO 9924585 A
- WO 9924586 A
- WO 9934008 A
- WO 0236787 A
- WO 2004024928 A
- WO 2007103567 A
- WO 2008150473 A
- US 5605011 A
- US 5378824 A
- US 5141870 A
- US 5013659 A
- US 5767361 A
- US 5731180 A
- US 5304732 A
- US 4761373 A

- US 5331107 A
- US 5928937 A
- WO 9633270 A
- WO 2004040012 A
- WO 2004106529 A
- WO 2005020673 A
- WO 2005093093 A
- WO 2006007373 A
- WO 2006015376 A
- WO 2006024351 A
- WO 2006060634 A
- US 61288958 B
- US 5084082 A
- WO 9741218 A
- US 5773702 A
- WO 99057965 A
- US 5198599 A
- WO 01065922 A
- EP 1999141 A
- WO 2007107302 A
- US 12249016 B
- US 12214022 B
- EP 08010791 A
- WO 2007027777 A
- WO 9421795 A
- US 61126083 B
- US 61195019 B
- WO 2007080126 A
- WO 2006129204 A
- WO 2007074405 A
- WO 2007080127 A
- WO 2007035650 A
- WO 0004173 A
- WO 2006045633 A
- EP 04077984 A
- EP 06009836 A
- WO 2004090140 A
- EP 04077624 A
- WO 2006133827 A
- EP 07002433 W
- EP 1999263 A
- WO 2007107326 A
- EP 0571427 A
- WO 9504826 A
- EP 0719338 A
- WO 9615248 A
- WO 9619581 A
- WO 9627674 A
- WO 9711188 A
- WO 9726362 A
- WO 9732985 A
- WO 9742328 A
- WO 9744472 A
- WO 9745545 A
- WO 9827212 A
- WO 9840503 A
- WO 9958688 A
- WO 9958690 A
- WO 9958654 A
- WO 0008184 A
- WO 0008185 A
- WO 0008175 A
- WO 0028052 A
- WO 0077229 A
- WO 0112782 A
- WO 0112826 A
- WO 02101059 A
- WO 03071860 A
- WO 2004056999 A
- WO 2005030942 A
- WO 2005030941 A
- WO 2005095632 A
- WO 2005095617 A
- WO 2005095619 A
- WO 2005095618 A
- WO 2005123927 A
- WO 2006018319 A
- WO 2006103107 A
- WO 2006108702 A
- WO 2007009823 A
- WO 0022140 A
- WO 2006063862 A
- WO 2006072603 A
- WO 02034923 A
- EP 06090134 A
- EP 06090228 A
- EP 06090227 A
- EP 07090007 A
- EP 07090009 A
- WO 0114569 A
- WO 0279410 A
- WO 0333540 A
- WO 2004078983 A
- WO 0119975 A
- WO 9526407 A
- WO 9634968 A
- WO 9820145 A
- WO 9912950 A
- WO 9966050 A
- WO 9953072 A
- US 6734341 B
- WO 0011192 A
- WO 9822604 A
- WO 9832326 A
- WO 0198509 A
- WO 2005002359 A
- US 5824790 A
- US 6013861 A
- WO 9404693 A
- WO 9409144 A
- WO 9411520 A
- WO 9535026 A
- WO 9720936 A
- EP 0663956 A
- WO 9601904 A
- WO 9621023 A

- WO 9839460 A
- WO 9924593 A
- WO 9531553 A
- US 2002031826 A
- US 6284479 B
- US 5712107 A
- WO 9747806 A
- WO 9747807 A
- WO 9747808 A
- WO 0014249 A
- WO 0073422 A
- WO 0047727 A
- EP 06077301 A
- US 5908975 A
- EP 0728213 A
- WO 2006032538 A
- WO 2007039314 A
- WO 2007039315 A
- WO 2007039316 A
- JP 2006304779 B
- WO 2005012529 A
- US 12020360 B
- US 61054026 B
- WO 9800549 A
- WO 2004053219 A
- WO 0117333 A
- WO 0245485 A
- WO 2005017157 A
- EP 08075514 A
- US 61128938 B
- WO 2006136351 A
- US 5969169 A
- US 5840946 A
- US 6323392 B
- US 6063 A
- US 947 A
- US 6270828 B
- US 6169190 B
- US 5965755 A
- US 5434283 A
- US 12668303 B
- US 61135230 B
- WO 09068313 A
- WO 10006732 A
- US 2006162007 A
- WO 2004074492 A
- US 2004117870 A
- WO 0131042 A
- WO 0141558 A
- WO 0236831 A
- WO 2007091277 A
- WO 2008002872 A
- WO 2006108674 A
- WO 2006108675 A
- WO 2008054747 A
- WO 2009064652 A
- WO 2010037016 A
- WO 2010024976 A
- WO 2009102873 A
- WO 2006130436 A
- WO 2006128569 A
- WO 2006128570 A
- WO 2006128573 A
- WO 2006128571 A
- WO 2006128572 A
- US 2006130175 A
- US 2009181399 A
- US 2007067868 A
- WO 2007017186 A
- WO 2008122406 A
- WO 2008151780 A
- WO 2005103266 A
- WO 2003013224 A
- US 2004250317 A
- WO 2004072235 A
- US 2004148666 A
- WO 2006128568 A
- WO 0183818 A
- US 2008289060 A
- WO 2008114282 A
- CN 184065
- CA 2561992
- US 2008064032 A
- US 2006 A
- US 230473 A
- US 2003126634 A
- US 2006070139 A
- WO 2008112019 A
- US 6040497 A
- WO 0151654 A
- US 7157281 B
- WO 2007142840 A
- EP 1737290 A
- US 2004180373 A
- WO 2009111263 A
- WO 2005059103 A
- WO 2007140256 A
- US 2007056056 A
- US 2007292854 A
- US 2006095986 A
- WO 03052073 A
- US 2006230473 A
- US 7435807 B
- US 2006282915 A
- US 2002120964 A
- WO 2002034946 A
- WO 2010117737 A
- WO 2010117735 A
- US 2005216969 A
- US 2007143876 A
- WO 2006098952 A
- WO 2011075593 A
- WO 2011075595 A
- WO 2010077816 A
- WO 2004053062 A
- WO 2010080829 A

- US 2009217423 A
- US 20100024077 A
- WO 2004039986 A
- WO 2005054479 A
- WO 2005054480 A
- WO 2011022469 A
- WO 2009100188 A
- WO 2011066384 A
- WO 2011066360 A
- US 2009137395 A
- US 2008312082 A
- US 20090210970 A
- WO 2009103049 A
- US 20100184079 A
- US 2006059581 A
- WO 1998044140 A
- US 2005086719 A
- US 2005188434 A
- US 2010050282 A
- WO 2010076212 A
- US 2004172669 A
- US 2008320616 A
- US 2008196127 A
- US 2003097687 A
- US 6468747 B
- WO 2000026345 A
- US 20082289060 A
- WO 2000026356 A
- US 2007028322 A
- WO 2005061720 A
- US 2009300784 A
- US 2008167456 A
- WO 2005103301 A
- WO 2002100163 A
- US 2002102582 A
- WO 2004011601 A
- WO 2011062904 A
- US 20110138504 A
- US 2009130071 A
- US 20100080887 A
- WO 2011034704 A
- US 20110067141 A
- US 2008028482 A
- US 2006059590 A
- US 2008260932 A
- WO 2001031042 A
- WO 2001041558 A
- US 2003188347 A
- WO 2002036831 A
- US 2008070260 A
- WO 200244407 A
- US 2009265817 A
- US 2001029014 A
- WO 2001051654 A
- US 2010077501 A
- US 2005039226 A
- WO 2004099447 A
- WO 2003052073 A
- WO 2011084632 A
- WO 2011084621 A
- US 4272417 A
- US 4245432 A
- US 4808430 A
- US 5876739 A
- US 20030176428 A1
- WO 2002080675 A1
- WO 2002028186 A2


**In der Beschreibung aufgeführte Nicht-Patentliteratur**


- **KURZTMAN ; DROBY.** *System. Appl. Microbiol.,* 2001, vol. 24, 395-399
- **COMAI et al.** *Science,* 1983, vol. 221, 370-371
- **BARRY et al.** *Curr. Topics Plant Physiol.,* 1992, vol. 7, 139-145
- **SHAH et al.** *Science,* 1986, vol. 233, 478-481
- **GASSER et al.** *J. Biol. Chem.,* 1988, vol. 263, 4280-4289
- **TRANEL ; WRIGHT.** *Weed Science,* 2002, vol. 50, 700-712
- **CRICKMORE et al.** *Microbiology and Molecular Biology Reviews,* 1998, vol. 62, 807-813
- **CRICKMORE et al.** *Bacillus thuringiensis-Toxinnomenklatur aktualisiert,* 2005, http://www.lifesci.sussex.ac.uk/Home/Neil_Crickmore/Bt
- **MOELLENBECK et al.** *Nat. Biotechnol.,* 2001, vol. 19, 668-72
- **SCHNEPF et al.** *Applied Environm. Microbiol.,* 2006, vol. 71, 1765-1774
- **R. WEGLER.** Chemie der Pflanzenschutz- und Schädlingsbekämpfungsmittel. Springer Verlag, 1970, vol. 2, 401-412
- **COLBY, S.R.** Calculating Synergistic and Antagonistic Responses of Herbicide Combinations. *Weeds,* 1967, vol. 15, 20-22